# EUROPEAN PATENT APPLICATION

(11) **EP 2 518 735 A1**
(43) Date of publication of application: **31.10.2012**
(21) Application number: 11774983.8
(22) Date of filing: 26.04.2011
(51) Int. Cl.: H01B 7/00, H01B 7/282, H01B 13/012, H02G 3/04

(54) **WIRE HARNESS AND MANUFACTURING METHOD FOR WIRE HARNESS**

(30) Priority: 28.04.2010 JP 2010104371; 28.04.2010 JP 2010104370
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: MURATA, Atsushi, Yokkaichi-shi Mie 510-8503 (JP); HIRANO, Nobuyuki, Yokkaichi-shi Mie 510-8503 (JP); SATO, Osamu, Yokkaichi-shi Mie 510-8503 (JP)
(74) Representative: Müller-Boré & Partner Patentanwälte
(86) International application number: PCT/JP2011/060122
(87) International publication number: WO 2011/136202

(57) **Abstract**

To provide a wire harness in which liquid such as water does not permeate through a covering member and a wire harness manufacturing method. Further, improvement of the abrasion resistance of the covering member is aimed.

A predetermined part of electric wires 91 is held or wrapped in a first material 801 and a second material 802 formed of a thermoplastic material, and a protective layer material 803 formed of a water repellent material is provided on approximately the entire surface of the first material and the second material. The first material 801, the second material 802 and the protective layer material 803 are heated and pressurized. The first material 801 and the second material 802 are molded to have a predetermined shape and size. The protective layer material 803 is joined to the surface of the first material and the second material 802 by melting at least a part of the surface layer of the first material 801 and the second material 802. Further, a material having high abrasion resistance is selected as the protective layer material 803.

## Description

### MANUFACTURING METHOD

### Technical Field

The present invention relates to a wire harness and a wire harness manufacturing method, and more particularly, to a wire harness having a member to maintain electric wires in a predetermined shape and/or to protect the electric wires, and a wire harness manufacturing method.

### Background Art

In a vehicle such as an automobile, a wire harness to mutually connect electric devices, electronic devices and the like is provided. A general wire harness has a predetermined number and a predetermined type of electric wires. These electric wires are bundled to form a trunk line or a branch line.

In the wire harness, the trunk line and the branch line are arranged along a predetermined route inside the vehicle or the like. Accordingly, to facilitate the arrangement of the trunk line and the branch line of the wire harness, in some cases, the trunk line and the branch line of the wire harness are formed to have a predetermined axial shape at a manufacturing stage. As a structure to maintain the trunk line or the branch line of the wire harness in a predetermined axial shape, for example, a structure where a shape maintenance member having a predetermined shape is attached to a predetermined part of the trunk line or the branch line of the wire harness, is known.

Further, in some cases, to protect the electric wires included in the trunk line or the branch line, a protector (protective member) is attached to the predetermined part of the trunk line or the branch line of the wire harness.

As such shape maintenance member and protector, a hollow shell-type member (e.g. a hollow tubular member formed to have a predetermined axial shape) is adopted. Generally, as the shell-type shape maintenance member or protector, an injection molded product of a resin material, which is manufactured by injection molding, is applied.

When the shape maintenance member as an injection molded product is attached to a predetermined part of the trunk line or branch line of the wire harness, the part where the shape maintenance member is attached is maintained in the axial shape of the shape maintenance member. Further, when the protector as an injection molded product is attached, the part where the protector is attached is protected by the protector. However, the structure to which the protector as an injection molded product is applied has the following problem.

To manufacture the shape maintenance member or protector which is an injection molded product, an injection molding die is required. Generally, as the injection molding die used for injection molding of a resin material is expensive, the equipment cost is increased, and the price of the shape maintenance member or the protector is high. Accordingly, the price of the wire harness where the shape maintenance member or the protector as an injection molded product is attached may be increased. Further, in manufacturing of the wire harness, as a process to attach the shape maintenance member or the protector to a predetermined part of the trunk line or the branch line of the wire harness is required, the number of process steps is increased. Accordingly, the manufacturing cost is increased, and the price of the wire harness may be increased.

Further, in the structure where the shell-type shape maintenance member or the protector is attached to a predetermined part of the trunk line or the branch line, in some cases, a gap exists between the electric wires included in the trunk line or the branch line and the inner peripheral surface of the shape maintenance member or the protector. Accordingly, when vibration or impact is applied to the wire harness, the electric wires collide with the inner peripheral surface of the shape maintenance member or the protector, and an impulsive sound may occur. The occurrence of such impulsive sound may degrade the quality of the vehicle or the like to which the wire harness is applied. Further, there is a probability of damage by the collision of the electric wires with the inner peripheral surface of the shape maintenance member or the protector.

As a structure to prevent the collision of the electric wires with the inner peripheral surface of the shape maintenance member or the protector, it may be arranged such that a shock-absorbing material (e.g., a sponge member) is inserted inside the shape maintenance member or the protector. However, in this structure, a process to insert the shock-absorbing material inside the shape maintenance member or the protector is required. Accordingly, the number of steps is increased, and the manufacturing cost may be increased. Further, as the number of parts is increased, the cost of the parts may be increased.

As a structure using a protector which is not an injection molded product, for example, a structure where a protector formed of a thermoplastic material is formed around a flat circuit body (see patent literature 1) is proposed. In the structure disclosed in the patent literature 1, JP 2003-197038, a flat circuit body is held between two sheets of non-woven fabric formed of a thermoplastic material, then they are pressurized with metal molding dies while they are heated. By this processing, the two sheets of non-woven fabric are in close contact with the flat circuit body and the two covering members are welded. According to this arrangement, since the two sheets of non-woven fabric are used as a protector, the above-described protector which is an injection molded product is unnecessary.

However, it is conceivable that the structure disclosed in the patent literature 1 has the following problem.

Since the non-woven fabric has an intertwined fiber structure, it easily contains liquid such as water. When the non-woven fabric contains liquid such as water, the mass of the wire harness is increased. Further, even a part of the protector formed of the non-woven fabric becomes wet, the liquid permeates inside the non-woven fabric. Accordingly, the liquid might enter an unexpected position.

Further, in comparison with a resin injection molded product, the non-woven fabric is soft and its abrasion resistance level is low. Accordingly, when vibration or impact is applied when the vehicle or the like is used, there is a probability of abrasion of the protector formed of the non-woven fabric due to contact with another member (e.g., a vehicle body). Especially upon application of vibration, the abrasion progresses due to intermittent contact or slide-contact between the protector with the other member. In this manner, in comparison with the protector which is an injection molded product, the durability of the protector of the non-woven fabric is low.

### Citation List

### Patent Literature

PTL1: JP 2003-197038

### Summary of Invention

### Technical Problem

The present invention has an object to provide a wire harness in which a covering member, provided in a predetermined part of an electric wire (covering member to cover the predetermined part of the electric wire), has an improved water proofing property, or to provide a wire harness in which a covering member, formed of non-woven fabric or the like, has an improved water proofing property, or to provide a method for manufacturing a wire harness in which a covering member, provided in a predetermined part of an electric wire (covering member to cover the predetermined part of the electric wire), has an improved water proofing property, or to provide a method for manufacturing a wire harness in which a covering member formed of non-woven fabric or the like has an improved water proofing property, or to provide a method for manufacturing a wire harness, regarding which increment in the manufacturing cost of the covering member and the number of production steps is prevented or suppressed, and in which a covering member has water proofing property.
Further, another object of the present invention is to provide a wire harness in which a covering member, provided in a predetermined part of an electric wire (covering member to cover the predetermined part of the electric wire), has improved abrasion resistance, or to provide a wire harness in which a covering member, formed of non-woven fabric or the like, has improved abrasion resistance, or to provide a method for manufacturing a wire harness in which a covering member, provided in a predetermined part of an electric wire (covering member to cover the predetermined part of the electric wire), has improved abrasion resistance, or to provide a method for manufacturing a wire harness in which a covering member formed of non-woven fabric or the like has improved abrasion resistance, or to provide a method for manufacturing a wire harness, regarding which increment in the manufacturing cost of the covering member and the number of production steps is prevented or suppressed, and in which a covering member has improved abrasion resistance.

### Solution to Problem

To solve the above-described problem, the wire harness according to the present invention is a wire harness in which a covering member formed of a thermoplastic material is provided in a predetermined part of an electric wire, wherein a liquid-impermeable protective layer is provided on the surface of the covering member.

In this case, it is preferable that the protective layer is formed of a thermoplastic material having abrasion resistance higher than that of the covering member.

Further, it is preferable that in the covering member, a surface layer is harder than a central part.

Further, it is applicably arranged such that the covering member is formed of non-woven fabric of a thermoplastic material or a foam.

Further, it is applicably arranged such that the non-woven fabric has base fiber, core fiber and binder fiber having a binder material layer provided on the surface of the core fiber.

Note that it is applicably arranged such that the protective layer is joined to the surface of the covering member with the binder material. Further, it may be arranged such that the protective layer is welded to the surface of the covering member.

Further, the wire harness according to the present invention is a wire harness in which a covering member formed of a thermoplastic material is provided in a predetermined part of an electric wire, wherein a protective layer formed of a thermoplastic material having abrasion resistance higher than that of the covering member is provided on a part or entire surface of the covering member.

In this case, it is preferable that in the covering member, a surface layer is harder than a central part.

As the covering member, non-woven fabric of a thermoplastic material or a foam is applicable.

Further, as the non-woven fabric, it is applicably arranged such that the non-woven fabric has base fiber, core fiber and binder fiber having a binder material layer provided on the surface of the core fiber.

Note that in this case, it is preferable that the protective layer is joined to the surface of the covering member with the binder material. Further, it may be arranged such that the protective layer is welded to the surface of the covering member.

The wire harness manufacturing method according to the present invention is a method for manufacturing a wire harness where a covering member, which is formed of a thermoplastic material and which has a liquid-impermeable protective layer on a surface, is provided in a predetermined part of an electric wire, including: holding or wrapping the predetermined part of the electric wire in the thermoplastic material and providing the protective layer material on the surface of the thermoplastic material; and heating and pressurizing the thermoplastic material and the protective layer material to mold the thermoplastic material to have a predetermined shape and size, and melting at least a part of the surface layer of the thermoplastic material to join the protective layer material to the surface of the thermoplastic material.

In this structure, it is preferable that the method further includes: accommodating the predetermined part of the electric wire, the thermoplastic material and the protective layer material in a holding tool; heating and pressurizing the thermoplastic material via the holding tool, with a set of molds having a temperature control unit; and thereafter, removing the holding tool, accommodating the predetermined part of the electric wire covered with the thermoplastic material, from the set of molds, and cooling the holding tool.

The wire harness manufacturing method according to the present invention is a method for manufacturing a wire harness where a covering member, which is formed of a thermoplastic material and which has a protective layer on a part or entire surface, is provided in a predetermined part of an electric wire, including: holding or wrapping the predetermined part of the electric wire in the thermoplastic material and providing a protective layer material on a part or entire surface of the thermoplastic material; and heating and pressurizing the thermoplastic material and the protective layer material to mold the thermoplastic material to have a predetermined shape and size, and melting at least a part of the surface layer of the thermoplastic material to join the protective layer material to the surface of the thermoplastic material.

Further, it is applicably arranged such that the method further includes: accommodating the predetermined part of the electric wire, the thermoplastic material and the protective layer material in a holding tool; heating and pressurizing the thermoplastic material via the holding tool, with a set of molds having a temperature control unit; and thereafter, removing the holding tool, accommodating the predetermined part of the electric wire covered with the thermoplastic material, from the set of molds, and cooling the holding tool.

### Advantageous Effects of Invention

In the wire harness according to the present invention, since a liquid-impermeable protective layer is provided on the surface of the covering member, even when the surface of the covering member becomes wet with liquid, the liquid does not permeate into the covering member. Accordingly, it is possible to prevent increment in the weight when the covering member contains the liquid or the permeation of the liquid through the covering member to an unexpected position. Further, when the protective layer is formed of a high abrasion resistance material, it is possible to improve the abrasion resistance of the covering member.

In the other wire harness according to the present invention, since the protective layer is provided on a part or entire surface of the covering member, it is possible to improve the abrasion resistance of the covering member.

In the wire harness manufacturing method according to the present invention, it is possible to mold the covering member by pressurizing the thermoplastic material while heating it. The covering member has a function as a protector to protect a predetermined part of the electric wire and a function to maintain the predetermined part of the electric wire in a predetermined shape. Accordingly, it is possible to provide a shape maintenance member or a protector in the wire harness without shape maintenance member or protector which is an injection molded product.

As the thermoplastic material, a material which is cheaper in comparison with the shape maintenance member or the protector as an injection molded product is applicable. Accordingly, it is possible to reduce the manufacturing cost and the cost of the parts of the covering member. Further, in comparison with metal molding dies for injection molding to manufacture an injection molded product, since a mold for pressurizing the thermoplastic material has a simpler structure and it is cheaper, it is possible to suppress increment in the equipment cost or to reduce the equipment cost.

Further, the covering member can be molded merely by holding or wrapping the predetermined part of the electric wire of the wire harness using the thermoplastic material and by pressurizing it while heating in that state. Accordingly, in comparison with a case where the shape maintenance member or the protector which is an injection molded product is attached, the work operation is simple. Accordingly, it is possible to reduce the manufacturing time and the manufacturing cost of the wire harness.

Further, in the wire harness manufacturing method according to the present invention, it is possible to complete pressurization of the thermoplastic material before the temperature of a part of the thermoplastic material in contact with a predetermined part of the electric wire and its peripheral part becomes high. Accordingly, in the part of the molded covering member in contact with the predetermined part of the electric wire and its peripheral part, the property before the pressurization can be maintained. Accordingly, it is possible to manufacture a wire harness having a structure where a predetermined part of an electric wire is elastically wrapped in an unhardened thermoplastic material. According to the wire harness having this structure, an unhardened thermoplastic material functions as a shock-absorbing material to protect the predetermined part of the electric wire from vibration or impact.

Further, since the predetermined part of the electric wire is wrapped in the unhardened thermoplastic material, even upon application of vibration or impact to the wire harness, no slapping sound or impulsive sound occurs between the predetermined part of the electric wire and the covering member. In this manner, it is possible to attain a similar advantage to a case where the shape maintenance member or the protector as an injection molded product is filled with a shock-absorbing material. On the other hand, in comparison with the case where the shape maintenance member or the protector as an injection molded product is filled with a shock-absorbing material, it is possible to reduce the number of parts and the number of steps.

In the wire harness manufacturing method according to the present invention, upon removal of the manufactured wire harness from the mold, or during cooling of the wire harness after the removal, it is possible to prevent unexpected deformation of the molded covering member. That is, according to the present invention, it is possible to remove the molded covering member, while placed on the holding tool, from the mold. Further, it is possible to cool the covering member, removed from the mold, in the state where it is placed on the holding tool. Accordingly, it is not necessary to directly contact the covering member upon removal from the mold or cooling. Further, the shape determined with the mold is maintained as long as the covering member is placed on the holding tool. Accordingly, it is possible to prevent the occurrence of unexpected (or undesired) deformation in the molded covering member.

### Brief Description of Drawings

Fig. 1A is an external perspective diagram of a predetermined part (a position in which a covering member is provided) of a wire harness according to a first embodiment of the present invention, in which the covering member has an approximately hexagonal cross-sectional shape;
Fig. 1B is an external perspective diagram of the predetermined part (the position in which the covering member is provided) of the wire harness according to the first embodiment, in which the covering member has an approximately circular cross-sectional shape;
Fig. 2 is an external perspective diagram schematically showing structures of a first lower holding tool and a first lower mold;
Fig. 3 is an external perspective diagram schematically showing structures of a first upper holding tool and a first upper mold;
Fig. 4 is a cross-sectional diagram schematically showing, in a predetermined process of a wire harness manufacturing method according to the first embodiment, a state where a predetermined part of electric wires, a first material (the first material is previously provided with a protective layer material) and a second material are accommodated in the first lower holding tool and the first upper holding tool is placed;
Fig. 5 is a cross-sectional diagram showing, in the wire harness manufacturing process according to the first embodiment, a state where the first material, the predetermined part of the electric wires, the second material and the protective layer material are accommodated in the first lower holding tool, and further, the first upper holding tool is placed;
Fig. 6 is a cross-sectional diagram showing, in the wire harness manufacturing process according to the first embodiment, a state where the first lower holding tool, in which the first material, the predetermined part of the electric wires, the second material and the protective layer material are accommodated, is placed on the first lower mold;
Fig. 7 is a cross-sectional diagram showing, in the wire harness manufacturing process according to the first embodiment, a state where the first material and the second material are heated and pressurized with the first lower mold and the first upper mold;
Fig. 8 is a cross-sectional diagram showing, in the wire harness manufacturing process according to the first embodiment, a state where the predetermined part of the manufactured wire harness (molded covering member), placed on the first lower holding tool, is removed from the first upper mold and the first lower mold;
Fig. 9A is an external perspective diagram of the predetermined part (the position in which the covering member is provided) of the wire harness according to a second embodiment of the present invention, in which the covering member has an approximately hexagonal cross-sectional shape;
Fig. 9B is an external perspective diagram of the predetermined part (the position in which the covering member is provided) of the wire harness according to the second embodiment, in which the covering member has an approximately circular cross-sectional shape;
Fig. 10 is an external perspective diagram schematically showing structures of a second lower holding tool and a second lower mold;
Fig. 11 is an external perspective diagram schematically showing structures of a second upper holding tool and a second upper mold;
Fig. 12 is a cross-sectional diagram showing, in the wire harness manufacturing process according to the second embodiment, a state where a third material (the third material is integrally provided with the protective layer material) and the predetermined part of the electric wires are accommodated in the second lower holding tool and the second upper holding tool is placed;
Fig. 13 is a cross-sectional diagram showing, in the wire harness manufacturing process according to the second embodiment, a state where the third material, the predetermined part of the electric wires and the protective layer material are accommodated in the second lower holding tool;
Fig. 14 is a cross-sectional diagram showing, in the wire harness manufacturing process according to the second embodiment, a state where the second lower holding tool in which the third material, the predetermined part of the electric wires and the protective layer material are accommodated and on which the second upper holding tool is placed, is placed on the second lower mold;
Fig. 15 is a cross-sectional diagram showing, in the wire harness manufacturing process according to the second embodiment, a state where the third material is heated and pressurized with the second lower mold and the second upper mold;
Fig. 16 is a cross-sectional diagram showing, in the wire harness manufacturing process according to the second embodiment, a state where the predetermined part of the manufactured wire harness (the molded covering member), placed on the second lower holding tool, is removed from the second lower mold and the second upper mold;
Fig. 17A is an external perspective diagram of the predetermined part (the position in which the covering member is provided) of the wire harness according to a third embodiment of the present invention;
Fig. 17B is an external perspective diagram of the predetermined part (the position in which the covering member is provided) of the wire harness according to a fourth embodiment of the present invention;
Fig. 18A is an external perspective diagram of the predetermined part of the wire harness according to the third embodiment, in which a main body of the covering member has an approximately circular cross-sectional shape;
Fig. 18B is an external perspective diagram of the predetermined part of the wire harness according to the fourth embodiment, in which the main body of the covering member has an approximately circular cross-sectional shape;
Fig. 19 is a cross-sectional diagram schematically showing, in the predetermined process of the wire harness manufacturing method according to the third embodiment, a state where the first material, the predetermined part of the electric wires, the second material and the protective layer material are accommodated in the first lower holding tool and the first upper holding tool is placed;
Fig. 20 is a cross-sectional diagram schematically showing, in the predetermined process of the wire harness manufacturing method according to the third embodiment, a state where the first lower holding tool in which the first material, the predetermined part of the electric wires, the second material and the protective layer material are accommodated is placed on the first lower mold;
Fig. 21 is a cross-sectional diagram showing, in the wire harness manufacturing process according to the third embodiment, a state where the first material and the second material are heated and pressurized with the first lower mold and the first upper mold;
Fig. 22 is a cross-sectional diagram showing, in the wire harness manufacturing process according to the third embodiment, a state where the predetermined part of the manufactured wire harness (the molded covering member), placed on the first lower holding tool, is removed from the first upper mold and the first lower mold;
Fig. 23A is an external perspective diagram of the predetermined part (the position in which the covering member is provided) of the wire harness according to a fifth embodiment of the present invention;
Fig. 23B is an external perspective diagram of the predetermined part (the position in which the covering member is provided) of the wire harness according to a sixth embodiment of the present invention;
Fig. 24 is a cross-sectional diagram showing, in the wire harness manufacturing process according to the fifth embodiment, a state where the third material, the predetermined part of the electric wires and the protective layer material are accommodated in the second lower holding tool, and further, the second upper holding tool is placed;
Fig. 25 is a cross-sectional diagram showing, in the wire harness manufacturing process according to the sixth embodiment, a state where the third material provided with the protective layer material and the predetermined part of the electric wires are accommodated in the second lower holding tool, and further, the second upper holding tool is placed;
Fig. 26 is a cross-sectional diagram showing, in the wire harness manufacturing process according to the fifth embodiment, a state where the second lower holding tool, in which the third material, the predetermined part of the electric wires and the protective layer material are accommodated, is placed on the second lower mold;
Fig. 27 is a cross-sectional diagram showing, in the wire harness manufacturing process according to the fifth embodiment, a state where the third material is heated and pressurized with the second upper mold and the second lower mold; and
Fig. 28 is a cross-sectional diagram showing, in the wire harness manufacturing process according to the fifth embodiment, a state where the predetermined part of the manufactured wire harness, placed on the second lower holding tool, is removed from the second lower mold and the second upper mold.

### Description of Embodiments

Hereinbelow, the respective embodiments of the present invention will be described with reference to the drawings.

First, the outline of the structure of a wire harness according to the respective embodiments of the present invention will be schematically described.

The wire harness according to the respective embodiments of the present invention has a predetermined number and a predetermined type of electric wires. These electric wires are bundled in a predetermined form, and the bundled electric wires form a trunk line and a branch line of the wire harness according to the respective embodiments of the present invention. A predetermined connector or the like is attached to the end of each electric wire (trunk line or branch line). Note that the shape and the size of the wire harness according to the respective embodiments of the present invention, the structures of the trunk line and the branch line, the number/type/length of the electric wires included in the wire harness according to the respective embodiments of the present invention, the structure of the connector or the like attached to each electric wire, and the like, are not particularly limited. They are arbitrarily set in correspondence with purpose or the like of the wire harness according to the respective embodiments of the present invention.

A covering member is provided in a predetermined part of the wire harness according to the respective embodiments of the present invention (predetermined part of the electric wires). The covering member protects the predetermined part of the wire harness according to the respective embodiments of the present invention (the covering member has a so-called "protector" function). Further, the covering member maintains the predetermined part of the wire harness according to the respective embodiments of the present invention (the predetermined part of the electric wires) in a predetermined shape (especially, the covering member maintains the axial shape of the electric wires in a predetermined shape).

That is, the covering member, provided in a part of the wire harness according to the respective embodiments of the present invention to be protected, functions as a protector. Further, the covering member, provided in a part of the wire harness according to the respective embodiments of the present invention to be maintained in a predetermined shape, maintains the predetermined part of the wire harness in a predetermined shape. Further, the covering member, provided in a predetermined part of the wire harness according to the respective embodiments of the present invention to be protected and to be maintained in a predetermined shape, functions as a protector and maintains the predetermined part of the wire harness according to the respective embodiments of the present invention in a predetermined shape.

Note that particular position and range of the part in which the covering member is provided (i.e., particular position and rage of the "predetermined part"), and the size and the shape of the covering member are not particularly limited, but are arbitrarily set in correspondence with position and range to be protected, position and range to be maintained in a predetermined shape (to be maintained), and the like, of the respective wire harnesses according to the present invention. For example, the particular position and range of the predetermined part and the size and the shape of the covering member are arbitrarily set in correspondence with function and performance required of the wire harness according to the respective embodiments of the present invention, shape of the wire harness according to the respective embodiments of the present invention, size and shape of space in which the wire harness according to the respective embodiments of the present invention is provided (e.g., inner space of a vehicle), and environment upon use (e.g., occurrence/non-occurrence and degree of vibration or impact upon use).

A protective layer formed of a liquid- impermeable material is provided on approximately the entire surface of a covering member 92a. With this arrangement, even when the covering member becomes wet with liquid such as water, permeation of the liquid through the covering member is prevented.

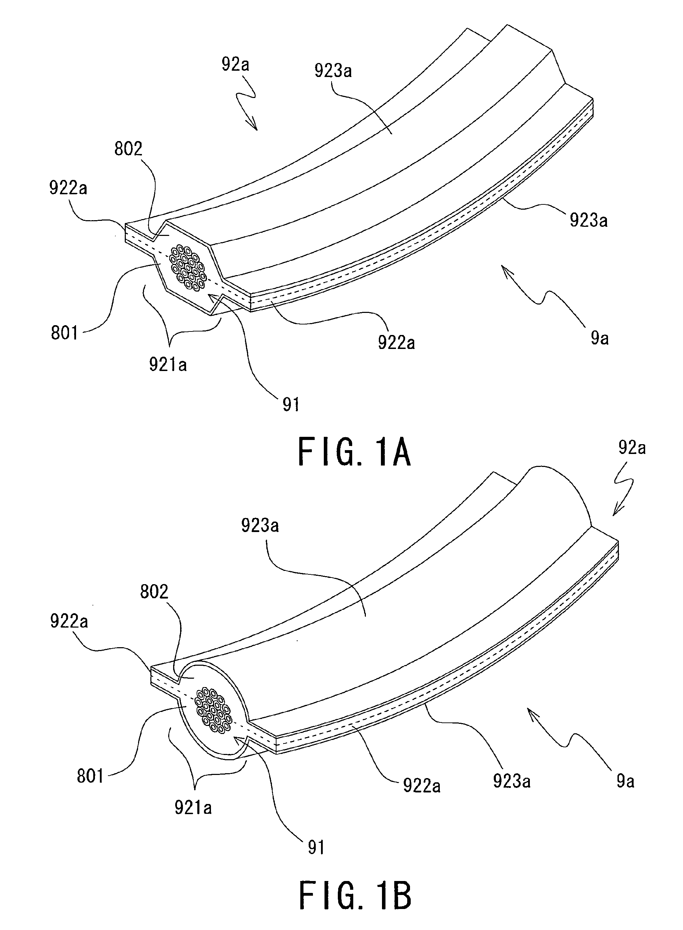

Next, a wire harness 9a according to a first embodiment of the present invention will be described. Figs. 1A and 1B are external perspective diagrams of a predetermined part of the wire harness 9a (position in which the covering member 92a is provided) according to the first embodiment of the present invention. Fig. 1A shows a structure where the covering member has an approximately hexagonal cross-sectional shape. Fig. 1B shows a structure where the covering member has an approximately circular cross-sectional shape.

The covering member 92a provided in the wire harness 9a according to the first embodiment of the present invention has a main body 921a, an extension part 922a and a protective layer 923a. The main body 921a and the extension part 922a are formed of two materials 801 and 802.

For the sake of convenience of explanation, one of the two materials of the mainbody 921a and the extension part 922a of the covering member 92a will be referred to as the "first material 801", and the other material, the "second material 802". In Figs. 1A and 1B, a broken line along the cross section of the covering member 92a schematically indicates a joint surface (boundary) between the first material 801 and the second material 802.

The main body 921a of the covering member 92a covers a predetermined part of electric wires 91 (a predetermined part of trunk line and branch line of the wire harness 9a according to the first embodiment of the present invention) (in other words, the predetermined part of the electric wires 91 is embedded in the covering member). The main body 921a has a predetermined axial shape and a predetermined cross-sectional shape and size (note that here and hereafter, the "cross section" means a cross section cut along a direction orthogonal to an axial direction of the electric wires 91).

In Fig. 1A, the cross-sectional shape of the main body 921a of the covering member 92a is an approximately hexagonal shape. In Fig. 1B, the cross-sectional shape of the main body 921a of the covering member 92a is an approximately circular shape. However, the cross-sectional shape of the main body 921a of the covering member 92a is not limited to these shapes. The axial shape, the cross-sectional shape and size of the main body 921a of the covering member 92a are set in correspondence with function and performance required of the covering member 921a, shape and size of space in which the predetermined part of the wire harness 9a according to the first embodiment of the present invention is provided, and the like.

The extension part 922 of the covering member 92a is a part protruded outward from the outer periphery of the main body 921a. The extension part 922a has an approximately flat plate or approximately fold structure extending along the axial direction of the main body 921a. In the extension part 922a, the first material 801 and the second material 802 are joined and integrated. The thickness of the extension part 922a (a direction in which the first material 801 and the second material 802 are overlaid) is smaller than the thickness of the main body 921a. Especially, it is preferable that the respective thicknesses of the first material 801 and the second material 802 in the extension part 922a (i.e., the distances from the respective surfaces to the joint surface) are smaller than the distance from the outer peripheral surface of the main body 921a to the predetermined part of the electric wires 91 (especially, in the predetermined part of the electric wires 91, a distance to the closest point to the outer peripheral surface).

As the first material 801 and the second material 802, a material which has thermoplasticity and which is elastic-deformable (especially, a material elastic-deformable in compressed state) is applied. More particularly, non-woven fabric or a foam formed of a thermoplastic material is applicable.

As the non-woven fabric, fabric having an intertwined structure of base fiber and binder fiber is applicable. For the sake of convenience of explanation, the non-woven fabric having this structure will be referred to as "first non-woven fabric". The base fiber is formed of a thermoplastic resin material having a predetermined fusing point. The binder fiber has a structure where a binder material layer is formed on the outer periphery of core fiber. The core fiber of the binder fiber is formed of the same thermoplastic resin material as that of the base fiber. The binder material layer of the binder fiber is formed of a thermoplastic resin material having a fusing point lower than that of the base fiber and the core fiber.

When the first non-woven fabric is heated to a temperature equal to or higher than a predetermined temperature, it becomes plastic-deformable by thermoplasticity of the base fiber and the binder fiber. Especially, when the first non-woven fabric is heated to a temperature in a temperature band higher than the fusing point of the binder material of the binder fiber and lower than the fusing point of the base fiber and the core fiber of the binder fiber, although the binder fiber is melted, the base fiber and the core fiber of the binder fiber are plastic-deformable by thermoplasticity while their solid state (fiber state) is maintained. Then the molten binder material of the binder fiber permeates among the base fiber and the core fiber of the binder fiber. For the sake of convenience of explanation, this temperature band will be referred to as a "first temperature band".

Accordingly, when the first non-woven fabric is heated to a temperature within the first temperature band, then molded to a predetermined shape at the temperature within the first temperature band, then cooled to a temperature lower than the first temperature band at which the base fiber and the binder fiber are not plastic-deformable by thermoplasticity, the molded predetermined shape is maintained. Further, since the base fiber and core fiber of the binder fiber are connected with the binder material which has been melted and then solidified, the molded first non-woven fabric is harder in comparison with its state before the heating.

As the first non-woven fabric, non-woven fabric having a structure in which the base fiber and the core fiber of the binder fiber are formed of PET (polyethylene terephthalate) and the binder material layer of the binder fiber is formed of PET-PEI (polyethylene isophthalate) copolymer resin, is applicable. The fusing point of the base fiber and the core fiber of the binder fiber (i.e. PET fusing point) of the first non-woven fabric is about 250 °C. The fusing point of the binder material is 110 to 150 °C. Accordingly, the first temperature band of the first non-woven fabric having this structure is 110 to 250 °C.

Further, non-woven fabric formed of a thermoplastic resin material which has no binder fiber is also applicable. This non-woven fabric will be referred to as "second non-woven fabric" for the sake of convenience of explanation. Further, a foam formed of a thermoplastic material is also applicable. For example, non-woven fabric or a foam formed of PET is applicable.

In the covering member 92a, the surface layer (outer surface and its peripheral part) of the main body 921a is harder in comparison with the central part (part in contact with a predetermined part of the electric wires 91 and its peripheral part). In other words, the hardness of the main body 921a of the covering member 92a is increased from the central part toward the surface layer. Further, the surface layer of the main body 921a of the covering member 92a is harder than the first material 801 and the second material 802 before molding to the covering member 92a.

In the covering member 92a, the central part of the main body 921a is softer in comparison with the surface layer. More particularly, the central part of the main body 921a of the covering member 92a has the physical property of the first material 801 and the second material 802 before the molding to the covering member 92a. Accordingly, the central part of the main body 921a of the covering member 92a, having elasticity, is in contact with the predetermined part of the electric wires 91.

As shown in Figs. 1A and 1B, the protective layer 923a is formed on approximately the entire surface of the covering member 92a of the wire harness 9a according to the first embodiment of the present invention. Note that in Figs. 1A and 1B, in the covering member 92a, the protective layer 923a is not formed at an end surface of in the axial direction and the end surface of the extension part 922a. However, it may be arranged such that the protective layer 923a is formed on these end surfaces.

The protective layer 923a has a function to prevent permeation of liquid into the covering member 92a. That is, even when the covering member 92a becomes wet with liquid such as water, the protective layer 923a prevents permeation of liquid into the main body of the covering member. For this purpose, the protective layer 923a is formed of a liquid-impermeable material (e.g. a water repellent material).

For example, as the material of the protective layer 923a (protective layer material 803), a sheet member or non-woven fabric (manufactured by e.g. spun bonding) formed of polyester resin is applicable. Further, as the polyester resin, PET (polyethylene terephthalate) or the like is applicable. Note that the material quality, thickness and the like of the protective layer 923a of the covering member 92a of the wire harness 9a according to the first embodiment of the present invention are arbitrarily set in correspondence with specification of the wire harness 9a according to the first embodiment of the present invention and not particularly limited. That is, it has any structure as long as it prevents permeation or transmission of liquid such as water.

Further, in Figs. 1A and 1B, the protective layer 923a is provided on approximately the entire surface of the covering member 92a; however, it may be arranged such that the protective layer 923a is provided on a part of the surface of the covering member 92a. For example, the protective layer 923a is provided only on a part of the covering member 92a to have water proofing property.

Further, the protective layer 923a, having thermoplasticity, is formed of a material having a fusing point higher than that of the first material 801 and the second material 802. Further, the protective layer 923a may be formed of a material having abrasion resistance higher than that of the first material 801 and the second material 802. The "abrasion resistance" means a property that a material is hardly abraded due to friction upon contact with another material. According to this structure, it is possible to improve the abrasion resistance of the covering member 923a.

The wire harness 9a according to the first embodiment of the present invention has the following advantages.

The surface layer of the covering member 92a provided in the wire harness 9a according to the first embodiment of the present invention is harder in comparison with the central part. Accordingly, this hard part has at least one of the function as a protector to protect the predetermined part of the electric wires 91 and the function to maintain the predetermined part of the electric wires 91 in a predetermined shape.

Accordingly, the covering member 92a, provided in a part to be protected in the wire harness 9a according to the first embodiment of the present invention, becomes a protector to protect the predetermined part of the electric wires 91. Further, the covering member 92a, provided in a part where the wire harness 9a according to the first embodiment of the present invention is to be maintained in a predetermined shape, maintains the predetermined part in the predetermined shape. Further, the covering member 92, provided in a part of the wire harness 9a according to the first embodiment of the present invention to be protected and a part to be maintained in the predetermined shape, functions as a protector, and maintains the predetermined part of the wire harness 9a according to the first embodiment of the present invention in the predetermined shape.

On the other hand, the central part of the covering member 92a has the physical property of the first material 801 and the second material 802 before the molding and is soft. The predetermined part of the electric wires 91 is wrapped in the covering member 92a (embedded between the first material 801 and the second material 802), and the predetermined part of the electric wires 91 is elastically in contact with the covering member 92a. Accordingly, the covering member 92a functions as a shock-absorbing material to protect the predetermined part of the electric wires. For example, even when impact or vibration is applied to the covering member 92a, the transmission of the impact or vibration to the predetermined part of the electric wires 91 is prevented or suppressed. In addition, the occurrence of impulsive sound or the like between the predetermined part of the electric wires 91 and the covering member 92a is prevented.

Since the protective layer 923a is provided on approximately the entire surface of the covering member 92a, even when the covering member 92a becomes wet with liquid such as water, permeation of the liquid into the main body 921a of the covering member 92a is prevented. Accordingly, it is possible to prevent increase in weight when the main body 921a of the covering member 92a contains liquid such as water or arrival of the liquid permeated through the covering member 92a to an unexpected position.

Further, it is possible to improve the abrasion resistance of the covering member 92a by applying a material having abrasion resistance higher than that of the first material 801 and the second material 802 to the protective layer material 803.

Next, tools and the like used in a method for manufacturing the wire harness 9a according to the first embodiment of the present invention will be described.

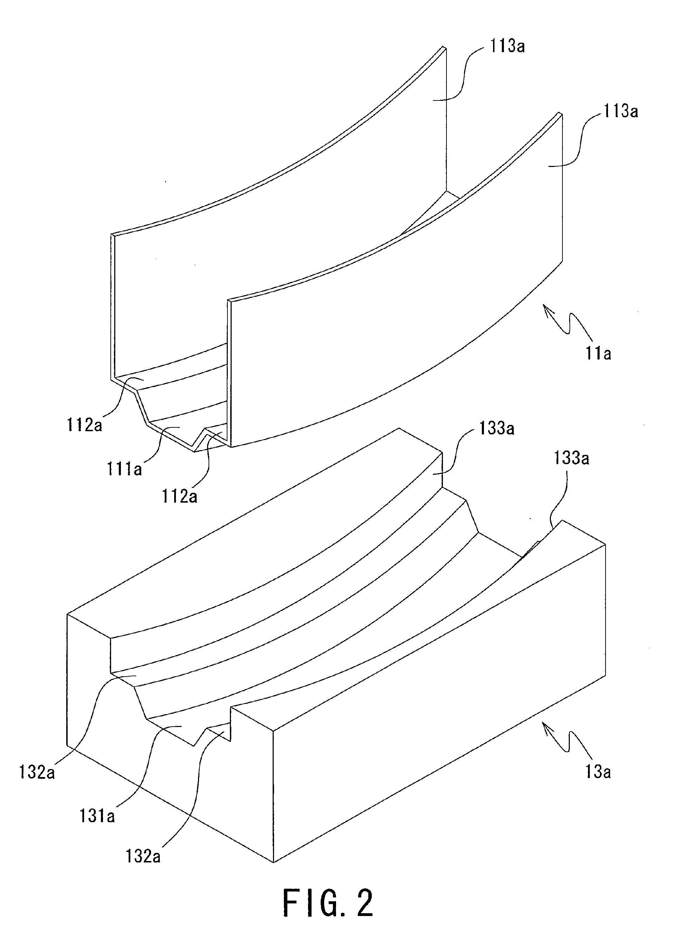

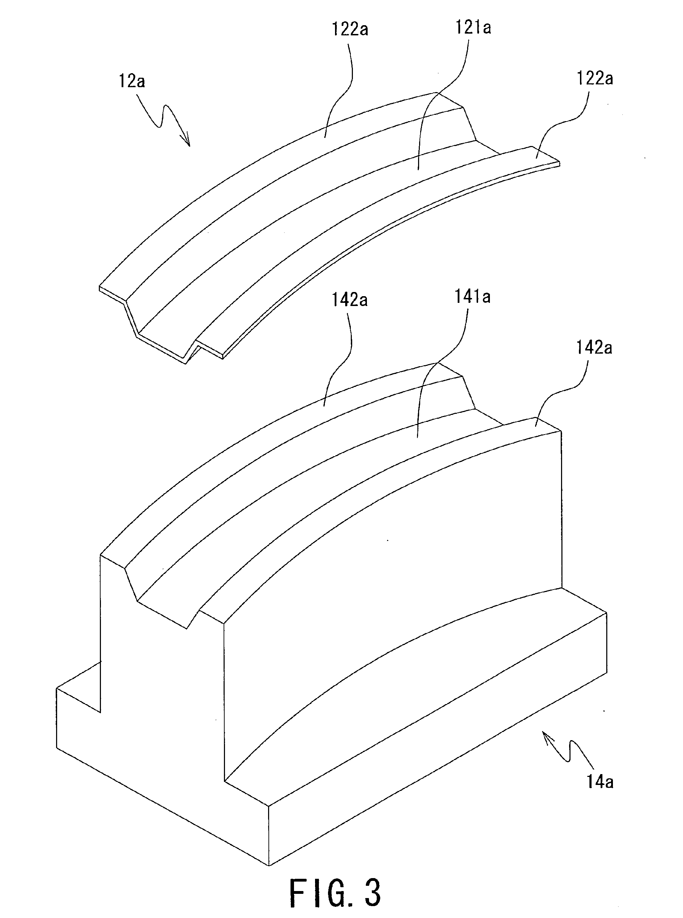

In the method for manufacturing the wire harness 9a according to the first embodiment of the present invention, a first lower holding tool 11a, a first upper holding tool 12a, a molding die including a pair of first lower mold 13a and first upper mold 14a, and a pressing machine are used. Fig. 2 is an external perspective diagram schematically showing the structures of the first lower holding tool 11a and the first lower mold 13a. Fig. 3 is an external perspective diagram schematically showing the structures of the first upper holding tool 12a and the first upper mold 14a.

In the first lower holding tool 11a and the first lower mold 13a, the upper side in Fig. 2 faces the first upper holding tool 12a and the first upper mold 14a. In the first upper holding tool 12a and the first upper mold 14a, the upper side in Fig. 3 faces the first lower holding tool 11a and the first lower mold 13. Hereinbelow, for the sake of convenience of explanation, regarding the first lower holding tool 11a and the first lower mold 13a, the side facing the first upper holding tool 12a and the first upper mold 14a will be referred to as an "upper side". On the other hand, regarding the first upper holding tool 12a and the first upper mold 14a, the side facing the first lower holding tool 11a and the first lower mold 13a will be referred to as a "lower side". In Fig. 2, the upper position in the figure corresponds to the upper side of the first lower holding tool 11a and the first lower mold 13a. In Fig. 3, theupperposition in the figure corresponds to the lower side of the first upper holding tool 12a and the first upper mold 14a.

The first lower holding tool 11a and the first upper holding tool 13a have a function to, in the process of manufacturing the wire harness 9a (especially process of molding the covering member 92a), pressurize the first material 801 and the second material 802 to mold them into a predetermined shape (the shape of the covering member 92a) and a function to maintain the shape of the manufactured wire harness 9a (especially the molded covering member 92a) according to the first embodiment of the present invention (in other words, prevent unexpected deformation and undesired deformation).

The first lower holding tool 11a has a first pressure member 111a, a second pressure member 112a and side walls 113a.

The first pressure member 111a of the first lower holding tool 11a is a member to mold the main body 921a of the covering member 92a. The first pressure member 111a is a groove-shaped concave member formed in an upper surface of the first lower holding tool 11a (in other words, a groove-shaped concave member opened upward and a groove-shaped concave member fallen downward). The shape and size of the first pressure member 111a is set in correspondence with shape and size of the main body 921a of the covering member 92a so as to accommodate a predetermined part of the electric wires 91. That is, the axial shape of the first pressure member 111a is approximately the same as the axial shape of the main body 921a of the molded covering member 92a. The cross-sectional shape and size of the first pressure member 111a (cross-sectional shape and size cut along a direction approximately orthogonal to the axial line of the predetermined part of the electric wires 91) are approximately the same as those of one of shapes obtained by dividing the cross-sectional shape of the main body 921a of the molded covering member 92a by two.

For example, as shown in Fig. 1A, when the axial line of the main body 921a of the covering member 92a is bended in an approximately arc shape and the cross-sectional shape is an approximately hexagonal shape, the axial line of the first pressure member 111a of the first lower holding tool 11a is bended in an approximately arc shape and the cross-sectional shape is an approximately trapezoidal shape obtained by dividing the hexagonal shape by two. That is, an approximately flat bottom surface, and a slope surface which rises from the both sides of the bottom surface approximately upward at a predetermined angle, are formed. Further, as shown in Fig. 1B, when the main body 921a of the covering member 92a is formed to have an approximately circular cross-sectional shape, the first pressure member 111a of the first lower holding tool 11a has a groove-shaped structure having an approximately semicircular cross-sectional shape.

The second pressure member 112a of the first lower holding tool 11a pressurizes, together with the first upper holding tool 11a, the first material 801 and the second material 802, to form the extension part 922a of the covering member 92a (connects the first material 801 to the second material 802). The second pressure member 112a of the first lower holding tool 11a is an approximately flat-shaped part facing upward. The second pressure member 112a of the first lower holding tool 11a is formed along the axial direction of the first pressure member 111a on the both outer sides of the first pressure member 111a.

The side wall 113a of the first lower holding tool 11a has a function of holding the first material 801 and the second material 802, prior to the pressurization of the first material 801 and the second material 802 and in the pressurizing process. The side wall 113a, which is a plate or folded member projected upward, is formed along the outer edge of the second pressure member 112a. Accordingly, the two side walls 113a, away from each other by a predetermined distance, face each other with the first pressure member 111a and the second pressure member 112a therebetween. The height of the side wall 113a is set so as to prevent protrusion of the first material 801 and the second material 802 from the upper side of the two side walls 113a in a state where the predetermined part of the electric wires 91, the first material 801 and the second material 802 are accommodated between the both side walls 113a.

In this manner, the first lower holding tool 11a as a whole has a bar-shaped structure where the cross-sectional shape is an approximately "U" shape.

The lower shape of the first lower holding tool 11a is not particularly limited. For example, when the first lower holding tool 11a is formed of a metal plate or the like and manufactured by sheet metal working or the like, a convex member corresponding to the first pressure member 111a formed on the upper side is formed on the lower side of the first lower holding tool 11a. Further, an approximately flat shaped member corresponding to the second pressure member 112a is formed along the convex member on the both outer sides of the convex member.

The first upper holding tool 12a has a first pressure member 121a and a second pressure member 122a.

The first pressure member 121a of the first upper holding tool 12a is a member to form the main body 921a of the covering member 92a. The first pressure member 121a of the first upper holding tool 12a is a groove-shaped concave member formed in a lower surface of the first upper holding tool 12a (in other words, a groove-shaped concave member opened downward and a groove-shaped concave member fallen upward). The shape and size of the first pressure member 121a of the first upper holding tool 12a are set in correspondence with shape and size of the molded main body 921a of the covering member 92a so as to accommodate the predetermined part of the electric wires 91. That is, the axial shape of the first pressure member 121a of the first upper holding tool 12a is approximately the same as the axial shape of the main body 921a of the molded covering member 92a, and the cross-sectional shape and size of the first pressure member 121a of the first upper holding tool 12a (cross-sectional shape and size cut along the direction approximately orthogonal to the axial line of the predetermined part of the electric wires 91) are approximately the same as those of the other one of the two shapes obtained by dividing the cross-sectional shape of the main body 921a of the covering member 92a by two (the shape and the size of the first pressure member 111a of the first lower holding tool 11a are approximately the same as those of one of the shapes obtained by dividing the cross-sectional shape of the main body 921a of the covering member 92a by two).

For example, as shown in Fig. 1A, when the main body 921a of the covering member 92a has an axial shape bended in an arc shape and an approximately hexagonal cross-sectional shape, the first pressure member 121a of the first upper holding tool 12a has an axial shape bended in an approximately arc shape and an approximately trapezoidal cross-sectional shape obtained by dividing a hexagonal shape by two. That is, it has an approximately flat bottom surface and a slope surface which rises from the both sides of the bottom surface approximately upward at a predetermined angle. Further, as shown in Fig. 1B, when the main body 921a of the covering member 92a is formed to have an approximately circular cross-sectional shape, the first pressure member 121a of the first upper holding tool 12a has a structure where a groove having an approximately semicircular cross-sectional shape extends.

The second pressure member 122a of the first upper holding tool 12a is a member to pressurize, together with the first lower holding tool 11a, the first material 801 and the second material 802, to form the extension part 922a of the covering member 92a (connect the first material 801 to the second material 802). The second pressure member 122a of the first upper holding tool 12a is an approximately flat shaped member facing downward. The second pressure member 122a is formed along the axial direction of the first pressure member 121a on the both outer sides of first pressure member 121a.

The upper shape of the first upper holding tool 12a is not particularly limited. When the first upper holding tool 12a is formed of a metal plate or the like and manufactured by sheet metal working or the like, a convex member corresponding to the first pressure member 121a formed on the lower side is formed on the upper side of the first upper holding tool 12a, and an approximately flat surface member corresponding to the second pressure member 122a is formed on the both outer sides of the convex member.

The first upper holding tool 12a has a size to be easily inserted/removed in/from a region between the both side walls 113a of the first lower holding tool 11a.

When the first upper holding tool 12a is inserted between the side walls 113a of the first lower holding tool 11a, the first pressure member 121a of the first upper holding tool 12a and the first pressure member 111a of the first lower holding tool 11a face each other, and the second pressure member 122a of the first upper holding tool 12a and the second pressure member 112a of the first lower holding tool 11a face each other. That is, the first pressure member 111a of the first lower holding tool 11a and the first pressure member 121a of the first upper holding tool 12a have approximately the same axial shape and approximately the same width. Similarly, the second pressure member 112a of the first lower holding tool 11a and the second pressure member 122a of the first upper holding tool 12a have approximately the same width. The width of the first upper holding tool 11a is approximately the same as or slightly smaller than the interval between the both side walls 113a of the first lower holding tool 11a.

The first lower holding tool 11a and the first upper holding tool 12a have a structure formed of a material with high thermal conductivity and a small thermal storage amount (i.e., to quickly follow ambient temperature change). Especially, they have a structure to quickly transmit heat in a vertical direction. More particularly, the first lower holding tool 11a and the first upper holding tool 12a are formed of a thin metal plate or the like and manufactured by sheet metal working or the like. When the first lower holding tool 11a and the first upper holding tool 12a are respectively formed of a thin metal plate or the like, heat is quickly transmitted in the vertical direction (the thickness direction of the metal plate). Further, since it is possible to reduce the mass of the first lower holding tool 11a and the first upper holding tool 12a, it is possible to reduce the thermal storage amount.

It is preferable that the first pressure member 111a of the first lower holding tool 11a, the second pressure member 112a and the both side walls 113a are integrally manufactured from one metal plate by sheet metal working or the like. Similarly, it is preferable that the first pressure member 121a of the first upper holding tool 12a and the second pressure member 122a are integrally manufactured from one metal plate by sheet metal working or the like. When the first lower holding tool 11a and the first upper holding tool 12a are respectively integrally manufactured from one metal plate or the like, it is not necessary to attach a part as a separate member to the holding tool. Accordingly, in comparison with a structure where a part as a separate member is attached to the holding tool, it is possible to prevent raise of the cost of the parts and manufacturing cost of the first lower holding tool 11a and the first upper holding tool 12a. Further, it is possible to prevent or reduce increment in the manufacturing labor.

The first lower mold 13a is a tool to mold the covering member 92a by heating and pressurizing the first material 801 and the second material 802, along with the first upper holding tool 12a and the first upper mold 14a via the first lower holding tool 11a. That is, it is possible to pressurize the first material 801 and the second material 802 so as to have a predetermined shape and size (the shape and the size of the covering member 92a) by plastic deformation utilizing thermoplasticity and heat the first material 801 and the second material 802 so as to weld them.

On the upper side of the first lower mold 13a, a groove-shaped concave member, in which the entire part or a part of the lower side of the first lower holding tool 11a is fitted, is formed. The groove-shaped concave member has a first pressure member 131a, a second pressure member 132a and a support member 133a.

The first pressure member 131a of the first lower mold 13a accommodates the lower side of the first pressure member 111a of the first lower holding tool 11a in a state where the first lower holding tool 11a is placed on the upper side of the first lower mold 13a, and is in contact with the lower surface of the first pressure member 111a of the first lower holding tool 11a (the surface of the convex member corresponding to the first pressure member 111a). Accordingly, the first pressure member 131a of the first lower mold 13a has size and shape approximately the same as the shape and the size of the lower side of the first pressure member 111a of the first lower holding tool 11a. For example, as shown in Fig. 2, when the lower side of the first pressure member 111a of the first lower holding tool 11a is shaped in an approximately trapezoidal protrusion, the first pressure member 131a of the first lower mold 13a has a structure with an approximately trapezoidal groove-shaped cross-sectional shape. Further, when the lower side of the first pressure member 111a of the first lower holding tool 11a is shaped in an approximately semicircular protrusion, the first pressure member 131a of the first lower mold 13a has a structure with an approximately semicircular groove-shaped cross-sectional shape.

The second pressure member 132a of the first lower mold 13a is in contact with the lower surface of the second pressure member 132a of the first lower holding tool 11a in a state where the first lower holding tool 11a is placed on the upper side of the first lower mold 13a. The second pressure member 132a of the first lower mold 13a is formed along the first pressure member 131a on the both outer sides of the first pressure member 131a. Further, the second pressure member 132a of the first lower mold 13a has a shape following the shape of the lower surface of the second pressure member 112a of the first lower holding tool 11a. For example, as shown in Fig. 2, when the lower side of the second pressure member 112a of the first lower holding tool 11a is an approximately flat surface, the second pressure member 112a of the first lower mold 13a is formed to have an approximately flat surface following the lower side of the second pressure member 112a of the first lower holding tool 11a.

The support member 133a of the first lower mold 13a has a function to support the first lower holding tool 11a such that the first lower holding tool 11a, placed on the upper side of the first lower mold 13a, is not easily moved, easily fallen or easily removed from the upper side of the first lower mold 13a. More particularly, as shown in Fig. 2, the support member 133a is formed on the both outer sides of the second pressure member 132a as surface-shaped parts facing each other.

The interval between the support members 133a is set to have a size to be removably engaged with the entire part or a part of the lower side of the first lower holding tool 11a. For example, the interval is set to a size approximately the same as or slightly larger than the interval between the outer surfaces of the side walls 113a of the first lower holding tool 11a.

The height of the support member 133a (size in the vertical direction) is not particularly limited. As described above, the height may be set to any size as long as the support member can support the first lower holding tool 11a, placed on the upper side of the first lower mold 13a, such that the first lower holding tool 11a is not easily moved, easily fallen or easily removed from the upper side of the first lower mold 13a. The support member 133a of the first lower mold 13a shown in Fig. 2 has a height lower than that of the side wall 113a of the first lower holding tool 11a. With this height, it is possible to support a part of the lower side of the first lower holding tool 11a. Note that the height of the support member 133a may be approximately the same as or greater than that of the side wall 113a of the first lower holding tool 11a. With this height, the entire first lower holding tool 11a can be fitted in the first lower mold 13a.

In this manner, the upper side of the first lower mold 13a has a part in size and shape following the shape and the size of the lower side of the first lower holding tool 11a. It is possible to place (fit) the first lower holding tool 11a in this part. When the first lower holding tool 11a is placed, approximately the entire lower surface of the first lower holding tool 11a (respective lower surfaces of the first pressure member 111a and the second pressure member 112a) is in contact with the first lower mold 13a.

That is, a "groove" having a predetermined axial shape and cross-sectional shape and size is formed on the upper side of the first lower mold 13a. The support member 133a corresponds to the side surface of the "groove", and the first pressure member 131a and the second pressure member 132a, the bottom surface of the "groove". It is possible to removably fit the entire part or a part of the lower side of the first lower holding tool 11a in the "groove". When the first lower holding tool 11a is fitted in the "groove", the lower surface of the first lower holding tool 11a is in contact with the bottom surface of the "groove" (the first pressure member 131a and the second pressure member 132a of the first lower mold 13a), and a part (a part on the lower side) or the entire outer surface of the side wall 113a of the first lower holding tool 11a is in close vicinity or in contact with the side surface of the "groove" (support member 133a of the first lower mold 13a).

The first upper mold 14a is a tool to heat and pressurize the first material 801 and the second material 802, together with the first lower mold 13a and the first lower holding tool 11a, via the first upper holding tool 12a. That is, the first upper mold 14a heats and pressurizes the first material 801 and the second material 802 via the first upper holding tool 12a so as to mold them in predetermined size and shape (the size and the shape of the covering member 92), and welds the first material 801 and the second material 802.

The entire part or a part of the lower side of the first upper mold 14a has a structure to be inserted in/removed from the interval between the both side walls 113a of the first lower holding tool 11a. That is, the entire part or a part of the lower side of the first upper mold 14a has a predetermined axial shape (the axial shape of the molded covering member 92a), and has a size in the widthwise direction (the size in the direction orthogonal to the axial line) for insertion in/removal from the interval between the both side walls 113a of the first lower holding tool 11a. For example, the entire part or a part of the lower side of the first upper mold 14a has a size approximately the same as or slightly smaller than the interval between the both side walls 113a of the first lower holding tool 11a. In the first upper mold 14a shown in Fig. 3, a part of the lower side has the above-described size and shape, and it can be inserted in/removed from the interval between the both side walls 113a of the first lower holding tool 11a.

The lower surface of the first upper mold 14a has size and shape to be engaged with the upper side of the first upper holding tool 12a. More particularly, a first pressure member 141a and a second pressure member 142a are formed in the lower surface of the first upper mold 14a.

The first pressure member 141a of the first upper mold 14a accommodates the upper side of the first pressure member 121a of the first upper holding tool 12a in a state where the first upper holding tool 12a is fitted in the lower surface of the first upper mold 141a. In other words, the first pressure member 141a of the first upper mold 14a is a part in contact with the upper surface of the first pressure member 121a of the first upper holding tool 12a (the surface of the convex member corresponding to the first pressure member 121a of the first upper holding tool 12a).

In this manner, the shape and the size of the first pressure member 141a of the first upper mold 14a are approximately the same as the shape and the size of the upper side of the first pressure member 121a of the first upper holding tool 12a. For example, as shown in Fig. 3, when the upper side of the first pressure member 121a of the first upper holding tool 12a is a protrusion having an approximately trapezoidal cross-sectional shape, the first pressure member 141a has a groove-shaped structure having an approximately trapezoidal cross-sectional shape. Further, when the upper side of the first pressure member 121a of the first upper holding tool 12a is a protrusion having an approximately semicircular cross-sectional shape, the first pressure member 141a of the first upper mold 14a has a groove-shaped structure having an approximately semicircular cross-sectional shape.

The second pressure member 142a of the first upper mold 14a is in contact with the upper surface of the second pressure member 122a of the first upper holding tool 12a in a state where the first upper holding tool 12a is fitted in the lower surface of the first upper mold 14a. The second pressure member 142a of the first upper mold 14a is formed into a shape following the upper side of the second pressure member 122a of the first upper holding tool 12a. The second pressure member 142a of the first upper mold 14a is formed along the first pressure member 141a on the both outer sides of the first pressure member 141a of the first upper mold 14a. For example, as shown in Fig. 3, when the upper side of the second pressure member 122a of the first upper holding tool 12a is approximately flat surface, the second pressure member 142a of the first upper mold 14a is formed to an approximately flat surface.

In this manner, the lower surface of the first upper mold 14a has shape and size following the shape and the size of the upper side of the first upper holding tool 12a. Accordingly, the upper side of the first upper holding tool 12a can be removably fitted in the lower surface of the first upper mold 14a. When the first upper holding tool 12a is fitted in the lower surface of the first upper mold 14a, approximately the entire upper surface of the first upperholding tool 12a (the respective upper surfaces of the first pressure member 121a and the second pressure member 122a) is in contact with the lower surface of the first upper mold 14a.

The first lower mold 13a and the first upper mold 14a respectively have a temperature control unit (not shown). With the temperature control unit, it is possible to maintain the first pressure members 131a and 141a and the second pressure members 132a and 142a of the first lower mold 13a and the first upper mold 14a at a "predetermined temperature" (precisely, to heat the first material 801 and the second material 802 to the "predetermined temperature). Note that the "predetermined temperature" will be described later.

As the temperature control unit, well-known various heating units are applicable. For example, a structure using a heating wire where the heating wire is embedded inside the first lower mold 13a and the first upper mold 14a, or a structure where the heating wire is attached to the outer periphery of the first lower mold 13a and the first upper mold 14a is applicable. Further, a structure where a liquid-passable channel (e.g., a hole) is formed inside the first lower mold 13a and the first upper mold 14a, and temperature-controlled liquid (temperature-controlled air, liquid (oil or the like), steam (heating steam or the like) is passed is applicable. In this manner, the type and the structure of the temperature control unit (heating unit) are not limited as long as it maintains the first pressure members 131a and 141a and the second pressure members 132a and 142a of the respective first lower mold 13a and the first upper mold 14a at the "predetermined temperature".

When the first lower holding tool 11a is placed on the upper side of the first lower mold 13a, the first upper holding tool 12a is fitted in the lower side of the first upper mold 14a, and in that state, the first lower mold 13a and the first upper mold 14a are brought closer to each other, the entire part or a part of the lower side of the first upper mold 14a and the first upper holding tool 12a can be fitted in the interval between the both side walls 113a of the first lower holding tool 11a, placed on the first lower mold 13a (note that actually, the first upper holding tool 12a moves away from the lower side of the first upper mold 14a and falls by its self weight. However, in this example, the state where the first upper holding tool 12a is fitted in the lower side of the first upper mold 14a is maintained) . Then the first pressure member 111a of the first lower holding tool 11a and the first pressure member 121a of the first upper holding tool 12a face each other with a predetermined interval therebetween. Similarly, the second pressure member 112a of the first lower holding tool 11a and the second pressure member 122a of the first upper holding tool 12a face each other with a predetermined interval therebetween.

When the first lower mold 13a and the first upper mold 14a are brought closer to each other, the shape and the size of space surrounded by the first pressure member 111a and the second pressure member 112a of the first lower holding tool 11a, the both side walls 113a, the first pressure member 121a and the second pressure member 122a of the first upper holding tool 12a becomes the shape and the size of the covering member 92a provided in the predetermined part of the wire harness 9a according to the first embodiment of the present invention.

The first pressure member 111a of the first lower holding tool 11a is a concave member fallen downward from the second pressure member 112a. On the other hand, the first pressure member 121a of the first upper holding tool 12a is a concave member fallen upward from the second pressure member 122a. Accordingly, the distance between the second pressure member 112a of the first lower holding tool 11a and the second pressure member 122a of the first upper holding tool 12a is shorter than the distance between the first pressure member 111a of the first lower holding tool 11a and the first pressure member 111a of the first upper holding tool 11a.

Note that when the first lower holding tool 11a is fitted in the upper side of the first lower mold 13a, the heat of the first lower mold 13a is transmitted to the first lower holding tool 11a. Since approximately the entire lower surface of the first lower holding tool 11a is in contact with the upper surface of the first lower mold 13a, the entire first lower holding tool 11a is quickly and uniformly heated. As the first lower holding tool 11a has a structure to quickly transmit heat in the vertical direction, the respective first pressure member 111a and the second pressure member 112a of the first lower holding tool 11a are entirely and quickly temperature-controlled to a uniform temperature (the "predetermined temperature"). Similarly, when the first upper holding tool 12a is fitted in the first upper mold 14a, the respective first pressure member 121a and the second pressure member 122a of the first upper holding tool 12a are entirely and quickly temperature-controlled to a uniform temperature (the "predetermined temperature").

Next, a method for manufacturing the wire harness 9a according to the first embodiment of the present invention will be described.

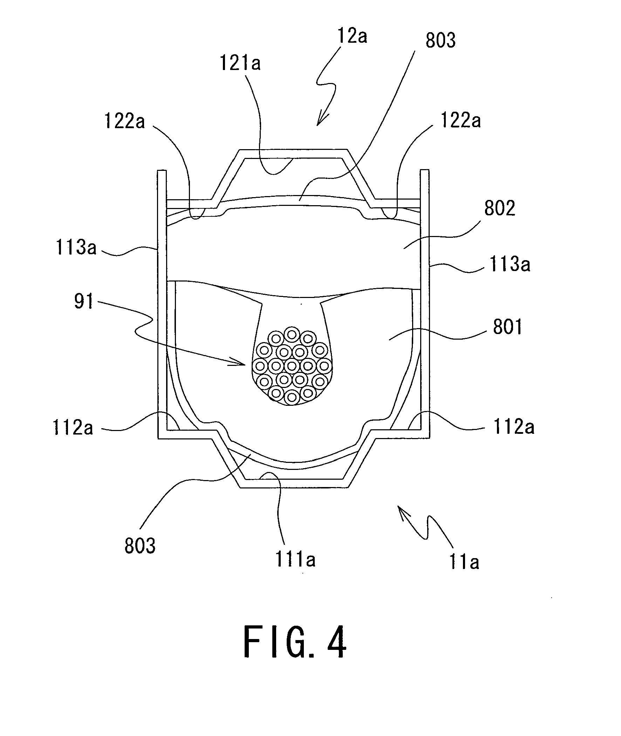

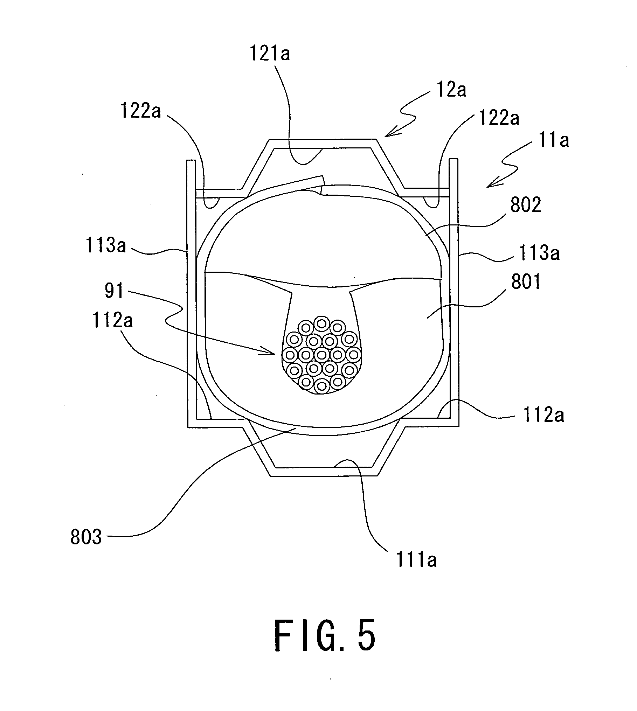

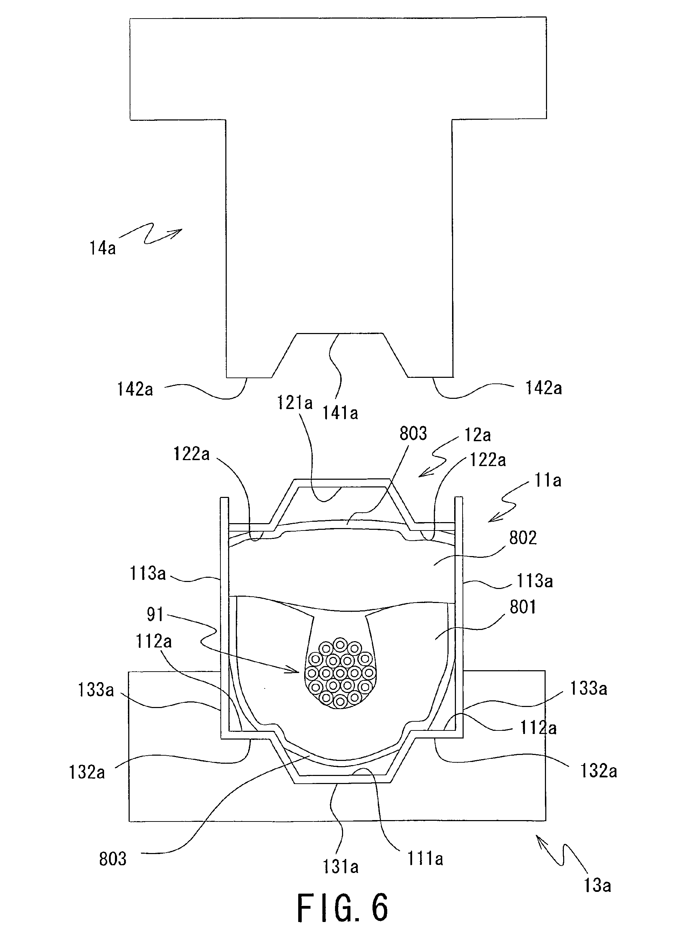

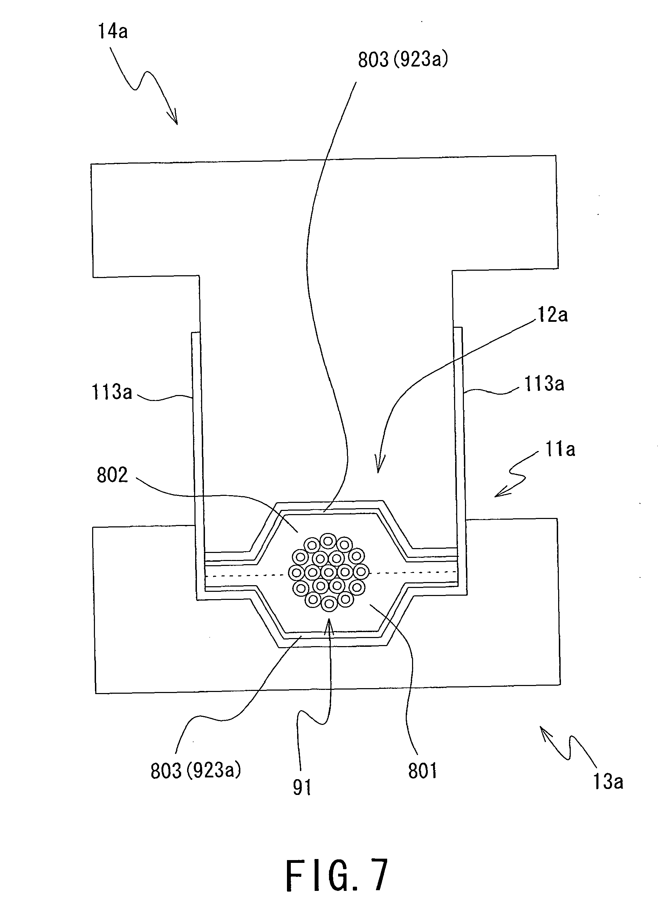

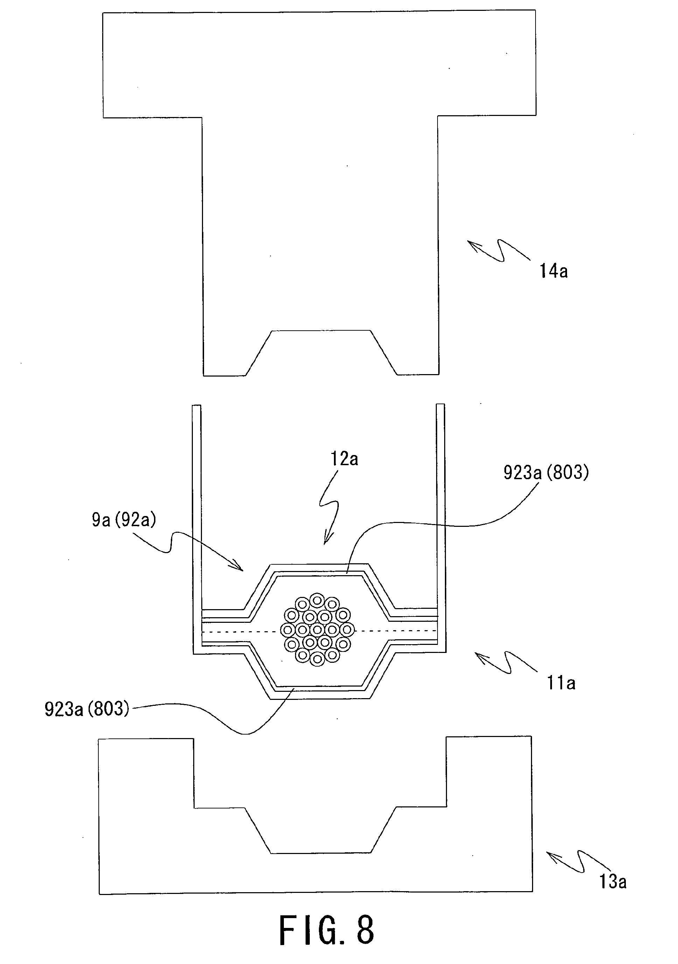

Figs. 4 to 8 are cross-sectional diagrams schematically showing predetermined processes of the method for manufacturing the wire harness 9a according to the first embodiment of the present invention. More particularly, Fig. 4 shows a state where the predetermined part of the electric wires 91, the first material 801 (the first material 801 is previously provided with the protective layer material 803) and the second material 802 are accommodated in the first lower holding tool, and the first upper holding tool is placed thereon. Fig. 5 shows a state where the predetermined part of the electric wires 91, the first material 801, the second material 802 and the protective layer material 803 are accommodated, and the first upper holding tool is placed thereon. Fig. 6 shows a state where the first lower holding tool 11a, accommodating the first material 801, the predetermined part of the electric wires 91, the second material 802 and the protective layer material 803, is placed on the first lower mold 13a. Fig. 7 shows a state where the first material 801 and the second material 802 are heated and pressurized with the first lower mold 13a and the first upper mold 14a. Fig. 8 shows a state where the predetermined part of the manufactured wire harness 9a according to the first embodiment of the present invention (molded covering member 92a), placed on the first lower holding tool 11a, is removed from the first upper mold 14a and the first lower mold 12a.

The first material 801 and the second material 802 are members molded using first non-woven fabric, second non-woven fabric and a foam formed of a thermoplastic material, and for example, a plate-type or bar-type member having predetermined thickness and length is applied. The size of the first material 801 and the second material 802 is arbitrarily set in correspondence with size and shape of the molded covering member.

As described above, as the protective layer material 803, a sheet-type member molded using a predetermined material is applied. The shape and size of the protective layer material 803 are arbitrarily set in correspondence with size and shape of the protective layers 923a and 923b provided on the covering members 92a and 92b.

As the first material 801 and the second material 802, a structure where the protective layer material 803 (protective layer 923a) is previously provided on respective one surface is applicable, and a structure where the first material 801, the second material 802 and the protective layer material 803 are separate members is applicable. For example, as the protective layer material 803, a structure where non-woven fabric or a sheet formed of polyester resin or the like is attached to the first non-woven fabric is applied to the first material 801 and the second material 802.

When the first material 801 and the second material 802 provided with the protective layer material 803 are applied, as shown in Fig. 4, first, the first material 801, in a state where it wraps (or holds) the predetermined part of the electric wires 91, is accommodated in a region held between the both side walls 113a of the first lower holding tool 11a. The first material 801 is bended (e.g. in an approximately "U" shape or approximately "C" shape) so as to hold (or wrap) the predetermined part of the electric wires 91, and in that state, it is accommodated between the both side walls 113a of the first lower holding tool 11a. At this time, as shown in Fig. 5, the bended side of the first material 801 (the bottom side of the "U" shape) is directed toward the lower side (the side where the first pressure member 111a and the second pressure member 112a are formed) of the first lower holding tool 11a.

Then, the second material 802 is placed on the upper side of them, and further, the first upper holding tool 12a is placed. At this time, in the surfaces of the first material 801 and the second material 802, a surface on the side where the protective layer material 803 is not provided becomes an inner side surface (directed toward the predetermined part of the electric wires 91) , and a surface where the protective layer material 803 is provided becomes an outer side surface (in contact with the first lower holding tool 11a and the first upper holding tool 12a).

When the first material 801, the second material 802 and the protective layer material 803 are separate members, first, as shown in Fig. 5, the protective layer material 803 is provided on the first lower holding tool 11a. Then, in a state where the first material 801 wraps (or holds) the predetermined part of the electric wires 91, the first lower holding tool 11a is accommodated in a region held between the both side walls 113a of the first lower holding tool 11a (i.e., the upper side of the provided protective layer material 803) , and further, the second material 802 is placed thereon. Then, the first material 801 and the second material 802 are wrapped in the protective layer material 803. Further, the first upper holding tool 12a is placed thereon.

Note that in addition to the structure using one protective layer material 803, a structure using plural protective layer materials 803 may be applied. In this case, in a state where the first material 801 and the second material 802 are accommodated in the first lower holding tool 11a, the first material 801 and the second material 802 are wrapped (or held) in the plural protective layer materials 803.

As the thickness of the first material 801 and the second material 802 (the size in the vertical direction) before molding to the covering member 92a, a size equal to or larger than the half of the thickness of the main body 921a of the molded covering member 92a and a size larger than the thickness of the extension part 922a is applied. Further, as the width of the first material 801 before molding to the covering member 92a, a size at least equal to or greater than the distance between the both side walls 113a of the first lower holding tool 11a is applied. It is preferable that the size is set so as to, in the state where the first material 801 is bended to hold the predetermined part of the electric wires 91, prevent protrusion of the predetermined part of the electric wires 91 from the first material 801. On the other hand, as the width of the second material 802 before molding to the covering member 92a, a size equal to or greater than the distance between the both side walls 113a of the first lower holding tool 11a is applied.

Accordingly, when the first material 801 and the second material 802 are provided inside the both side walls of the first lower holding tool, they are maintained in elastically deformed state with the first pressure member 111a and the second pressure member 112a of the first lower holding tool 11a, and the side walls 113a. Especially, the first material 801 is maintained in an approximately "U" shape or approximately "C" shape with the side walls 113a of the first lower holding tool 11a, in the state where it holds or wraps the predetermined part of the electric wires 91. According to this structure, the predetermined part of the electric wires 91 is not protruded or exposed from the molded covering member 92a. That is, the molded covering member 92a closely covers the periphery of the predetermined part of the electric wires 91.

Next, as shown in Fig. 6, the first lower holding tool 11a, accommodating the protective layer material 803, the first material 801, the predetermined part of the electric wires 91 and the second material 802, on which the first upper holding tool 12a is placed, is placed on the upper side of the first lower mold 13a. That is, a part of the lower side of the first lower holding tool 11a is fitted in the "groove" formed on the upper side of the first lower mold 13a (the support member 133a corresponds to the groove side surface, and the first pressure member 131a and the second pressure member 132a correspond to the groove bottom surface) . Accordingly, the first lower holding tool 11a placed on the upper side of the first lower mold 13a is not easily shifted, or not easily turned over, or not easily removed from the first lower mold 13a.

When the first lower holding tool 11a is placed on the first lower mold 13a, the lower surface of the first pressure member 111a of the first lower holding tool 11a and the lower surface of the second pressure member 112a are in contact with the first pressure member 131a and the second pressure member 132a of the first lower mold 13a. In the first lower holding tool 11a, the entire part of the outer surface or a part of the lower side of the side wall 113a is in the close vicinity or in contact with the support member 133a of the first lower mold 13a.

Note that the first pressure member 131a of the first lower mold 13a, the second pressure member 132a, the first pressure member 141a and the second pressure member 142a of the first upper mold 14a are maintained at the "predetermined temperature" with the temperature control unit.

As the "predetermined temperature", when the first non-woven fabric is applied to the first material 801 and the second material 802, a temperature equal to or higher than the fusing point of the binder material of the binder fiber, and equal to or lower than one of the fusing point of the first material 801 and the second material 802 and the fusing point of the protective layer material 803, is applied. On the other hand, when the second non-woven fabric or a foam formed of a thermoplastic material is applied to the first material 801 and the second material 802, a temperature around the fusing point of the thermoplastic material as a material of the second non-woven fabric or the foam (note that a temperature equal to or higher than the fusing point) is applied. For example, when the fusing point of the binder material of the binder fiber of the first non-woven fabric is about 110 °C and the protective layer material 803 is formed of PET (polyethylene terephthalate) (the fusing point is about 250 °C) , the "predetermined temperature" is about 110 to 250 °C.

Next, as shown in Fig. 7, the first lower mold 13a and the first upper mold 14a are brought closer to each other. The first lower mold 13a and the first upper mold 14a are built in the pressing machine (not shown) , and the first lower mold 13a and the second lower mold 14a are brought closer to each other in accordance with the operation of the pressing machine. More particularly, the first lower mold 13a and the first upper mold 14a are brought closer to each other such that the shape and the size of space surrounded by the first pressure member 111a and the second pressure member 112a of the first lower holding tool 11a, and the first pressure member 121a and the second pressure member 122a of the first upper holding tool 12a becomes the shape and the size of the molded covering member 92a. By bringing the first lower mold 13a and the first upper mold 14a closer to each other, the first material 801 and the second material 802 are heated and pressurized. Then this state is maintained (i.e., the heating and pressurizing are continued) for a predetermined period.

According to this arrangement, in the first material 801 and the second material 802, a part held and pressurized between the first pressure member 111a of the first lower holding tool 11a and the first pressure member 121a of the first upper holding tool 12a becomes the main body 921a of the covering member 92a. Further, a part held and pressurized between the second pressure member 112a of the first lower holding tool 11a and the second pressure member 122a of the first upper holding tool 12a becomes the extension part 922a of the covering member 92a.

The "predetermined period", i.e., time to continuously heat and pressurize the first material 801 and the second material 802, is as follows.

When the first non-woven fabric is applied to the first material 801 and the second material 802, the predetermined period is longer than a period in which the temperature of a part in the first material 801 and the second material 802, which becomes the extension part 922a after molding to the covering member 92a (a part held between the second pressure member 112a of the first lower holding tool 11a and the second pressure member 122a of the first upper holding tool 12a) , rises to the first temperature band in the entire thickness direction. However, in the predetermined period, the temperature of the center of a part, which becomes the main body 921a of the covering member 92a (the part held between first pressure member 111a of the first lower holding tool 11a and the first pressure member 121a of the first upper holding tool 12a) (the predetermined part of the electric wires 91 and its peripheral part), does not rise to the first temperature band.

When the second non-woven fabric or the foam (non-woven fabric or foam which is formed of a thermoplastic material and which does not have a binder material) is applied to the first material 801 and the second material 802, the predetermined period is longer than a period in which the temperature of the part in the first material 801 and the second material 802 which becomes the extension part 922a of the covering member 92a rises to the fusing point of the thermoplastic material . However, the temperature of the center of the part which becomes the main body 921a of the covering member 92a does not rise to a temperature around the fusing point of the thermoplastic material.

As the thickness of the extension part 922a of the covering member 92a is smaller than that of the main body 921a, it is possible to heat the enter part which becomes the extension part 922a to the predetermined temperature before the temperature of the center of the part which becomes the main body 921a of the covering member 92a rises to the "predetermined temperature".

When the first material 801 and the second material 802 are heated and pressurized at the "predetermined temperature" for the "predetermined period", the extension part 922a of the covering member 92a is molded through the following process.

When the first material 801 and the second material 802 are pressurized, the distance between the second pressure member 112a of the first lower holding tool 11a and the second pressure member 122a of the first upper holding tool 12a is maintained in the value approximately the same as the thickness of the extension part 922a of the covering member 92a. The thickness of the first material 801 and the second material 802 before pressurization is greater than the thickness of the extension part 922a of the molded covering member 92a. Accordingly, in the first material 801 and the second material 802, the part held between the second pressure member 112a of the first lower holding tool 11a and the second pressure member 122a of the first upper holding tool 12a is pressurized and compression-deformed. This part is heated by heat emitted from the temperature control unit of the first lower mold 13a and the first upper mold 14a, to the predetermined temperature. Accordingly, the compression deformation is plastic deformation by thermoplasticity.

When the first non-woven fabric is applied to the first material 801 and the second material 802, the base fiber and the core fiber of the binder fiber of the first non-woven fabric are plastic-deformed by thermoplasticity. Note that since the "predetermined temperature" is lower than the fusing point of the base fiber and the core fiber of the binder fiber of the first non-woven fabric, they are not melted but maintained in a solid state (solid state) . On the other hand, as the "predetermined temperature" is higher than the fusing point of the binder material of the binder fiber, the binder material of the binder fiber is melted, and it permeates among the base fiber and the core fiber of the binder fiber, and spreads in the contact surface between the first material 801 and the second material 802. Accordingly, the respective base fiber and the core fiber of the binder fiber of the first material 801 and the second material 802 are connected with the binder material . Further, the first material 801 and the second material 802 are joined with the molten binder material spread in the contact surface between the first material 801 and the second material 802.

When the second non-woven fabric material or foam which is formed of a thermoplastic material and which does not have a binder material is applied to the first material 801 and the second material 802, since the "predetermined temperature" is a temperature around the fusing point of the thermoplastic material (note that the predetermined temperature is equal to or higher than the fusing point), the first material 801 and the second material 802 are plastic-deformed by thermoplasticity. Then, since a part of the first material 801 and a part of the second material 802 are melted, the first material 801 and the second material 802 are welded.

In this manner, in the first material 801 and the second material 802, formed of any of the first non-woven fabric, the second non-woven fabric and the foam, the part in the first material 801 and the second material 802 which becomes the extension part of the covering member 92a (the part held between the second pressure member 112a of the first lower holding tool 11a and the second pressure member 122a of the first upper holding tool 12a) is plastic-deformed (compression-deformed) to have a reduced size in the vertical direction and the first material 801 and the second material 802 are joined.

On the other hand, the main body 921a of the covering member 92a is molded through the following process.

In the first material 801 and the second material 802, the part held between the first pressure member 111a of the first lower holding tool 11a and the first pressure member 121a of the first upper holding tool 12a becomes the main body 921a of the covering member 92a. In the first material 801 and the second material 802, a part held between the first pressure member 111a of the first lower holding tool 11a and the first pressure member 121a of the first upper holding tool 12a is pressurized with these members. Then the first material 801 and the second material 802 are plastic-deformed to a shape approximately the same as the shape of a gap formed between the first pressure member 111a of the first lower holding tool 11a and the first pressure member 121a of the first upper holding tool 12a, and become the covering member 92a main body 921a.

When the first non-woven fabric is applied to the first material 801 and the second material 802, in the first material 801 and the second material 802, the temperature of a part in contact with the first pressure member 111a of the first lower holding tool 11a and its peripheral part and a part in contact with the first pressure member 121a of the first upper holding tool 12a and its peripheral part rises to the "predetermined temperature". Accordingly, the binder material of the binder fiber is melted by heat, and spreads among the base fiber and the core fiber of the binder fiber. Then the temperature of the part in contact with the first pressure member 11a of the first lower holding tool 11a and its peripheral part and the part in contact with the first pressure member 121a of the first upper holding tool 12a and its peripheral part is higher in comparison with that of the central part (the part in contact with the predetermined part of the electric wires 91 and its peripheral part). Accordingly, in these parts, the degree of plastic deformation is higher in comparison with that of the central part, and the density of the base fiber and the core fiber of the binder fiber is higher in comparison with that of the central part.

When the second non-woven fabric or the foam is applied to the first material 801 and the second material 802, in the first material 801 and the second material 802, the temperature of the part in contact with the first pressure member 111a of the first lower holding tool 11a and its peripheral part and the part in contact with the first pressure member 121a of the first upper holding tool 12a and its peripheral part is higher in comparison with that of the central part (the part in contact with the electric wires and its peripheral part) . In these parts, the degree plastic deformation is higher in comparison with the central part. As a result, the density of the fiber or foam is higher in comparison with that of the central part. Further, since the temperature of the part in contact with the first pressure member 111a of the first lower holding tool 11a and its peripheral part and the part in contact with the first pressure member 121a of the first upper holding tool 12a and its peripheral part rises to the "predetermined temperature", a part of the second non-woven fabric or the foam is melted. When the second non-woven fabric or the foam is melted, the density is increased by release of gas in bubbles or the like.

In this manner, when the first material 801 and the second material 802 are heated and pressurized with the first lower holding tool 11a, the first upper holding tool 12a, the first lower mold 13a and the first upper mold 14a, in the part which becomes the extension part 922a of the covering member 92a, the first material 801 and the second material 802 are joined and integrated. Further, the density of the surface layer of the part which becomes the main body 921a of the covering member 92a is increased in comparison with that of the central part.

Note that the heat emitted from the first lower mold 13a is transmitted through the first lower holding tool 11a to the first material 801 and the second material 802. Similarly, the heat emitted from the first upper mold 14a is transmitted through the first upper holding tool 12a to the first material 801 and the second material 802. Since the first lower holding tool 11a and the first upper holding tool 12a are formed of a material with high thermal conductivity and quickly transmit heat in the vertical direction, the heat emitted from the first lower mold 13a and the first upper mold 14a is quickly transmitted to the first material 801 and the second material 802. Accordingly, it is not necessary to set the "predetermined period" to a long period.

Further, when the protective layer material 803 is provided on the first material 801 and the second material 802, the protective layer material 803 is molded to a predetermined shape as the protective layer 923a. When the first material, the second material and the protective layer material 803 are separate members, in this process, the protective layer material 803 is attached to the surfaces of the first material 801 and the second material 802 and molded to the predetermined shape as the protective layer 923a. A more particular process is as follows.

While the first material 801 and the second material 802 are pressurized with the first lower holding tool 11a and the first upper holding tool 12a, the temperature of the surfaces of these materials rises to the "predetermined temperature". Accordingly, when the first non-woven fabric is applied to the first material 801 and the second material 802, the binder material of the surface layer of the first material 801 and the second material 802 is melted. Then the protective layer material 803, with the molten binder material as an adhesive, is attached to the respective surfaces of the first material 801 and the second material 802. On the other hand, when the second non-woven fabric or the foam is applied to the first material 801 and the second material 802, at least a part of the surface layer of the first material 801 and a part of the second material 802 are melted. Then the protective layer material 803, with the molten first material 801 and the second material 802 as adhesives, is attached (welded) to the respective surfaces of the first material 801 and the second material 802. As a result, the protective layer 923a is molded on the surface of the covering member 92a.

When the protective layer material 803 is formed of a thermoplastic material, in this process, the protective layer material 803 is plastic-deformed by thermoplasticity into shape and size following the shape and the size of the first pressure member 111a of the first lower holding tool 11a and the shape and the size of the first pressure member 121a of the first upper holding tool 12a. That is, in this process, the first material 801 and the second material 802 are heated by heat from the temperature control unit of the first lower mold 13a and the first upper mold 14a and are in plastic-deformable state by thermoplasticity. As the first material 801 and the second material 802 are elastic compression-deformed, with a force of the first material 801 and the second material 802 to restore the initial shape and size, a force to press the protective layer material 803 against the upper surface of the first lower holding tool 11a and the lower side of the first upper holding tool 12a is applied to the protective layer material 803. Accordingly, the protective layer material 803 is plastic-deformed to have size and shape approximately the same as those of the upper surface of the first lower holding tool 11a and the lower surface of the first upper holding tool 12a.

Next, as shown in Fig . 8, when the "predetermined period" has elapsed, the first lower mold 13a and the first upper mold 14a are separated from each other. Then, in a state where the predetermined part of the wire harness 9a according to the first embodiment of the present invention (i.e., the molded covering member 92a and the predetermined part of the electric wires 91) is held between the first lower holding tool 11a and the first upper holding tool 12a, the wire harness is removed from first lower mold 13a. Then, the predetermined part of the wire harness 9a according to the first embodiment of the present invention, in a state where it is placed on the first lower holding tool 11a, is cooled.

In a case where the first non-woven fabric is applied to the first material 801 and the second material 802, when the temperature of the molded covering member 92a is equal to a temperature not to cause plastic deformation of the base fiber and the core fiber of the binder fiber of the first non-woven fabric by thermoplasticity (at least a temperature lower than that of the first temperature band) , the wire harness is removed from the first lower holding tool 11a and the first upper holding tool 12a. Further, when the second non-woven fabric of foam is applied to the first material 801 and the second material 802, after the temperature of the thermoplastic material becomes a temperature not to cause plasticdeformation bythermoplasticity,thewireharness is removed from the first lower holding tool 11a and the first upper holding tool 12a. Note that the cooling method is not particularly limited. For example, a method of placing the wire harness in a refrigerator, a method of blowing gas at a normal or low temperature, and further, a method of leaving at a normal temperature, or the like, is applicable.

Through the above-described process, the covering member 92a is provided in the predetermined part of the wire harness 9a according to the first embodiment of the present invention (the predetermined part of the electric wires 91). Note that the manufacturing of the wire harness 9a according to the first embodiment of the present invention requires, in addition to the above-described processes, a process of cutting the electric wires 91 by a predetermined length, a process of bundling the electric wires 91 in a predetermined form (process of forming a trunk line and a branch line) , a process of attaching connectors and the like to the ends of the electric wires 91, and the like. Various well-known methods are applicable to these processes. Accordingly, the explanations of these processes will be omitted.

The first lower holding tool 11a and the first upper holding tool 12a are formed of a material having high thermal conductivity and have a structure to quickly transmit heat in the vertical direction. Accordingly, the heat of the molded covering member 92a (the first material 801 and the second material 802) is quickly released to the outside through the first lower holding tool 11a and the first upper holding tool 12a. Further, since the thermal storage amount of the first lower holding tool 11a and the first upper holding tool 12a is small, after the removal from the first lower mold 13a, temperature fall starts immediately. Accordingly, after the removal from the first lower mold 13a, the first lower holding tool 11a and the first upper holding tool 12a do not heat the predetermined part of the wire harness 9a according to the first embodiment of the present invention. In this manner, it is possible to prevent overheating of the predetermined part of the wire harness 9a according to the first embodiment of the present invention. Accordingly, it is possible to easily control the property of the covering member 92a.

In a case where the first non-woven fabric is applied to the first material 801 and the second material 802, when the temperature of the molded covering member 92a becomes a temperature not to cause plastic deformation by thermoplasticity (a temperature at least lower than the first temperature band), the shape and the size of the molded covering member 92a are settled. Further, the binder material, melted and permeated among the base fiber and the core fiber of the binder fiber, is solidified, and the binder material connects the base fiber and the core fiber of the binder fiber. Accordingly, the part where the molten binder material permeated becomes harder in comparison with other parts.

In the molded extension part 922a of the covering member 92a (in the first material 801 and the second material 802, the part held and pressurized between the second pressure member 112a of the first lower holding tool 11a and the second pressure member 122a of the first upper holding tool 12a), the molten binder material permeates through approximately the entire part and is solidified. Further, the extension part 922a is compression-deformed and the density of the base fiber and the core fiber of the binder fiber is higher. In this manner, the extension part 922a of the covering member 92a, where the density of the base fiber and the core fiber of the binder fiber is high and the base fiber and the binder fiber are mutually attached with the binder material, has hardness higher in comparison with the other parts. Further, in the extension part 922a, the first material 801 and the second material 802 are connected and integrated by solidification of the binder material.

The temperature of the surface layer of the molded main body 921a of the covering member 92a (in the first material 801 and the second material 802, the part held and pressurized between the first pressure member 111a of the first lower holding tool 11a and the first pressure member 121a of the first upper holding tool 12a) rises to the first temperature band. Accordingly, the binder material is melted then solidified. In the surface layer of the main body 921a of the covering member 92a, the base fiber and the core fiber are connected with the binder material.

Further, in the surface layer of the covering member 92a, the density of the base fiber and the binder fiber is higher in comparison with that of the central part. That is, the temperature of the surface layer of the main body 921a of the covering member 92a, upon pressurization, is higher in comparison with that of the central part of the main body 921a, and the degree of plastic deformation by thermoplasticity is also high (the compression deformation amount is large). Accordingly, in the surface layer of the molded main body 921a, the density of the base fiber and the binder fiber is higher in comparison with that of the central part. In this state where the density is high, the base fiber and the core fiber of the binder fiber of the first non-woven fabric are connected with the binder material. Accordingly, the surface layer is harder in comparison with the state before the pressurization.

On the other hand, the temperature of the central part of the molded main body 921a of the covering member 92a (i.e. the part in contact with the predetermined part of the electric wires 91 and its peripheral part) , upon pressurization, does not rise to the first temperature band. Accordingly, the degree of plastic deformation by thermoplasticity is lower in comparison with that of the surface layer of the main body 921a of the covering member 92a, or plastic deformation by thermoplasticity is not caused. As the temperature is not within the first temperature band, the binder material of the binder fiber is not melted. Accordingly, the central part of the main body 921a of the covering member 92a has the physical property approximately the same as that of the first non-woven fabric before the molding (note that in some cases, the density of the fiber is higher by pressurization).

In the structure where the second non-woven fabric or the foam is applied to the first material 801 and the second material 802, in the extension part 922a of the covering member 92a, the first material 801 and the second material 802 is compressed and the density is higher. Accordingly, the hardness of the extension part 922a is higher in comparison with the other parts. Further, at least a part of the extension part 922a is melted upon pressurization and then solidified. Accordingly, the first material 801 and the second material 802 are jointed (welded) and integrated in the extension part 922a.

Further, in the surface layer of the main body 921a of the covering member 92a, since the temperature upon pressurization is higher in comparison with that of the central part, the degree of plastic deformation is higher in comparison with that of the central part. On the other hand, in the central part of the main body 921a of the covering member 92a, the state before the heating and pressurization is maintained. Accordingly, in the surface layer of the main body 921a of the covering member 92a, the density is higher in comparison with that of the central part. Further, since the temperature of a part of the surface layer of the main body 921a of the covering member 92a becomes equal to or higher than the fusing temperature upon pressurization, a part of the surface layer is melted and gas in bubbles is released. The state of the part of the surface layer is changed from the fiber or foam state (i.e., the state bubbles and/or hollow are included) to a solid-core state (state of a solid including no or almost no bubble or hollow inside) . Accordingly, the surface layer of the main body 921a of the covering member 92a is harder in comparison with the central part and harder in comparison with the state before molding.

In this manner, in the arrangement where any one of the first non-woven fabric, the non-woven fabric and the foam is applied to the first material 801 and the second material 802, the surface layer of the molded main body 921a of the covering member 92a is harder in comparison with the central part of the main body 921a, and harder than the first material 801 and the second material 802 before molding. On the other hand, the central part of the main body 921a of the covering, member 92a has the physical property approximately the same as that before the pressurization.

In this manner, it is possible to harden the surface layer of the main body 921a of the covering member 92a. Accordingly, it is possible to protect the predetermined part of the wire harness 9a according to the first embodiment of the present invention (the predetermined part of the electric wires 91) with the surface layer. Further, since the hardness is high and the surface layer is hardly deformed, it is possible to maintain the predetermined part of the wire harness 9a according to the first embodiment of the present invention in the predetermined shape.

Accordingly, the covering member 92a, provided in the position of the wire harness 9a according to the first embodiment of the present invention to be protected, functions as a protector. Further, the covering member 92a, provided in the position of the wire harness 9a according to the first embodiment of the present invention to be maintained in a predetermined shape, maintains the position in the predetermined shape. Further, the covering member 92a, provided in the position of the wire harness 9a according to the first embodiment of the present invention to be protected and to be maintained in the predetermined shape, functions as a protector and maintains the predetermined part in the predetermined shape.

The method for manufacturing the wire harness 9a according to the first embodiment of the present invention, has the following advantages.

The first upper mold 13a and the first lower mold 14a have simple structures in comparison with metal molding dies (metal molding dies for injection molding) for manufacturing an injection molded product. Since these molds are manufactured at a lower cost, it is possible to reduce the equipment cost. Further, in the method for manufacturing the wire harness 9a according to the first embodiment of the present invention, a low-cost material (thermoplastic material) is applied to the covering member in comparison with a case using a protector as an injection molded product. Accordingly, it is possible to manufacture the wire harness according to the first embodiment of the present invention at a low cost and reduce the price of the product.

Further, in the method for manufacturing the wire harness 9a according to the first embodiment of the present invention, in the process of molding the covering member 92a, the operation is simple in comparison with that of the method of embedding electric wires in the protector or covering member as injection molded products.

Further, in the structure using the protector as an injection molded product, when a gap exists between the inner surface of the protector or the like and the electric wire, the electric wire collides with the inner surface of the protector or the like, and an impulsive sound or the like may occur. Note that there is a known structure where a shock-absorbing material such as sponge is inserted inside the protector or the like as an injection molded product so as to prevent the impulsive sound or the like. However, in this structure, the number of parts and the number of steps are increased, and the manufacturing cost and the product price may be increased.

On the other and, in the wire harness 9a according to the first embodiment of the present invention, the predetermined part of the electric wires 91 is wrapped in the covering member 92a (embedded between the first material 801 and the second material 802), and the predetermined part of the electric wires 91 is elastically in contact with the covering member 92a. Accordingly, an impulsive sound or the like does not occur between the predetermined part of the electric wires 91 and the covering member 92a.

Further, in the process of molding the covering member 92a, it is possible to mold the protective layer 923a simultaneously. Accordingly, in the method for manufacturing the wire harness 9a according to the first embodiment of the present invention, it is possible to prevent increment in the number of steps. Accordingly, in the wire harness 9a according to the first embodiment of the present invention, it is possible to prevent or suppress increment in the price. In other words, it is possible to add a water repellent property to the covering member 92 (to prevent permeation of liquid such as water through the covering member 92a) without increasing the number of steps. Even when the molded covering member 92a becomes wet with liquid, as the covering member 92a does not absorb the liquid, it is possible to prevent the increment in the weight of the covering member 92a and arrival of the liquid permeated through the covering member 92a at an unexpected position.

Further, in the method for manufacturing the wire harness 9a according to the first embodiment of the present invention, in the process of molding the covering member 92a, the protective layer material 803 is molded in a predetermined shape (shape following the surface of the covering member 92a) simultaneously. Accordingly, it is possible to apply a member having a simple shape (e.g. a flat plate type member) to the protective layer material 803. Accordingly, it is possible to apply a low-cost member to the protective layer material 803. For example, as the protective layer material 803, a member formed by cutting a sheet or flat plate formed of a predetermined material in predetermined size and shape is applicable. In this manner, as the protective layer material 803, no special process is required. Accordingly, it is possible to improve the abrasion resistance of the covering member 92a, and it is possible to prevent or suppress the increment in the cost of the parts.

Note that in the above description, although the first material 801, the second material 802 and the protective layer material 803 are separate members, the present invention is not limited to this arrangement. For example, it may be arranged such that the protective layer 923a is previously molded on respective one surface of the first material 801 and the second material 802 (in other words, the first material 801 and the second material 802, respectively having the protective layer 923a molded on one surface, are used). Further, when the first material 801, the second material 802 and the protective layer material 803 are separate members, in the process of accommodating the first material 801 and the second material 802 into the first lower holding tool 11a, the protective layer material 803 may be accommodated simultaneously. Forexample, it maybe arranged such that the protective layer material 803 is temporarily attached (adhered) to respective one surfaces of first material 801 and the second material 802. In this structure, it is possible to attain the same advantage as that in the above description. Further, in this arrangement, it is not necessary to separately accommodate the protective layer material 803, the first material 801 and the second material 802 into the first lower holding tool. It is possible to further reduce the number of steps and the labor.

Further, in the method for manufacturing the wire harness 9a according to the first embodiment of the present invention, the protective layer 923a is provided on both of the first material 801 and the second material 802. However, the protective layer 923a may be provided on one of the materials. That is, any structure is applicable as long as the protective layer 923a is provided in a position of the covering member 92a to improve the abrasion resistance.

Further, in the method for manufacturing the wire harness 9a according to the first embodiment of the present invention, the following advantages are obtained by using the first lower holding tool 11a.

In a case where the first material 801 and the second material 802 are directly heated and pressurized with the first lower mold 13a and the first upper mold 14a without using the first lower holding tool 11a, an operation to directly provide the first material 801 on the upper side of the first lower mold 13a, an operation to further provide the predetermined part of the electric wires 91 on the upper side thereof, and an operation to further provide the second material 802 on the upper side of the electric wires 91, are required. Accordingly, if it takes much time for performing these operations (especially when a long time has elapsed in the state where the first material 801 is provided on the upper side of the first lower mold 13a), the first material 801 placed on the first lower mold 13a is heated with the temperature control unit of the first lower mold 13a before pressurization. Accordingly, the first material 801 is plastic-deformed by thermoplasticity into an unexpected shape. As a result, it may be impossible to mold the first material 801 and the second material 802 into the predetermined shape of the covering member 92a.

Further, when a long time has elapsed in the state where the first material 801 is placed on the first lower mold 13a, there is a possibility that the temperature of the entire first material 801 becomes the "predetermined temperature". In a case where the first material 801 is the first non-woven fabric, when the temperature of the entire first material 801 becomes the predetermined temperature, the binder material in the entire first material 801 is melted. Further, in a case where the second non-woven fabric or foam formed of a thermoplastic material is applied to the first material 801, there is a possibility that the entire first material 801 is melted. As a result, there is a possibility that, after molding, the part in contact with the predetermined part of the electric wires 91 and its peripheral part are also hardened. In this case, since the part in contact with the predetermined part of the electric wires 91 and its peripheral part lose elasticity (or hardly elastic-deformed) , the molded covering member 92a does not perform the function of a shock-absorbing material or the function as a shock-absorbing material is lowered.

Further, when a long time has elapsed in the state where the first material 801 is placed on the first lower mold 13a, the heat of the first lower mold 13a is transmitted through the first material 801 to the predetermined part of the electric wires 91. There is a probability of damage to the covering member in the predetermined part of the electric wires 91 by the eat.

Further, the first upper mold 14a and the first lower mold 13a are maintained at a temperature where the first material 801 and the second material 802 are plastic-deformable by thermoplasticity. Accordingly, when the first material 801, the predetermined part of the electric wires 91, the second material 802 and the protective layer material 803 are placed on the first lower mold 13a, there is a possibility that an operator touches the first lower mold 13a and/or the first upper mold 14a and gets burned.

Note that it may be arranged such that the first upper mold 14a and the first lower mold 13a are heated to the predetermined temperature only when the first material 801 and the second material 802 are pressurized. In this arrangement, it is possible to perform the operation to accommodate the first material 801, the predetermined part of the electric wires 91, the second material 802 and the protective layer material 803 into the first lower mold 13a when the temperature of the first lower mold 13a is low (at a temperature where the first material 801 is not plastic-deformable by thermoplasticity and the operator does not get burned) . Accordingly, it is possible to prevent unexpected deformation of the first material 801 and the burn injury of the operator. However, in this arrangement, it is necessary to perform heating and cooling on the first lower mold 13a and the first upper mold 14a every time the wire harness 9a is manufactured according to the first embodiment of the present invention (i.e., by molding of one covering member 92a). Accordingly, the time required for manufacturing the wire harness 9a according to the first embodiment of the present invention is much prolonged.

Further, in the arrangement where the first lower mold 13a and the first upper mold 14a are heated only upon pressurization (i.e. , the heating of the first lower mold 13a and the first upper mold 14a is started after the start of pressurization), the first material 801, the predetermined part of the electric wires 91 and the second material 802 are heated before the temperature of the first lower mold 13a and the first upper mold 14a becomes the "predetermined temperature". When the temperature of the first lower mold 13a and the first upper mold 14a becomes the predetermined temperature, the heat is transmitted from the surfaces of the first material 801 and the second material 802 to the inside, and the temperature of the predetermined part of the electric wires 91 and its peripheral part may be high. When the temperature of the predetermined part of the electric wires 91 and its peripheral part becomes high, there is a possibility that the covering member in the predetermined part of the electric wires 91 (generally formed of a synthetic resin material) is damaged by the heat. When the covering member in the predetermined part of the electric wires 91 is damaged by the heat, there is a possibility that insulation between the electric wires 91 cannot be maintained.

On the other hand, in the method for manufacturing the wire harness 9a according to the first embodiment of the present invention, during the operation to accommodate the first material 801, the predetermined part of the electric wires 91, the second material 802 and the protective layer material 803 into the first lower holding tool 11a, it is not necessary to heat the first lower holding tool 11a (it is not necessary to place the first lower holding tool 11a on the first lower mold 13a) . Accordingly, it is possible to heat the first material 801 and the second material 802 only when they are pressurized with the first lower mold 13a and the first upper mold 14a. In this manner, as the first material and the second material are not heated before pressurization, there is no possibility of unexpected deformation of the first material 801 and/or the second material 802 before pressurization. Accordingly, it is possible to accurately mold the first material and the second material into the shape of the covering member 92a.

Further, when the first lower holding tool 11a in which the first material 801, the predetermined part of the electric wires 91, the second material 802 and the protective layer material 803 are accommodated is placed on the first lower mold 13a, it is possible to immediately heat and pressurize the first material 801 and the second material 802. That is, before the pressurization, the first material 801 and the second material 802 are not heated for a long time. Accordingly, it is possible to perform pressurization and molding before the heat is transmitted to the center of the first material 801 and the second material 802. Accordingly, it is possible to perform pressurization and molding before the temperature inside the first material 801 and the second material 802 (especially the part in contact with the predetermined part of the electric wires 91 and its peripheral part) becomes the "predetermined temperature". Since the inside part of the first material 801 and the second material 802 is not hardened, it is possible to prevent the first material from losing the function as a sound proof material or shock-absorbing material.

Further, the operation to accommodate the protective layer material 803, the first material 801, the predetermined part of the electric wires 91 and the second material 802 into the first lower holding tool 11a can be performed in a position away from the first lower mold 13a and the first upper mold 14a. Accordingly, since it is possible to perform the operation in wide space, it is possible to facilitate the operation.

That is, generally, the first lower mold 13a and the first upper mold 14a are built in the pressing machine, therefore, when the first material 801 and the like are directly accommodated in the first lower mold 13a, it is necessary to perform the operation in limited space between the first lower mold 13a and the first upper mold 14a. In some cases, the first upper mold 14a is an disincentive. On the other hand, in the arrangement using the first lower holding tool 11a, since the operation can be performed regardless of space, it is possible to perform the operation in space without operational disincentive. Further, since it is possible to perform the operation to accommodate the first material 801, the predetermined part of the electric wires 91, the second material 802 and the protective layer material 803 into the first lower holding tool 11a in space where the operator does not touch the first lower mold 13a or the first upper mold 14a, there is no possibility of burn injury for the operator.

Further, in comparison with the arrangement where the first lower mold 13a and the first upper mold 14a are heated only upon pressurization, it is possible to maintain the first lower mold 13a and the first upper mold 14a at the "predetermined temperature" in other time than and in addition to the pressurization. Accordingly, it is possible to perform heating and pressurization immediately after the completion of the operation to accommodate the protective layer material 803, the first material 801, the predetermined part of the electric wires 91 and the second material 802 into the first lower holding tool 11a. Accordingly, it is possible to reduce time required for manufacturing the wire harness 9a according to the first embodiment of the present invention. Further, as it is possible to maintain the first lower mold 13a and the first upper mold 14a always at the predetermined temperature, it is possible to facilitate temperature control in the first material 801 and the second material 802 upon pressurization.

Further, in the arrangement using the first lower holding tool 11a, since it is possible to maintain the first lower mold 13a and the first upper mold 14a always at the predetermined temperature, it is possible to quickly heat the first material 801 and the second material 802 to the predetermined temperature at the same time of the start of pressurization. Accordingly, it is possible to join the first material 801 and the second material 802 in the extension part 922a and attach the protective layer material 803 to the surfaces of the first material 801 and the second material 802 before the predetermined part of the electric wires 91 and a part in the first material 801 and the second material 802 in the vicinity of the predetermined part of the electric wires 91 are heated to a high temperature by thermal transmission.

Further, according to this arrangement, in a case where the first non-woven fabric is applied to the first material 801 and the second material 802, it is possible to heat only the surface layer of the main body 921a of the covering member 92a to the predetermined temperature to cause plastic deformation and to melt the binder material in only the surface layer. Accordingly, in the main body 921a of the covering member 92a, it is possible to plastic-deform the first material 801 and the second material 802 in only the surface layer, and to permeate the binder material among the base fiber and the core fiber of the binder fiber.

Similarly, when the second non-woven fabric or the foam formed of a thermoplastic material is applied to the first material 801 and the second material 802, it is possible to heat only the surface layer of the main body 921a of the covering member 92a to the predetermined temperature to cause plastic deformation, and to melt the thermoplastic material in only a part of the surface layer. Accordingly, in the main body 921a of the covering member 92a, it is possible to plastic-deform the first material 801 and the second material 802 in only the surface layer, and to eliminate or reduce bubbles and hollows.

Accordingly, after the cooling, only the surface layer is hardened, and the central part has the physical property before the pressurization (the elastic-deformable state is maintained). Accordingly, the hardened part maintains the shape of the predetermined part of the wire harness 9a according to the first embodiment of the present invention in the predetermined shape, and protects the predetermined part of the wire harness. Further, the unhardened part in the central part of the main body 921a of the covering member 92a functions as a soundproof material or a shock-absorbing material for the predetermined part of the electric wires 91.

Further, in the arrangement using the first lower holding tool 11a, upon or after removal of the predetermined part (molded covering member 92a) of the manufactured wire harness 9a according to the first embodiment of the present invention from the first lower mold 13a, it is possible to prevent unexpected deformation (or undesired deformation) before the temperature of the covering member 92a is lowered to a temperature not to cause deformation by thermoplasticity.

That is, in the arrangement without first lower holding tool 11a, upon removal of the pressurized covering member 92a from the first lower mold 13a, it is necessary to directly hold the wire harness 9a according to the first embodiment of the present invention. In the wire harness 9a according to the first embodiment of the present invention and a wire harness 9b according to a second embodiment of the present invention, the temperature of at least the surface layer of the covering member is high (temperature to cause plastic deformation by thermoplasticity) immediately after heating and pressurization with the first lower mold 13a and the first upper mold 14a. Accordingly, in the molded covering member 92a, the held part and its peripheral part may be deformed. Further, upon removal, there is a possibility that the wire harness 9a according to the first embodiment of the present invention may be distorted by its self weight. Further, before the temperature of the covering member 92a removed from the first lower mold 13a is lowered to a temperature not to cause plastic deformation by thermoplasticity, there is a possibility of deformation due to contact with a foreign material or the like.

On the other hand, in the method for manufacturing the wire harness 9a according to the first embodiment of the present invention, it is possible to remove the molded covering member 92a, in the state where it is placed on the first lower holding tool 11a, from the first lower mold 13a. Further, it is possible to cool the predetermined part of the wire harness 9a according to the first embodiment of the present invention removed from the first lower mold 13a (the covering member 92a, the protective layer 923a and the predetermined part of the electric wires 91), in the state where they are placed on the first lower holding tool 11a.

In this manner, upon removal of the predetermined part of the wire harness 9a according to the first embodiment of the present invention from the first lower mold 13a, the first lower holding tool 11a is held and removed (the entire first lower holding tool 11a is removed). Accordingly, it is not necessary to directly touch the molded covering member 92a. Further, since the molded covering member 92a is accommodated in the first lower holding tool 11a it is possible to remove the molded covering member 92a, pressurized and maintained in the molded shape, from the first lower mold 13a. Further, it is possible to cool the molded covering member 92a in the state where it is placed on the first lower holding tool 11a. Accordingly, it is not necessary to touch the molded covering member 92a from removal from the first lower mold to the cooling down to a temperature not to cause plastic deformation by thermoplasticity (before the molded shape is settled), and it is possible to prevent contact between the covering member and a foreignmaterial or the like. Accordingly, it is possible to prevent unexpected deformation (or undesired deformation) in the molded covering member 92a.

Note that to prevent unexpected deformation in the molded covering member 92a, it may be arranged such that the first lower mold 13a and the first upper mold 14a are cooled and then removed. However, in this arrangement, since time for cooling the first lower mold 13a and the first upper mold 14a is required, time required for manufacturing the wire harness 9a according to the first embodiment of the present invention is prolonged. Further, since it is necessary to heat and cool the first lower mold 13a and the first upper mold 14a upon each pressurization and molding, there are problems as described above.

Further, in the method for manufacturing the wire harness 9a according to the first embodiment of the present invention, the entire part of the first material 801 and the second material 802 accommodated in the first lower holding tool 11a becomes the covering member. Accordingly, when the covering member 92a has been molded, an operation to remove unnecessary parts (so-called trimming) is unnecessary. Accordingly, it is possible to reduce the number of steps (or prevent increment in the number of steps). Further, it is possible to eliminate waste part of the first material 801 and the second material 802.

On the other hand, when the first upper holding tool 12a is used, the following advantages can be obtained.

When the first material 801 and the second material 802 are heated and pressurized with first lower mold 13a and the first upper mold 14a then molded, and after the separation between the first lower mold 13a and the first upper mold 14a, the pressure applied to the molded covering member 92a disappears. Then, in some cases, the molded covering member 92a is deformed to restore the shape and size before molding (e.g., a phenomenon corresponding to spring back in plastic processing for metal or the like occurs in some cases) . Especially, since the temperature of the central part of the molded main body 921a of the covering member 92a upon pressurization is lower in comparison with that of the surface layer of the main body 921a and the extension part 922a, in some cases, the covering member has not been plastic-deformed but elastic-deformed. Accordingly, when the pressure applied from the first lower mold 13a and the first upper mold 14a is removed, the molded covering member 92a is deformed to restore the shape and the size of the first material 801 and the second material 802 before molding (to be enlarged) in some cases.

According to the method for manufacturing the wire harness 9a according to the first embodiment of the present invention, a compression force by the self weight of the first upper holding tool 12a is continuously applied to the molded covering member 92a until the temperature of the molded covering member 92a removed from the first lower mold 13a and the first upper mold 14a is cooled to a temperature not to cause plastic deformation by thermoplasticity. Accordingly, it is possible to prevent the molded covering member 92a from restoring the shape and the size of the first material 801 and the second material 802 before molding. Then, when the temperature of the molded covering member 92a is lowered to a temperature not to cause plastic deformation by thermoplasticity, the size and the shape of the covering member 92a are settled as the molded shape and not deformed. In this manner, it is possible to improve the accuracy of the shape and the size of the wire harness 9a according to the first embodiment of the present invention.

Further, after the pressurization, when the pressure is removed in the state where the temperature of the molded covering member 92a is high (the covering member has a temperature at which it is easily plastic-deformable by thermoplasticity), in some cases, a separating force or the like is applied to the extension part 922a of the covering member 92a by the force to restore the initial shape. There are possibilities of reduction of joint strength between the first material 801 and the second material 802 in the extension part 922a and separation between the first material 801 and the second material 802.

Accordingly, the self weight of the first upper holding tool 12a is continuously applied to the molded covering member 92a until the temperature is lowered to a temperature not to cause plastic deformation by thermoplasticity (when the first non-woven fabric is applied, to a temperature at least lower than the first temperature band) . With this arrangement, it is possible to improve the joint strength in the extension part 922a of the covering member 92a (or prevent reduction of joint strength). Otherwise, it is possible to prevent separation between the first material 801 and the second material 802.

Note that it is further infallibly prevent deformation of the molded covering member 92a by holding the first lower holding tool 11a and the first upper holding tool 12a with a clamp or the like.

Further, in the arrangement using the first upper holding tool 12a, after the pressurization of the first material 801 and the second material 802, upon separation between the first lower mold 13a and the first upper mold 14a, it is possible to prevent attachment of the second material 802 to the first upper mold 14a.

That is, in the arrangement where the first non-woven fabric is applied to the first material 801 and the second material 802, while the first material 801 and the secondmaterial 802 are heated and pressurized, the binder material of the binder fiber is melted. On the other hand, in the arrangement where the second non-woven fabric or the foam formed of a thermoplastic material is applied to the first material 801 and the second material 802, while the first material 801 and the second material 802 are heated and pressurized, at least a part of the surface of the first material 801 and a part of the surface of the second material 802 are melted. Accordingly, without the first upper holding tool 12a (when the first upper mold 14a is directly in contact with the second material 802), upon separation between the first lower mold 13a and the first upper mold 14a, especially the second material 802 is adhered to the first upper mold 14a and the first material 801 is adhered to the first lower holding tool 11a, thus there is a possibility of application of a pull-off force or the like between the first material 801 and the second material 802. As a result, there are possibilities of separation between the first material 801 and the second material 802 and degradation of the joint strength.

On the other hand, in the arrangement using the first upper holding tool 12a, upon separation between the first lower mold 13a and the first upper mold 14a, a mutual pull-off force or the like is not applied between the first material 801 and the second material 802. Accordingly, it is possible to prevent separation between the first material 801 and the second material 802 and prevent degradation of joint strength.

Further, the covering member 92a, molded by heating and pressurization, is covered with the first upper holding tool 12a until it is cooled to a temperature not to cause plastic deformation by thermoplasticity. Accordingly, it is possible to prevent contact between the molded covering member 92a and a foreign material or the like during the cooling. Accordingly, it is possible to prevent undesired deformation in the molded covering member 92a.

Next, the wire harness according to the second embodiment of the present invention will be described. The wire harness 9b according to the second embodiment of the present invention has a similar structure to that of the wire harness 9a according to the first embodiment of the present invention except the structure of the covering member 92b. Regarding the constituent elements corresponding to those of the wire harness 9a according to the first embodiment of the present invention, the explanations thereof will be omitted in some cases.

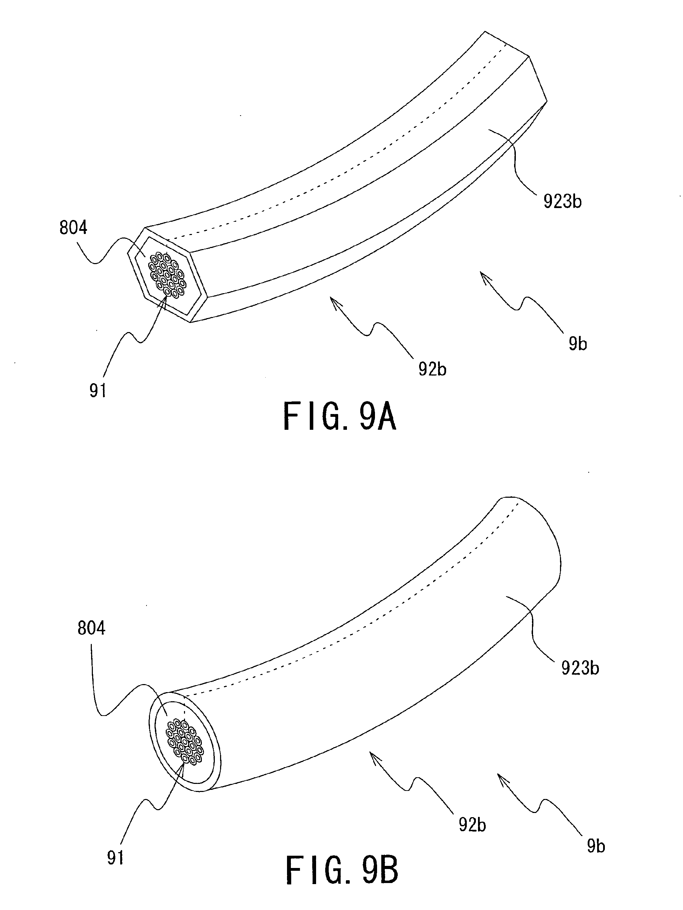

Figs. 9A and 9B are external perspective diagrams of the predetermined part (the position in which the covering member 92b is provided) of the wire harness 9b according to the second embodiment of the present invention. Fig. 9A shows a structure where the covering member 92b has an approximately hexagonal cross-sectional shape. Fig. 9B shows a structure where the covering member 92b has an approximately circular cross-sectional shape.

The covering member 92b of the wire harness 9b according to the second embodiment of the present invention has a similar structure to that of the main body 921a of the covering member 92a of the wire harness 9a according to the first embodiment of the present invention. Note that the covering member 92b of the wire harness 9b according to the second embodiment of the present invention, unlike the covering member 92a of the wire harness 9a according to the first embodiment of the present invention, has no extension part.

Note that in Fig. 9A, the covering member 92b has an approximately hexagonal cross-sectional shape, and Fig. 9B, the covering member 92b has an approximately circular cross-sectional shape; however, they are examples and the cross-sectional shape of the covering member 92b is not limited.

The covering member 92b of the wire harness 9b according to the second embodiment of the present invention is formed of a single raw material. In Figs. 9A and 9B, a broken line along the cross section of the covering member 92b schematically indicates a joint surface of the material. For the sake of convenience of explanation, this raw material will be referred to as a "third material 804". As the third material 804, the same material as that of the first material 801 and the second material 802 is applicable. That is, as the third material 804, the first non-woven fabric, second non-woven fabric or the foam formed of a thermoplastic material is applicable.

As shown in Figs. 9A and 9B, a protective layer 923b is provided on approximately the entire surface of the covering member 92b of the wire harness 9b according to the second embodiment of the present invention. The protective layer 923b on the covering member 92b of the wire harness 9b according to the second embodiment of the present invention has a similar structure to that of the protective layer 923a on the covering member 92a of the wire harness 9a according to the first embodiment of the present invention. The wire harness 9b according to the second embodiment of the present invention has similar advantages to those obtained with the wire harness 9a according to the first embodiment of the present invention.

Next, the tools and the like used in the method for manufacturing the wire harness 9b according to the second embodiment of the present invention will be described. Note that regarding the tools corresponding to those used in the method for manufacturing the wire harness 9a according to the first embodiment of the present invention, the explanations will be omitted in some cases.

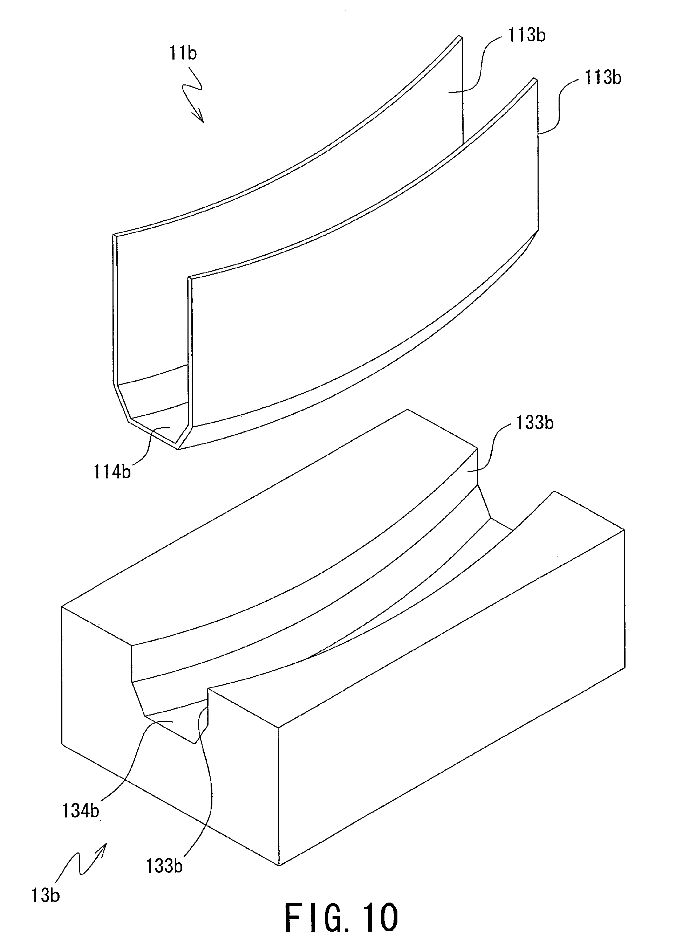

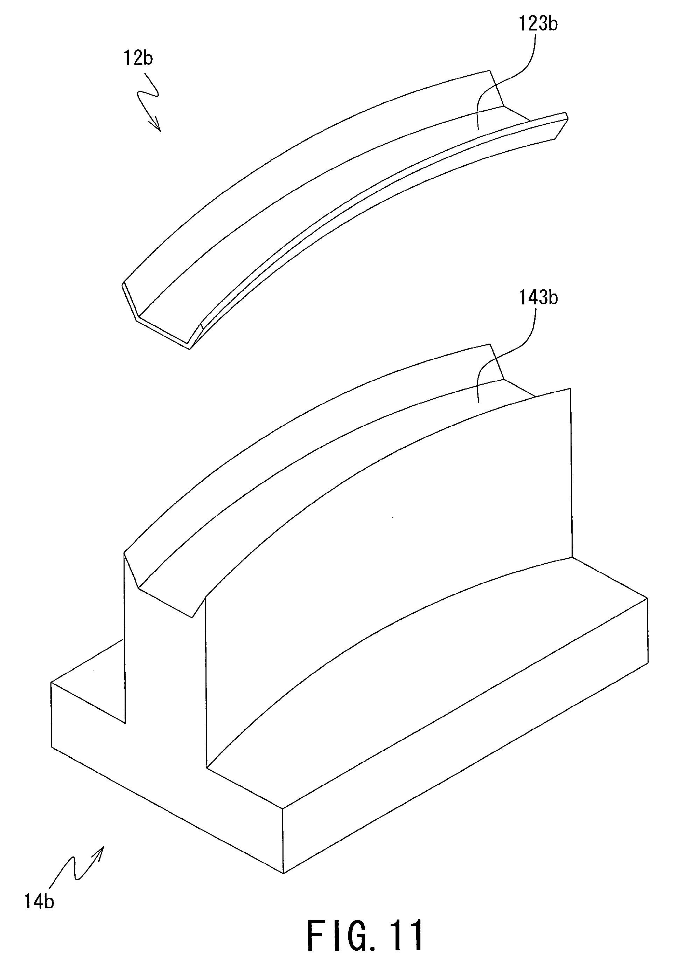

In the method for manufacturing the wire harness 9b according to the second embodiment of the present invention, a second lower holding tool 11b, a second upper holding tool 12b, a second molding die having a pair of second lower mold 13b and second upper mold 14b, and the pressing machine are used. Fig. 10 is an external perspective diagram schematically showing structures of the second lower holding tool 11b and the second lower mold 13b. Fig. 11 is an external perspective diagram schematically showing structures of the second upper holding tool 12b and the second upper mold 14b.

In the second lower holding tool 11b and the second lower mold 13b, the upper side in Fig. 10 faces the second upper holding tool 12b and the second upper mold 14b. In the second upper holding tool 12b and the second upper mold 14b, the upper side in Fig. 11 faces the second lower holding tool 11b and the second lower mold 13b. Hereinbelow, for the sake of convenience of explanation, in the second lower holding tool 11b and the second lower mold 13b, the side facing the second upper holding tool 12b and the second upper mold 14b will be referred to as the "upper side". In the second upper holding tool 12b and the second upper mold 14b, the side facing the second lower holding tool 11b and the second lower mold 13b will be referred to as the "lower side". In Fig. 10, the upper side in the figure corresponds to the upper side of the second lower holding tool 11b and the second lower mold 13b. In Fig. 11, the upper side in the figure corresponds to the lower side of the second upper holding tool 12b and the second upper mold 14b.

The second upper holding tool 12b and the second lower holding tool 11b are tools having a function of pressurizing the third material 804 to mold it into predetermined size and shape (the size and the shape of the covering member 92b) and a function of maintaining the shape of the manufactured wire harness 9b according to the second embodiment of the present invention (especially the molded covering member 92b) (in other words, preventing undesired deformation) in the process of molding the covering member 92b of the wire harness 9b according to the second embodiment of the present invention.

The second lower holding tool 11b has a pressure member 114b and side walls 113b.

The pressure member 114b of the second lower holding tool 11b is a part to pressurize and mold the covering member 92b. The pressure member 114b of the second lower holding tool 11b has similar function and structure to those of the first pressure member 111a of the first lower holding tool 11a.

The side walls 113b have a function to hold the third material 804 before pressurization of the third material 804 and in the process of pressurization. The side wall 113b which is a plate-type or fold-type member is formed along the outer edge of the pressure member 114b of the second lower holding tool 11b. That is, the two side walls 113b face each other, away from each other by a predetermined distance, and holding the pressure member 114b therebetween. The height of the side walls 113b is set so as to prevent protrusion of the third material 804 from the upper side of the two side walls 114b, in a state where the predetermined part of the electric wires 91 and the third material 804 are accommodated between the both side walls 113b.

In this manner, the second lower holding tool 11b as a whole has a bar-type structure having an approximately "U" cross-sectional shape.

The shape of the lower side of the second lower holding tool 11b is not particularly limited. For example, when the second lower holding tool 11b is formed of a metal plate or the like and manufactured by sheet metal working or the like, a convex member corresponding to the pressure member 114b formed on the upper side is formed on the lower side of the second lower holding tool 11b.

The second upper holding tool 12b has a pressure member 123b. The structure and the function of the pressure member 123b of the second upper holding tool 12b are similar to those of the first pressure member 121a of the first upper holding tool 12a. The shape of the upper side of the second upper holding tool 12b is not particularly limited. When the second upper holding tool 12b is formed of a metal plate or the like and manufactured by sheet metal working or the like, a convex member corresponding to the pressure member 123b formed on the lower side is formed on the upper side of the second upper holding tool 12b.

The second upper holding tool 12b has a size to be easily inserted in/removed from a region between the both side walls 113b of the second lower holding tool 11b. That is, the width of the second upper holding tool 12b is set to a size approximately the same as or slightly smaller than the interval between the both side walls 113b of the second lower holding tool 11b. Further, the axial shape of the pressure member 114b of the second lower holding tool 11b and that of the pressure member 123b of the second upper holding tool 12b are approximately the same. When the second upper holding tool 12b is inserted between the side walls 113b of the second lower holding tool 11b, the pressure member 123b of the second upper holding tool 12b and the pressure member 114b of the second lower holding tool 11b face each other.

The second lower holding tool 11b and the second upper holding tool 12b are formed of a material having high thermal conductivity and a small thermal storage amount (i.e., to quickly follow ambient temperature change). Especially, they have a structure to quickly transmit heat in a vertical direction. For example, it is preferable that the pressure member 114b and the side walls 113b of the second lower holding tool 11b are integrally formed from a single metal plate by sheet metal working or the like. Similarly, it is preferable that the second upper holding tool 12b is integrally formed from a single metal plate by sheet metal working or the like.

The second lower mold 13b heats and pressurizes the third material 804, together with the second upper holding tool 12b and the second upper mold 14b, via the second lower holding tool 11b, to mold the covering member 92b. That is, the third material 804 is plastic-deformed by pressurization thus molded to predetermined shape and size (the size and the shape of the covering member 92b).

A groove-shaped concave member in which the entire part or a part of the lower side of the second lower holding tool 11b can be fitted is formed on the upper side of the second lower mold 13b. The groove-shaped concave member has a pressure member 134b and a support member 133b.

The pressure member 134b of the second lower mold 13b accommodates the lower side of the pressure member 114b of the second lower holding tool 11b in a state where the second lower holding tool 11b is placed on the second lower mold 13b. The pressure member 134b of the second lower mold 13b corresponds to the lower surface of the pressure member 114b of the second lower holding tool 11b (the surface of the convex member in contact with the pressure member 114b). Accordingly, the pressure member 134b of the second lower mold 13b has size and shape approximately the same as those of the lower side of the pressure member 114b of the second lower holding tool 11**b**. For example, as shown in Fig. 11, when the lower side of the pressure member 114b of the second lower holding tool 11b is a protrusion having an approximately trapezoidal cross-sectional shape, the pressure member 134b of the second lower mold 13b is formed to have an approximately trapezoidal cross-sectional shape. Further, when the lower side of the pressure member 114b of the second lower holding tool 11b is a protrusion having an approximately semicircular cross-sectional shape, the pressure member 134b of the second lower mold 13b is formed to a groove having an approximately semicircular cross-sectional shape.

The support member 134b of the second lower mold 13b has a function to support the second lower holding tool 11b such that the second lower holding tool 11b, placed on the upper side of the second lower mold 13b, is not easily moved, easily fallen or easily removed from the upper side of the second lower mold 13b. More particularly, as shown in Fig. 10, the support member 133b is formed on the both outer sides of the pressure member 134b, as plane-type members facing each other.

The interval between the support members 133b is set to be removably engaged with the entire part or a part of the lower side of the second lower holding tool 11b. For example, the interval is set to be approximately the same as or slightly larger than that between the outer surfaces of the side walls 113b of the second lower holding tool 11b.

The height of the support member 133b (the size in the vertical direction) is not particularly limited. It is set to any size as long as it is possible to prevent the second lower holding tool 11b, placed on the upper side of the second lower mold 13b, from being easily moved, easily fallen or easily removed from the upper side of the second lower mold 13b. The support member 133b of the second lower mold 13b shown in Fig. 10 has a height lower than that of the side walls 113b of the second lower holding tool 11b. With this height, it is possible to support a part of the lower side of the second lower holding tool 11b. Note that the height of the support member 133b may be approximately the same as or greater than that of the side walls 113b of the second lower holding tool 11b. With this height, it is possible to fit the entire second lower holding tool 11b in the second lower mold 13b.

In this manner, the upper side of the second lower mold 13b have a part formed in size and shape following the shape and the size of the lower side of the second lower holding tool 11b. The second lower holding tool 11b can be placed on (fitted in) this part. When the second lower holding tool is placed, approximately the entire lower surface of the second lower holding tool 11b (the lower surface of the pressure member 114b) is in contact with the second lower mold 13b.

The second upper mold 14b is a tool to heat and pressurize the third material 804, together with second lower mold 13b and the second lower holding tool 11b, via the second upper holding tool 12b.

The entire part or a part of the lower side of the second upper mold 14b has a structure to be inserted in/removed from space between the both side walls 113b of the second lower holding tool 11b. This structure is the same as that of the first upper mold 14a.

The lower side of the second upper mold 14b has size and shape in which the upper side of the second upper holding tool 12b can be fitted. More particularly, a pressure member 143b is formed on the lower side of the second upper mold 14b. The pressure member 143b of the second upper mold 14b, in a state where the second upper holding tool 12b is fitted in the lower side of the second upper mold 14b, accommodates the upper side of the pressure member 123b of the second upper holding tool 12b. The pressure member 143b of the second upper mold 14b is in contact with the upper surface of the pressure member 123b of the second upper holding tool 12b (the surface of the convex member corresponding to the pressure member 123b of the second upper holding tool 12b). Accordingly, the shape and the size of the pressure member 143b of the second upper mold 14b are approximately the same as the shape and the size of the upper side of the pressure member 123b of the second upper holding tool 12b.

In this manner, the lower surface of the second upper mold 14b is formed in size and shape following the size and the shape of the upper side of second upper holding tool 12b. Accordingly, the upper side of the second upper holding tool 12b can be removably fitted in the lower side of the second upper mold 14b. When the second upper holding tool 12b is fitted, approximately the entire upper surface of the second upper holding tool 12b (the surface of the upper side of the pressure member 123b) is in contact with the lower surface of the second upper mold 14b.

The second lower mold 13b and the second upper mold 14b respectively have a temperature control unit (not shown). With the temperature control unit, it is possible to maintain the pressure members 134b and 143b of the second lower mold 13b and the second upper mold 14b at the "predetermined temperature". As the temperature control unit, the same structure as that in the first lower mold 13a and the second lower mold 14a is applicable. The "predetermined temperature" is the same as the "predetermined temperature" in the method for manufacturing the wire harness 9a according to the first embodiment of the present invention.

When the second lower holding tool 11b is placed on the upper side of the second lower mold 13b, the second upper holding tool 12b is fitted in the lower side of the second upper mold 14b, and in that state, when the second lower mold 13b and the second upper mold 14b are brought closer to each other (the second lower holding tool 11b and the second upper holding tool 12b are brought closer to each other), the entire part or a part of the lower side of the second upper mold 14b and the second upper holding tool 12b are fitted between the both side walls 113b of the second lower holding tool 11b placed on the second lower mold 13b. The pressure member 114b of the second lower holding tool 11b and the pressure member 123b of the second upper holding tool 12b face each other with a predetermined interval therebetween.

When the second lower mold 13b and the second upper mold 14b are closer with a predetermined distance therebetween, the shape and the size of space surrounded by the pressure member 114b and the both side walls 113b of the second lower holding tool 11b, and the pressure member 123b of the second upper holding tool 12b are the shape and the size of the covering member 92b provided in the predetermined part of the wire harness 9b according to the second embodiment of the present invention.

Next, processes of the method for manufacturing the wire harness 9b according to the second embodiment of the present invention will be described. Note that regarding the processes corresponding to those in the method for manufacturing the wire harness 9a according to the first embodiment of the present invention, the explanations will be omitted in some cases.

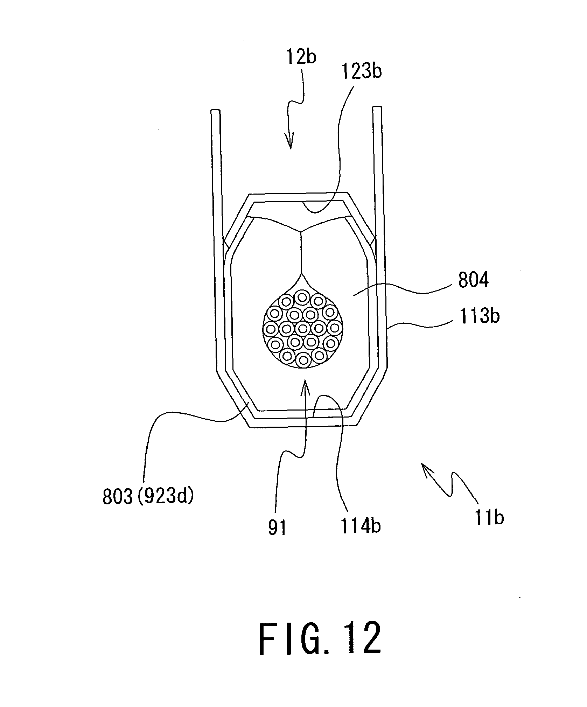

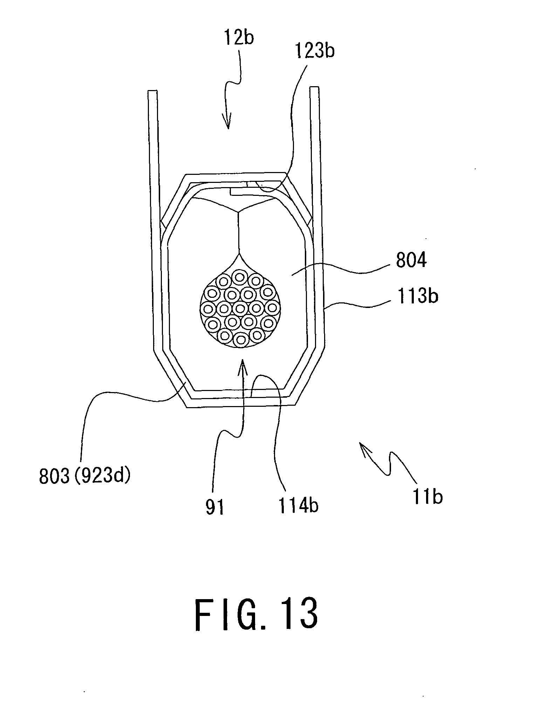

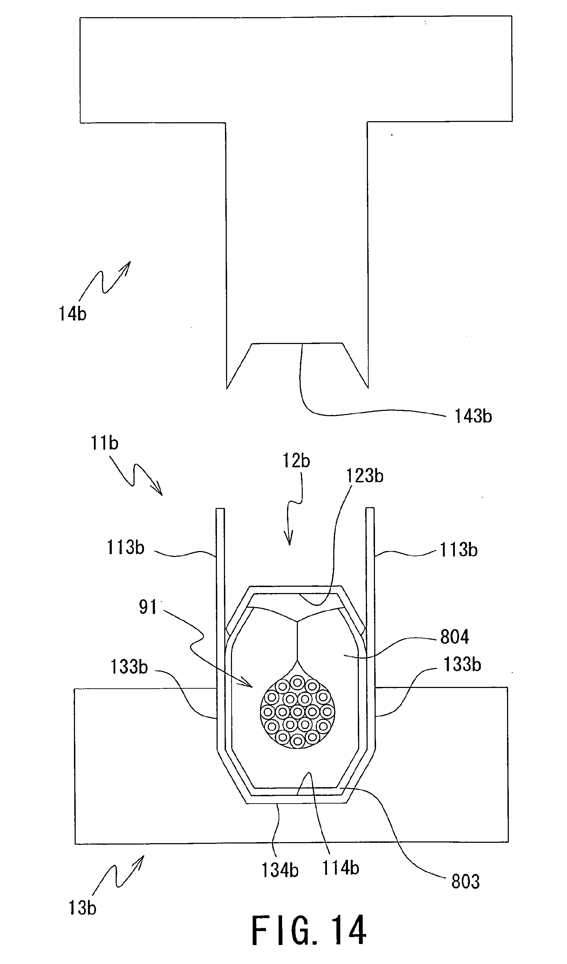

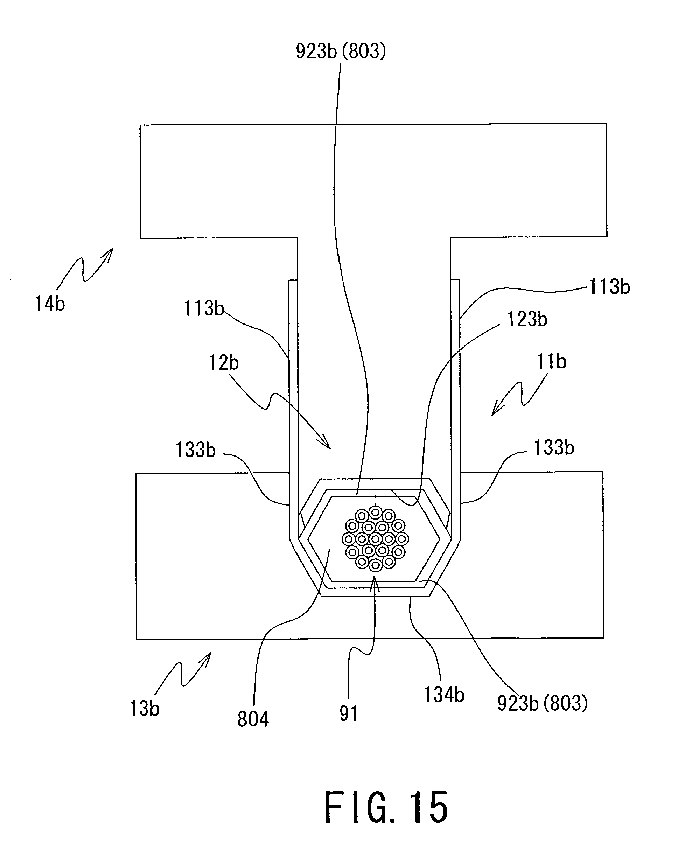

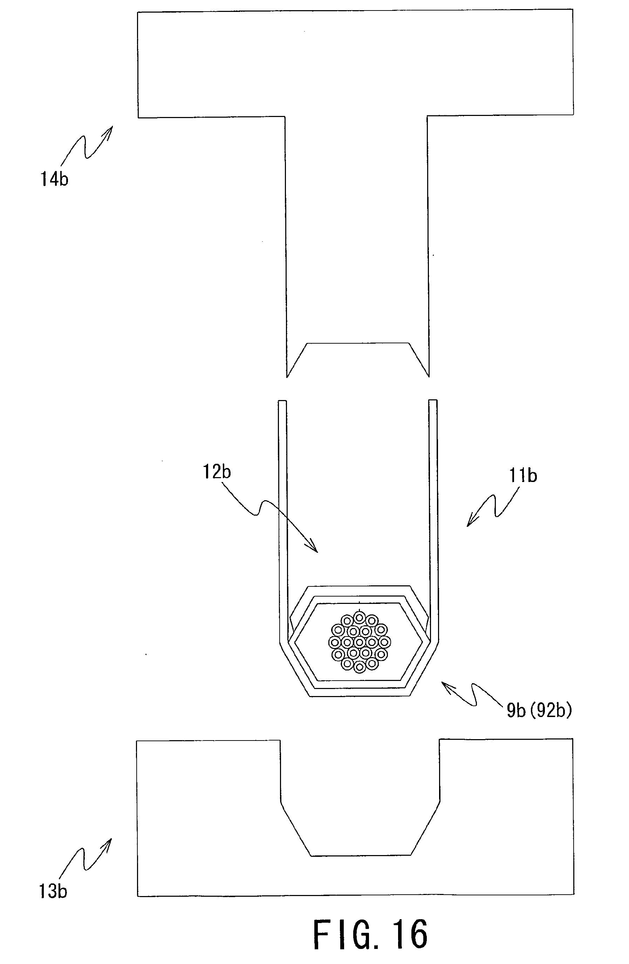

Figs. 12 to 16 are cross-sectional diagrams schematically showing the predetermined processes of the method for manufacturing the wire harness according to the second embodiment of the present invention. More particularly, Fig. 12 shows a state where the third material 804 (the third material 804 is integrally provided with the protective layer material 803) and the predetermined part of the electric wires 91 are accommodated in the second lower holding tool 11b, and the second upper holding tool 12b is placed thereon. Fig. 13 shows a state where the third material 804, the predetermined part of the electric wires 91 and the protective layer material 803 are accommodated in the second lower holding tool 11b, and the second upper holding tool 12b is placed thereon. Fig. 14 shows a state where the first lower holding tool 11b, accommodating the third material 804, the predetermined part of the electric wires 91 and the protective layer material 803, on which the second upper holding tool 12b is placed, is placed on the second lower mold 13b. Fig. 15 shows a state where the third material 804 is heated and pressurized with the second lower mold 13b and the second upper mold 14b. Fig. 16 shows a state where, the predetermined part of the manufactured wire harness 9b (the molded covering member 92b) according to the second embodiment of the present invention, placed on the second lower holding tool 11b, is removed from the second lower mold 13b and the second upper mold 14b.

As the third material 804, the protective layer material 803 (the protective layer 923b) may be previously provided in one surface, or the third material 804 and the protective layer material 803 may be separate members.

When the third material 804 provided with the protective layer material 803 is applied, as shown in Fig. 12, the third material 804 is bended so as to hold (or wrap) the predetermined part of the electric wires 91 (bended in e.g. approximately "U" shape or approximately "C" shape), and in that state, accommodated between the both side walls 113b of the second lower holding tool 11b. Then the second upper holding tool 12b is placed on the upper side. Note that as shown in Fig. 14, one of the surfaces of the third material 804, on which the protective layer material 803 is not provided, is directed toward the predetermined part of the electric wires 91, and a surface on which the protective layer material 803 is provided is directed outward.

As shown in Fig. 13, when the third material 804 and the protective layer material 803 are separate members, in a state where the third material 804 is bended so as to wrap (or hold) the predetermined part of the electric wires 91 (bended in e.g. approximately "U" shape or approximately "C" shape), and the third material 804 is provided on the further outer side, the third material 804 is accommodated between the both side walls 113b of the second lower holding tool 11b. In other words, in the state where the predetermined part of the electric wires 91 is held with (or wrapped in) the protective layer material 803 and they are further wrapped in the protective layer material 803, they are accommodated between the both side walls 113b of the second lower holding tool 11b. Then second upper holding tool 12b is placed thereon.

Note that the procedure of arrangement of the third material 804 and the protective layer material 803 is not particularly limited. It may be arranged such that the predetermined part of the electric wires 91 is held with (or wrapped in) the third material 804, further the third material 804 is wrapped in the protective layer material 803, and they are accommodated between the both side walls 113b of the first lower holding tool 11a. Further, it may be arranged such that the protective layer material 803 is previously provided on the first lower holding tool 11a, then the third material 804, holding (or wrapping) the predetermined part of the electric wires 91, is accommodated between the both side walls 113b of the first lower holding tool 11a.

The thickness of the third material 804 prior to molding to the covering member 92b is greater than that of the molded covering member 92b (the distance from the surface to the predetermined part of the electric wires 91). Further, as the width of the third material 804 prior to the molding to the covering member 92b, a width to closely wrap the predetermined part of the electric wires 91 is applicable. Further, the size of the third material 804 is set so as to, in a state where the third material 804 is bended (or rolled) to hold (or wrap) the predetermined part of the electric wires 91, prevent protrusion (or exposure) of the predetermined part of the electric wires 91 from the third material 804.

The third material 804, in the state where it is accommodated inside the both side walls 113b of the second lower holding tool 11b, is elastic-deformed in a compressed state. Then the third material 804, holding or wrapping the predetermined part of the electric wires 91 in the pressure member 114b of the second lower holding tool 11b and the side walls 113b, is maintained in that state.

Next, as shown in Fig. 14, the second lower holding tool 11b, accommodating the protective layer material 803, the third material 804, the predetermined part of the electric wires 91 and the second upper holding tool 12b, is placed on the upper side of the second lower mold 13b. That is, a part of the lower side of the second lower holding tool 11b is fitted in a "groove" (the support member 133b corresponds to the side surface of the groove, and the pressure member 134b, to the bottom surface of the groove) formed on the upper side of the second lower mold 13b. Accordingly, it is possible to prevent the second lower holding tool 11b, placed on the upper side of the second lower mold 13b, from being easily shifted, easily fallen or easily removed from the second lower mold 13b.

In this state, the lower surface of the pressure member 114b of the second lower holding tool 11b is in contact with the pressure member 134b of the second lower mold 13b. On the other hand, the entire part or a part of the lower side of the side walls 113b of the second lower holding tool 11b is in contact with and/or close to the support member 133b of the second lower mold 13b.

Note that the pressure member 134b of the second lower mold 13b and the pressure member 143b of the second upper mold 14b are maintained at the "predetermined temperature" with the temperature control unit.

Next, as shown in Fig. 15, the second lower mold 13b and the second upper mold 14b are brought closer to each other. To drive the second lower mold 13b and the second upper mold 14b, the pressing machine (not shown) is used. Then the distance between the pressure member 114b of the second lower holding tool 11b and the pressure member 123b of the second upper holding tool 12b is set to a predetermined distance. That is, the second lower mold 13b and the second upper mold 14b are brought closer to each other, and the shape and the size of space surrounded by the pressure member 114b of the second lower holding tool 11b and the pressure member 123b of the second upper holding tool 12b are changed to the shape and the size of the molded covering member 92b. Then the third material 804 is pressurized and heated. Then, this state is maintained (i.e., the heating and pressurization are continued) for the "predetermined period".

When the first non-woven fabric is applied to the third material 804, the "predetermined period" is a period in which the temperature of the surface layer of the third material 804 (a part in contact with the second lower holding tool 11b or the second upper holding tool 12b and its peripheral part) rises to the "predetermined temperature" while the temperature of the central part of the third material 804 (a part in contact with the predetermined part of the electric wires 91 and its peripheral part) does not rise to the "predetermined temperature". When the second non-woven fabric or the foam (non-woven fabric or foam which is formed of a thermoplastic material and which does not have a binder material) is applied to the third material 804, the "predetermined period" is a period in which the temperature of the surface layer of the third material 804 rises to the fusing point of the thermoplastic material while the temperature of the central part of the third material 804 does not rise to the fusing point.

When the third material 804 is heated and pressurized at the "predetermined temperature" for the "predetermined period", the covering member 923b is molded through the following process.

The third material 804 is pressurized with the pressure member 114b of the second lower holding tool 11b and the pressure member 123b of the second upper holding tool 12b, and is compression-deformed to a shape approximately the same as the shape of space between the pressure member 114b of the second lower holding tool 11b and the pressure member 123b of the second upper holding tool 12b. As a result, the third material 804 has the size and the shape of the covering member 923b.

Then the third material 804 is heated by heat emitted from the temperature control unit of the second lower mold and the second upper mold through the second lower holding tool and the second upper holding tool. Accordingly, the third material 804 is plastic-deformed by thermoplasticity. Note that in some cases, the central part (the part in contact with the predetermined part of the electric wires 91 and its peripheral part) is not plastic-deformed by thermoplasticity.

When the third material 804 is heated and pressurized, the density of the surface layer of the third material 804 is higher in comparison with the central part by the same process as that in the method for manufacturing the wire harness 9a according to the first embodiment of the present invention.

Further, in this process, the protective layer material 803 is attached to the surface of the third material 804. This process of attachment of the protective layer material 803 to the third material 804 is the same as that in the method for manufacturing the wire harness 9a according to the first embodiment of the present invention. With this process, the protective layer 923b is provided on the surface of the covering member 92.

Then, when the third material 804 is an approximately flat-plate type member and bended in approximately "U" shape or approximately "C" shape so as to wrap the predetermined part of the electric wires 91, the both ends of the third material 804 in the widthwise direction are welded. On the other hand, when the third material 804 is a bar-type member having a slit, inner surfaces of the slit are welded. Accordingly, the third material 804 is a cylindrical structure wrapping the predetermined part of the electric wires 91 inside.

More particularly, when the first non-woven fabric is applied to the third material 804, the base fiber and the binder material of the binder fiber of the first non-woven fabric is melted in a part of the third material 804 in contact with the second lower holding tool 11b or the second upper holding tool 12b and its peripheral part (i.e., the surface layer). The molten binder material permeates among the base fiber and the core fiber of the binder fiber, and spreads between surfaces in contact at the both ends in the widthwise direction or between the inner surfaces of the slit. Accordingly, in the surface layer of the third material 804, the surfaces in contact at the both ends in the widthwise direction or the inner surfaces of the slit are joined with the molten binder material.

On the other hand, when the second non-woven fabric or the foam formed of a thermoplastic resin material is applied to the third material 804, the thermoplastic material is melted in a part of the third material 804 in contact with the second lower holding tool 11b or the second upper holding tool 12b and its peripheral part (the surface layer of the third material 804). Accordingly, in the surface layer of the third material 804, the surfaces in contact at the both ends in the widthwise direction or the inner surfaces of the slit are joined (welded).

In this manner, with the third material 804, formed of any one of the first non-woven fabric, the second non-woven fabric and the foam, the both ends of the third material 804 in the widthwise direction or the inner surfaces of the slit are joined. Accordingly, the third material 804 has a cylindrical structure wrapping the predetermined part of the electric wires 91 (structure without an opening formed from the outer peripheral surface to the predetermined part of the electric wires 91 or the like).

Next, as shown in Fig. 16, when the predetermined period has elapsed, the second lower mold 13b and the second upper mold 14b are separated. Then the predetermined part of the wire harness 9b according to the second embodiment of the present invention (i.e., the molded covering member 92b and the predetermined part of the electric wires 91), in the state where they are held between the second lower holding tool 11b and the second upper holding tool 12b, removed from the second lower mold 13b. Then the predetermined part of the wire harness 9b according to the second embodiment of the present invention, in the state where it is placed on the second lower holding tool 11b, is cooled. The method of cooling is the same as that in the method for manufacturing the wire harness 9a according to the first embodiment of the present invention.

Through the above-described processes, the predetermined part of the wire harness 9b according to the second embodiment of the present invention is manufactured (the respective covering member 92b is molded). The structure of the molded covering member 92b is approximately the same as that of the main body 921a of the covering member 92a of the wire harness 9a according to the first embodiment of the present invention.

Then, the protective layer 923b, provided in the covering member 92b of the wire harness 9b according to the second embodiment of the present invention, has the same structure and the same advantages of those of the protective layer 923a provided in the covering member 92a of the wire harness 9a according to the first embodiment of the present invention.

The method for manufacturing the wire harness 9b according to the second embodiment of the present invention has the same advantages as those obtained by the method for manufacturing the wire harness 9a according to the first embodiment of the present invention.

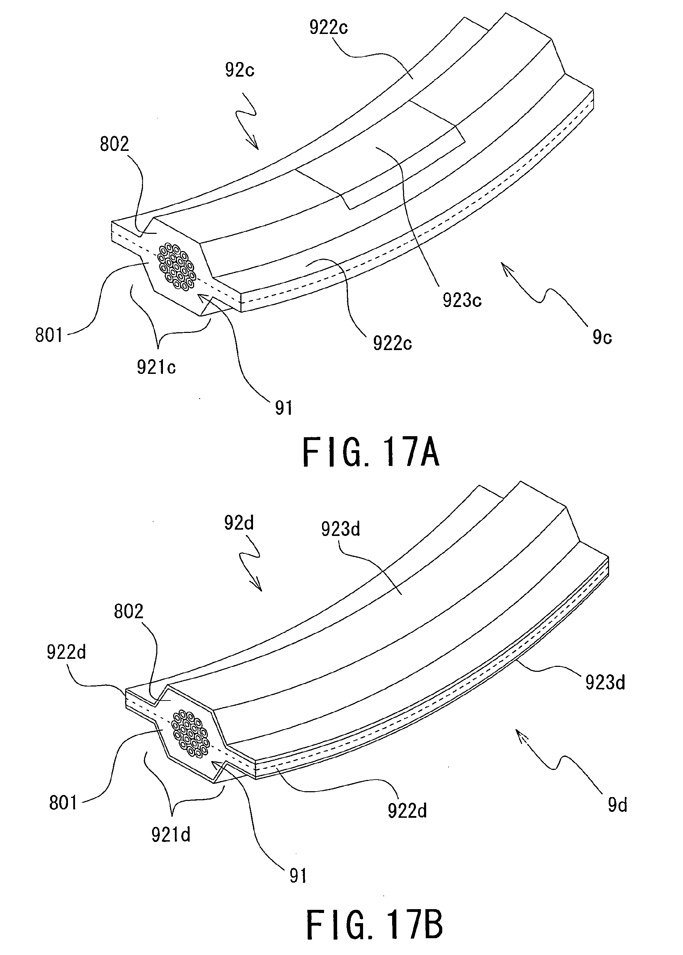

Next, a wire harness 9c according to a third embodiment of the present invention and a wire harness 9d according to a fourth embodiment of the present invention will be described. Fig. 17A is an external perspective diagram of the predetermined part (the position in which a covering member 92c is provided) of the wire harness 9c according to the third embodiment of the present invention. Fig. 17B is an external perspective diagram of the predetermined part (the position in which a covering member 92d is provided) of the wire harness 9d according to the fourth embodiment of the present invention.

The covering member 92c provided in the wire harness 9c according to the third embodiment of the present invention and the covering member 92d provided in the wire harness 9d according to the fourth embodiment of the present invention have main bodies 921c and 921d, extension parts 922c and 922d, and protective layers 923c and 923d. The main bodies 921c and 921d and the extension parts 922c and 922d are formed of the two materials 801 and 802. As shown in Fig. 17A, in the wire harness 9c according to the third embodiment of the present invention, the protective layer 923c is formed on the surface of the predetermined part of the covering member 92c. On the other hand, as shown in Fig 17B, in the wire harness 9d according to the fourth embodiment of the present invention, the protective layer 923d is formed on approximately the entire surface of the covering member 92d.

For the sake of convenience of explanation, one of the two materials of the main bodies 921c and 921d and the extension parts 922c and 922d of the covering members 92c and 92d will be referred to as the "first material 801", and the other material, as the "second material 802". In Figs. 17A and 17B, a broken line along the cross sections of the covering members 92c and 92d schematically indicates a joint surface (boundary) between the first material 801 and the second material 802.

The main bodies 921c and 921d of the covering members 92c and 92d cover the predetermined part of the electric wires 91 (predetermined part of the respective trunk line or branch line of the respective wire harness 9c according to the third embodiment of the present invention and the wire harness 9d according to the fourth embodiment of the present invention) (in other words, the part where the predetermined part of the electric wires 91 is embedded). The main bodies 921c and 921d respectively have a predetermined axial shape, a predetermined cross-sectional shape and a predetermined size (note that here and hereafter, the "cross section" means a cross section cut along a direction orthogonal to the axial direction of the electric wires 91).

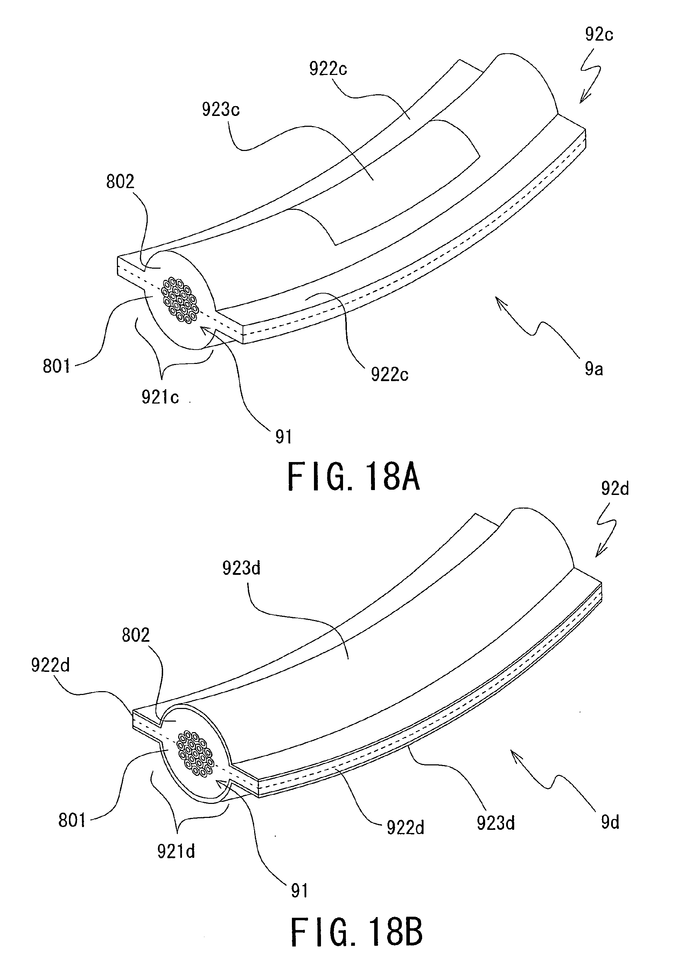

In Figs. 17A and 17B, the main bodies 921c and 921d of the covering members 92c and 92d have an approximately hexagonal cross-sectional shape. However, the cross-sectional shape is not limited to this shape. Fig. 18A is an external perspective diagram of the predetermined part of the wire harness 9c according to the third embodiment of the present invention in which the main body 921c of the covering member 92c has an approximately circular cross-sectional shape. Fig. 18B is an external perspective diagram of the predetermined part of the wire harness 9d according to the fourth embodiment in which the main body 921d of the covering member 92d has an approximately circular cross-sectional shape. As shown in Figs. 18A and 18B, the main bodies 921c and 921d of the covering members 92c and 92d may have an approximately circular cross-sectional shape.

In this manner, the shape and the size of the main bodies 921c and 921d of the covering members 92c and 92d are not particularly limited. The axial shape, the cross-sectional shape and the size of the main bodies 921c and 921d of the covering members 92c and 92d are set in correspondence with function and performance required of the covering members 921c and 921d, and shape, size and the like of space in which the respective parts of the wire harness 9c according to the third embodiment of the present invention and the wire harness 9d according to the fourth embodiment of the present invention are provided.

The extension parts 922c and 922d of the covering members 92c and 92d are protruded outward from the outer peripheries of the main bodies 921c and 921d. The extension parts 922c and 922d have an approximately flat plate or approximately fold structure extending along the axial direction of the main bodies 921c and 921d. Then, in the extension parts 922c and 922d, the first material 801 and the second material 802 are joined and integrated. The thickness of the extension parts 922c and 922d (the direction in which the first material 801 and the second material 802 are overlaid) is smaller than that of the main bodies 921c and 921d. Especially, it is preferable that the respective thicknesses of the first material 801 and the second material 802 in the extension parts 922c and 922d (i.e., the distances from the respective surfaces to the joint surface in which the materials are joined) are smaller than the shortest one of distances from the outer peripheral surfaces of the main bodies 921c and 921d to the electric wires 91 (especially, the distance to the electric wire 91 closest to the outer peripheral surface).

As the first material 801 and the second material 802, a material which has thermoplasticity and which is elastic-deformable (especially, a material which is elastic-deformable in a compressed state) is applied. More particularly, non-woven fabric or foam formed of a thermoplastic material is applicable.

As the non-woven fabric, fabric having an intertwined structure of base fiber and binder fiber is applicable. For the sake of convenience of explanation, the non-woven fabric having this structure will be referred to as "first non-woven fabric". The base fiber is formed of a thermoplastic resin material having a predetermined fusing point. The binder fiber is formed of a thermoplastic resin material having a predetermined fusing point. The binder fiber has a structure where a binder material layer is formed on the outer periphery of core fiber. The core fiber of the binder fiber is formed of the same thermoplastic resin material as that of the base fiber. The binder material layer of the binder fiber is formed of a thermoplastic resin material having a fusing point lower than that of the base fiber and the core fiber.

When the first non-woven fabric is heated to a temperature equal to or higher than a predetermined temperature, it is plastic-deformable by thermoplasticity of the base fiber and the binder fiber. Especially, when the first non-woven fabric is heated to a temperature within a temperature band higher than the fusing point of the binder material of the binder fiber and lower than the fusing point of the base fiber and the core fiber of the binder fiber, although the binder fiber is melted, the base fiber and the core fiber of the binder fiber are plastic-deformable by thermoplasticity while their solid state (solid state) is maintained. Then the molten binder material of the binder fiber permeates among the base fiber and the core fiber of the binder fiber. For the sake of convenience of explanation, this temperature band will be referred to as a "first temperature band".

Accordingly, the first non-woven fabric is heated to a temperature within the first temperature band, and is molded into a predetermined shape at a temperature within the first temperature band. Thereafter, when the first non-woven fabric is cooled down to a temperature which is lower than the first temperature band and at which the base fiber and the binder fiber are not plastic-deformed by thermoplasticity, the molded predetermined shape is maintained. Further, in the molded first non-woven fabric, the binder material which has been melted then solidified connects the base fiber and the core fiber of the binder fiber. Then the first non-woven fabric is harder in comparison with its state before the heating.

As the first non-woven fabric, non-woven fabric having a structure where the base fiber and the core fiber of the binder fiber are formed of PET (polyethylene terephthalate) and the layer of the binder material of the binder fiber is formed of PET-PEI (polyethylene isophthalate) copolymer resin is applicable. The fusing point of the base fiber and the core fiber of the binder fiber of the first non-woven fabric (i.e. the fusing point of PET) is about 250 °C. The fusing point of the binder material is 110 to 150 °C. Accordingly, the first temperature band of the first non-woven fabric having this structure is 110 to 250 °C.

Further, non-woven fabric which is formed of a thermoplastic resin material and which does not have binder fiber is applicable. For the sake of convenience of explanation, this non-woven fabric will be referred to as the "second non-woven fabric". Further, a foam formed of a thermoplastic material is applicable. For example, non-woven fabric or a foam formed of PET is applicable.

The surface layer of the respective main bodies 921c and 921d of the covering members 92c and 92d (the outer surface and its peripheral part) is harder in comparison with the central part (a part in contact with the predetermined part of the electric wires 91 and its peripheral part). In other words, the hardness of the main bodies 921c and 921d of the covering members 92c and 92d is increased from the central part toward the surface layer. Further, the surface layer of the respective main bodies 921c and 921d of the covering members 92c and 92d is harder in comparison with the first material 801 and the second material 802 before molding to the covering members 92c and 92d.

The central part of the main bodies 921c and 921d of the covering members 92c and 92d is softer in comparison with the surface layer. More particularly, the central part of the main bodies 921c and 921d of the covering members 92c and 92d has the physical property of the first material 801 and the second material 802 before the molding to the covering members 92c and 92d. Accordingly, the central part of the main bodies 921c and 921d of the covering members 92c and 92d, having elasticity, is in contact with the predetermined part of the electric wires 81.

As shown in Figs. 17A and 18A, the protective layer 923c is formed in a predetermined part of the surface of the covering member 92c of the wire harness 9c according to the third embodiment of the present invention. Further, as shown in Figs. 17B and 18B, the protective layer 923d is formed on approximately the entire surface of the covering member 92d of the wire harness 9d according to the fourth embodiment of the present invention. Note that in Figs. 17B and 18B, in the covering member 92d, the protective layer 923d is not formed on an end surface in the axial direction and an end surface of the extension part 922d. However, it may be arranged such that the protective layer 923d is formed on these surfaces.

The protective layers 923c and 923d have a function to protect the covering members 92c and 92d. Especially, the protective layers 923c and 923d have a function to prevent direct contact between the main bodies 921c and 921d of the covering members 92c and 92d and other members thus prevent abrasion of the covering members 92c and 92d. For this purpose, the protective layers 923c and 923d are formed of a material having abrasion resistance higher than that of the covering members 92c and 92d (a material having abrasion resistance higher than that of the first material 801 and the second material 802). Note that the "abrasion resistance" means a property that a material is hardly abraded due to friction upon contact with another material.

Further, it is preferable that the protective layer 923d provided on the covering member 92d of the wire harness 9d according to the fourth embodiment of the present invention is formed of a material having a water proofing property or a water repellent property (a material which prevents permeation or transmission of liquid such as water).

Note that the protective layers 923c and 923d (the protective layer material 803) are formed of a material having thermoplasticity. When the first non-woven fabric is applied to the first material 801 and the second material 802, a material having a fusing point higher than that of the binder material of the binder fiber of the first non-woven fabric is applied to the protective layers 923c and 923d. For example, as the material of the protective layers 923c and 923d (the protective layer material 803), a mesh-type or sheet-type member formed of a polypropylene (PP) (fusing point is about 120 °C) is applicable. When the second non-woven fabric or foam formed of a thermoplastic material is applied to the first material 801 and the second material 802, a material having a fusing point higher than that of this thermoplastic material is applied. For example, a mesh-type or sheet-type member formed of PET (polyethylene terephthalate) is applicable.

The material quality, thickness and the like of the protective layers 923c and 923d are arbitrarily set in correspondence with degree of protection of the covering members 92c and 92d, and not particularly limited. Further, the size, shape, molded position and range of the protective layer 923c of the covering member 92c of the wire harness 9c according to the third embodiment of the present invention are arbitrarily set in correspondence with specification and the like of the wire harness 9c according to the third embodiment of the present invention, and not particularly limited. For example, in a state where the wire harness 9c according to the third embodiment of the present invention is provided, the protective layer 923c of the covering member 92c is provided in a part actually in contact with or having a possibility of contact with another member (a part to easily cause friction or having a possibility of friction) or the like.

The wire harness 9c according to the third embodiment of the present invention and the wire harness 9d according to the fourth embodiment of the present invention have the following advantages.

The surface layer of the respective covering members 92c and 92d provided in the wire harness 9c according to the third embodiment of the present invention and the wire harness 9d according to the fourth embodiment of the present invention is harder in comparison with the central part. Accordingly, the hard part has at least one of a function as a protector to protect the predetermined part of the electric wires 91 and a function to maintain the predetermined part of the electric wires 91 in a predetermined shape.

Accordingly, the covering members 92c and 92d, provided in a part to be protected in the wire harness 9c according to the third embodiment of the present invention and the wire harness 9d according to the fourth embodiment of the present invention, respectively function as a protector to protect the predetermined part of the electric wires 91. Further, the covering members 92c and 92d, provided in a part to be maintained in the predetermined shape in the wire harness 9c according to the third embodiment of the present invention and in the wire harness 9d according to the fourth embodiment of the present invention, respectively maintain the predetermined part in the predetermined shape. Further, the covering members 92c and 92d, provided in a part to be protected and to be maintained in the predetermined shape in the wire harness 9c according to the third embodiment of the present invention and in the wire harness 9d according to the fourth embodiment of the present invention, respectively function as a protector and maintain the predetermined part of the wire harness 9c according to the third embodiment of the present invention and the wire harness 9d according to the fourth embodiment of the present invention in the predetermined shape.

On the other hand, the central part of the respective covering members 92c and 92d has the physical property of the first material 801 and the second material 802 before the molding and is softer in comparison with the surface layer. The predetermined part of the electric wires 91 is wrapped in the covering members 92c and 92d (embedded between the first material 801 and the second material 802), and the predetermined part of the electric wires 91 is elastically in contact with the covering members 92c and 92d. Accordingly, the covering members 92c and 92d respectively function as a shock-absorbing material to protect the predetermined part of the electric wires. For example, even upon application of impact or vibration to the covering members 92c and 92d, the transmission of the impact or vibration to the predetermined part of the electric wires 91 is prevented or suppressed. Further, the occurrence of an impulsive sound or the like between the predetermined part of the electric wires 91 and the covering members 92c and 92d is prevented.

As the protective layers 923c and 923d are provided in a part or the entire part of the covering members 92c and 92d, it is possible to improve the abrasion resistance of the covering members 92c and 92d.

Further, when a material which prevents permeation or transmission of liquid is applied to the protective layer material 803, it is possible to improve the abrasion resistance of the covering members 92c and 92d and it is possible to add a water repellent property or a water proofing property to the covering members 92c and 92d. Accordingly, even when the molded covering members 92c and 92d become wet with liquid, as the covering members 92c and 92d do not absorb liquid, it is possible to prevent increment in the weight of the covering members 92c and 92d and arrival of the liquid, transmitted through the covering members 92c and 92d to an unexpected position.

Next, a method for manufacturing the wire harness 9c according to the third embodiment of the present invention and a method for manufacturing the wire harness 9d according to the fourth embodiment of the present invention will be described. Note that as the lower holding tool 11a, the upper holding tool 12a, the lower mold 13a, the upper mold 14a and the like have been already described in Figs. 2 and 3, the explanation of these tools will be omitted.

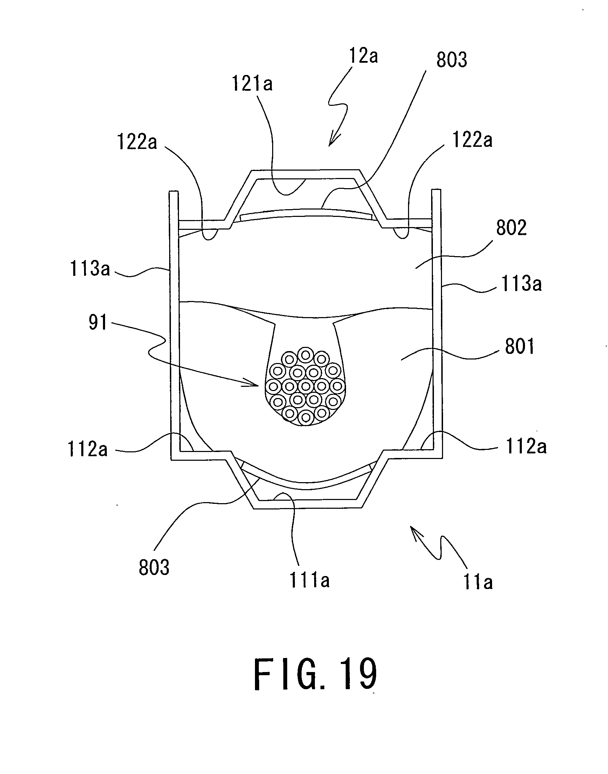

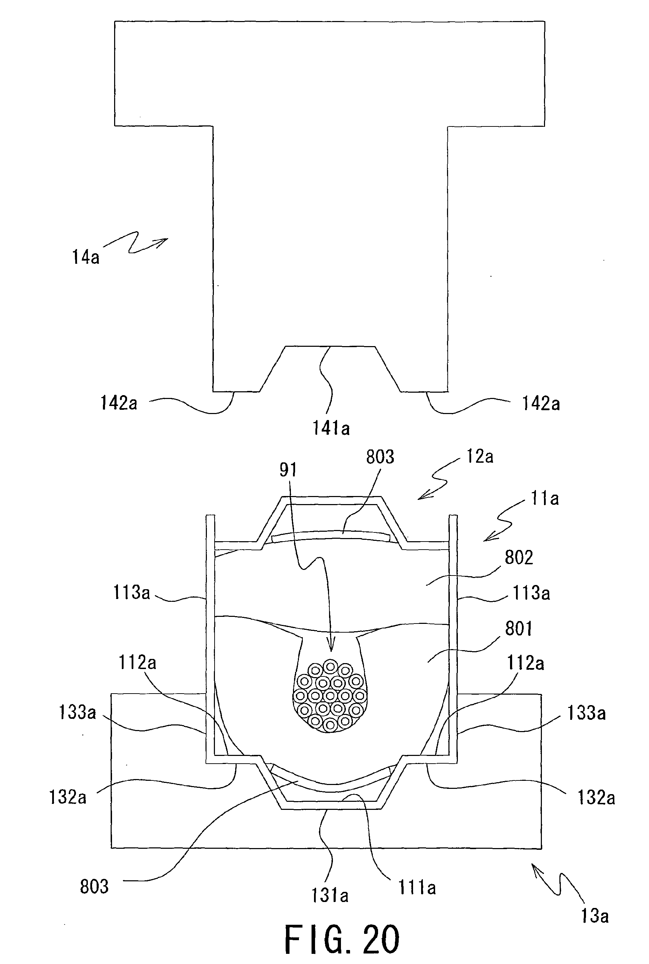

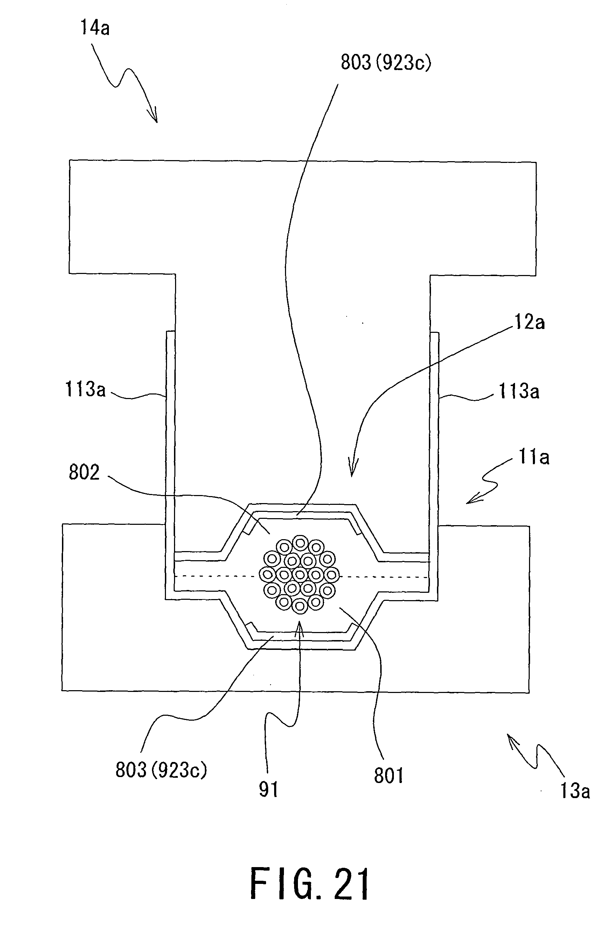

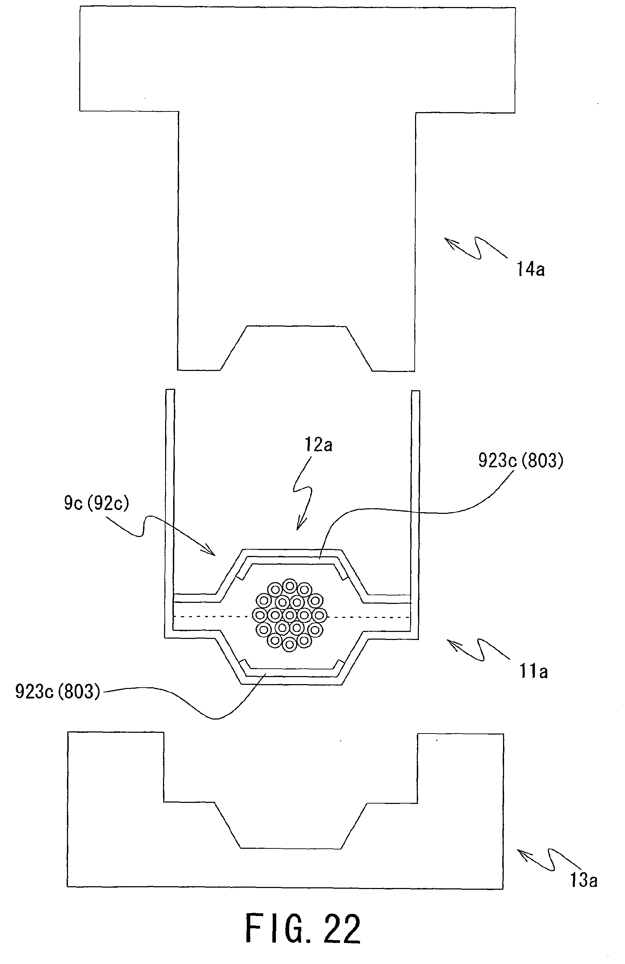

Figs. 19 to 22 are cross-sectional diagrams schematically showing predetermined processes of the method for manufacturing the wire harness 9c according to the third embodiment and the wire harness 9d according to the fourth embodiment of the present invention. Fig. 19 shows a state where the first material 801, the predetermined part of the electric wires 91, the second material 802 and the protective layer material 803 are accommodated in the first lower holding tool 11a and the first upper holding tool 12a is placed. Fig. 20 shows a state where the first lower holding tool 11a, in which the first material 801, the predetermined part of the electric wires 91, the second material 802 and the protective layer material 803 are accommodated, is placed on the first lower mold 13a. Fig. 21 shows a state where the first material 801 and the second material 802 are heated and pressurized with the first lower mold 13a and the first upper mold 14a. Fig. 22 shows a state where the predetermined part of the manufactured wire harness 9c according to the third embodiment of the present invention or the wire harness 9d according to the fourth embodiment of the present invention wire harness (the molded covering members 92c or 92d), placed on the first lower holding tool 11a, is removed from the first upper mold 13a and the first lower mold 14a.

Note that the corresponding elements between the method for manufacturing the wire harness 9c according to the third embodiment of the present invention and the method for manufacturing the wire harness 9d according to the fourth embodiment of the present invention will be described at once with reference to Figs. 19 to 22.

When the first material 801 and the second material 802 and the protective layer material 803 are separate members, as shown in Fig. 19, first, the protective layer material 803 is placed on the predetermined part of the first lower holding tool 11a. The "predetermined part" is set in correspondence with position and range where the protective layers 923c and 923d are to be formed in the surfaces of the covering members 92c and 92d. In the wire harness 9c according to the third embodiment of the present invention, as the protective layer 923c is provided on a part of the surface of the covering member 92c, the size and the shape of the protective layer material 803 are set in correspondence with size and shape of the protective layer 923c. In the wire harness 9d according to the fourth embodiment of the present invention, as the protective layer 923d is provided on the entire surface of the covering member 92d, the size and the shape of the protective layer material 803 are set in correspondence with size and shape of the covering member 92d.

The first material 801, the predetermined part of the electric wires 91 and the second material 802 are accommodated in the first lower holding tool 11a. First, the first material 801 is bended so as to hold (or wrap) the predetermined part of the electric wires 91 (e.g., bended into an approximately "U" shape or an approximately "C" shape), then in that state, it is accommodated between the both side walls 113a of the first lower holding tool 11a. At this time, as shown in Fig. 19, the bended side of the first material 801 (the side corresponding to the bottom of the "U" shape) is directed toward the lower side of the first lower holding tool 11a (the side on which the first pressure member 111a and the second pressure member 112a are formed). Then, the second material 802 is placed on the upper side of the predetermined part of the electric wires 91 and the first material 801 so as to cover the predetermined part of the electric wires 91 and the first material 801.

Then, the protective layer material 803 is placed in the "predetermined part" on the upper side of the second material 802. The size and the shape of the protective layer material 803, and the "predetermined part" are as described above. Then, the first upper holding tool 12a is placed on the upper side of the protective layer material 803, the first material 801, the predetermined part of the electric wires 91 and the second material 802.

The arrangement when the protective layer material 803 is previously provided on the first material 801 and the second material 802 (when the first material 801 and the second material 802, respectively with one surface previously provided with the protective layer material 803, are used) have already been described in Fig. 4, therefore, the explanation of the arrangement will be omitted.

Next, as shown in Fig. 20, the first lowerholding tool 11a, which accommodates the protective layer material 803, the first material 801, the predetermined part of the electric wires 91 and the second material 802, and on which the first upper holding tool 12a is placed, is placed on the upper side of the first lower mold 13a. That is, a part of the lower side of the first lower holding tool 11a is fitted in the "groove" formed on the upper side of the first lower mold 13a (the support member 133a corresponds to the side surface of the groove, and the first pressure member 131a and the second pressure member 132a, the bottom surface of the groove). Accordingly, the first lower holding tool 11a, placed on the upper side of the first lower mold 13a, is not easily shifted, easily fallen or easily removed from the first lower mold 13a.

When the first lower holding tool 11a is placed on the first lower mold 13a, the lower surface of the first pressure member 111a and the lower surface of the second pressure member 112a of the first lower holding tool 11a are in contact with the first pressure member 131a and the second pressure member 132a of the first lower mold 13a. The entire outer surface or a part of the lower side of the side wall 113a of the first lower holding tool 11a is in close vicinity or in contact with the support member 133a of the first lower mold 13a.

Note that the first pressure member 131a and the second pressure member 132a of the first lower mold 13a, and the first pressure member 141a and the second pressure member 142a of the first upper mold 14a are maintained with the temperature control unit at the "predetermined temperature" (more precisely, a temperature at which the first material 801 and the second material 802 can be heated to the "predetermined temperature").

Note that when the first non-woven fabric is applied to the first material 801 and the second material 802, as the "predetermined temperature", a temperature equal to or higher than the fusing point of the binder material of the binder fiber and equal to or lower than lower one of the fusing point of the first material 801 and the second material 802 and the fusing point of the protective layer material 803 is applied. On the other hand, when the second non-woven fabric or foam formed of a thermoplastic material is applied to the first material 801 and the second material 802, a temperature around the fusing point of the thermoplastic material as a material of the second non-woven fabric or the foam (note that the temperature is equal to or higher than the fusing point) is applied. For example, when the fusing point of the binder material of the binder fiber of the first non-woven fabric is 110 °C and the fusing point of the protective layer material 803 is 120 °C, the "predetermined temperature" is 110 to 120 °C.

Next, as shown in Fig. 21, the first lower mold 13a and the first upper mold 14a are brought closer to each other. The first lower mold 13a and the first upper mold 14a are built in the pressing machine (not shown), and the first lower mold 13a and the second lower mold 14a are brought closer to each other in accordance with the operation of the pressing machine. More particularly, the first lower mold 13a and the first upper mold 14a are brought closer to each other so as to set the shape and the size of space, surrounded by the first pressure member 111a and the second pressure member 112a of the first lower holding tool 11a, and the first pressure member 121a and the second pressure member 122a of the first upper holding tool 12a, to the shape and the size of the molded covering members 92c and 92d. The first material 801 and the second material 802 are heated and pressurized by bringing the first lower mold 13a and the second upper mold 14a closer to each other. Then this state is maintained (i.e., the heating and the pressurization are continued) for a predetermined period.

According to this arrangement, in the first material 801 and the second material 802, parts held and pressurized between the first pressure member 111a of the first lower holding tool 11a and the first pressure member 121a of the first upper holding tool 12a become the main bodies 921c and 921d of the covering members 92c and 92d. Further, parts held and pressurized between the second pressure member 112a of the first lower holding tool 11a and the second pressure member 122a of the first upper holding tool 12a become the extension parts 922c and 922d of the covering members 92c and 92d.

The "predetermined period", i.e., the period to maintain the heating and pressurization of the first material 801 and the second material 802 is as follows.

When the first non-woven fabric is applied to the first material 801 and the second material 802, the predetermined period is longer than a period in which, in the first material 801 and the second material 802, the temperature of the parts which become the extension parts 922c and 922d after molding to the covering members 92c and 92d (the parts held between the second pressure member 112a of the first lower holding tool 11a and the second pressure member 122a of the first upper holding tool 12a) rises to the first temperature band over the whole parts in the thickness direction, on the other hand, the temperature of the central part (the predetermined part of the electric wires 91 and its peripheral part) of the parts which become the main bodies 921c and 921d of the covering members 92c and 92d (the parts held between the first pressure member 111a of the first lower holding tool 11a and the first pressure member 121a of the first upper holding tool 12a) does not rise to the first temperature band.

When the second non-woven fabric or the foam (non-woven fabric or foam which is formed of a thermoplastic material and which does not have a binder material) is applied to the first material 801 and the second material 802, the predetermined period is longer than a period in which, in the first material 801 and the second material 802, the temperature of the parts which become the extension parts 922c and 922d of the covering members 92c and 92d rises to the fusing point of the thermoplastic material, but the temperature of the central parts of the parts which become the main bodies 921c and 921d of the covering members 92c and 92d does not rise to a temperature around the fusing point of the thermoplastic material.

The thickness of the extension parts 922c and 922d of the covering members 92c and 92d is smaller than that of the main bodies 921c and 921d. Accordingly, it is possible to heat the entire parts which become the extension parts 922c and 922d to the predetermined temperature before the temperature of the central part of the parts which become the main bodies 921c and 921d of the covering members 92c and 92d rises to the "predetermined temperature".

When the first material 801 and the second material 802 are heated and pressurized at the "predetermined temperature" for the "predetermined period" , the extension parts 922c and 922d of the covering members 92c and 92d are molded through the following process.

While the first material 801 and the second material 802 are pressurized, as the distance between the second pressure member 112a of the first lower holding tool 11a and the second pressure member 122a of the first upper holding tool 12a, approximately the same distance as the thickness of the extension parts 922c and 922d of the covering members 92c and 92d, is maintained. The thickness of the first material 801 and the second material 802 before pressurization is greater than that of the extension parts 922c and 922d of the molded covering members 92c and 92d. Accordingly, in the first material 801 and the second material 802, the part held between the second pressure member 112a of the first lower holding tool 11a and the second pressure member 122a of the first upper holding tool 12a is pressurized and compression-deformed. This part is heated by heat emitted from the temperature control unit of the first lower mold 13a and the first upper mold 14a, and the temperature of this part rises to the predetermined temperature. Accordingly, this compression deformation is plastic deformation by thermoplasticity.

When the first non-woven fabric is applied to the first material 801 and the second material 802, the base fiber and the core fiber of the binder fiber of the first non-woven fabric is plastic-deformed by thermoplasticity. Note that as the "predetermined temperature" is lower than the fusing point of the base fiber and the core fiber of the binder fiber of the first non-woven fabric, the first non-woven fabric is not melted but its solid state (fiber state) is maintained. On the other hand, since the "predetermined temperature" is higher than the fusing point of the binder material of the binder fiber, the binder material of the binder fiber is melted, then it permeates among the base fiber and the core fiber of the binder fiber, and spreads through the contact surface between the first material 801 and the second material 802. Therefore, the respective base fiber and the core fiber of the binder fiber of the first material 801 and the second material 802 are connected with the binder material. Further, the first material 801 and the second material 802 are joined with the binder material spread through the contact surface between the first material 801 and the second material 802.

When the second non-woven fabric or foam which is formed of a thermoplastic material and which does not have a binder material is applied to the first material 801 and the second material 802, the "predetermined temperature" is around the fusing point of the thermoplastic material (equal to or higher than the fusing point), and the first material 801 and the second material 802 are plastic-deformed by thermoplasticity. As a part of the first material 801 and a part of the second material 802 are melted, the first material 801 and the second material 802 are welded.

In this manner, when the material of the first material 801 and the second material 802 is any one of the first non-woven fabric, the second non-woven fabric and the foam, the parts of the first material 801 and the second material 802 which become the extension parts of the covering members 92c and 92d (the parts held between the second pressure member 112a of the first lower holding tool 11a and the second pressure member 122a of the first upper holding tool 12a) are plastic-deformed (compression-deformed), and the size in the vertical direction is reduced and the ends and joined.

On the other hand, the main bodies 921c and 921d of the covering members 92c and 92d are molded through the following process.

In the first material 801 and the second material 802, the parts held between the first pressure member 111a of the first lower holding tool 11a and the first pressure member 121a of the first upper holding tool 12a become the main bodies 921c and 921d of the covering members 92c and 92d. In the first material 801 and the second material 802, the parts held between the first pressure member 111a of the first lower holding tool 11a and the first pressure member 121a of the first upper holding tool 12a are pressurized with these pressure members. Then the first material 801 and the second material 802 are plastic-deformed into a shape approximately the same as that of space formed between the first pressure member 111a of the first lower holding tool 11a and the first pressure member 121a of the first upper holding tool 12a, and become the main bodies 921c and 921d of the covering members 92c and 92d.

When the first non-woven fabric is applied to the first material 801 and the second material 802, in the first material 801 and the second material 802, the temperature of the part in contact with the first pressure member 111a of the first lower holding tool 11a and its peripheral part and the part in contact with the first pressure member 121a of the first upper holding tool 12a and its peripheral parts rises to the "predetermined temperature". Accordingly, the binder material of the binder fiber is melted by heat, and permeates among the base fiber and the core fiber of the binder fiber. The temperature of the part in contact with the first pressure member 111a of the first lower holding tool 11a and its peripheral parts and the part in contact with the first pressure member 121a of the first upper holding tool 12a and its peripheral part is higher in comparison with that of the central part (the part in contact with the predetermined part of the electric wires 91 and its peripheral part). Accordingly, in the part, the degree of plastic deformation is higher in comparison with that of the central part, and the density of the base fiber and the core fiber of the binder fiber is higher than that in the central part.

When the second non-woven fabric or the foam is applied to the first material 801 and the second material 802, in the first material 801 and the second material 802, the temperature of the part in contact with the holding tool 11a of the first lower holding tool 11a and its peripheral part and the part in contact with the first pressure member 121a of the first upper holding tool 12a and its peripheral parts is higher in comparison with that of the central part (the part in contact with the electric wires 91 and its peripheral parts), accordingly, the degree of plastic deformation is higher in comparison with that of the central part. As a result, the density of the fiber or foam is higher in comparison with that of the central part. Further, the temperature of the part in contact with the first pressure member 111a of the first lower holding tool 11a and its peripheral part and the part in contact with the first pressure member 121a of the first upper holding tool 12a and its peripheral parts rises to the "predetermined temperature", accordingly, a part of the second non-woven fabric or the foam is melted. When the second non-woven fabric or the foam is melted, the density is increased by release of gas in bubbles or the like.

In this manner, when the first material 801 and the second material 802 are heated and pressurized with the first lower holding tool 11a, the first upper holding tool 12a, the first lower mold 13a and the first upper mold 14a, in the parts which become the extension parts 922c and 922d of the covering members 92c and 92d, the first material 801 and the second material 802 are joined and integrated. Further, the density of the surface layer of the parts which become the main bodies 921c and 921d of the covering members 92c and 92d is higher in comparison with that of the central parts.

Note that the heat emitted from the first lower mold 13a is transmitted through the first lower holding tool 11a to the first material 801 and the second material 802. Similarly, the heat emitted from the first upper mold 14a is transmitted through the first upper holding tool 12a to the first material 801 and the second material 802. The first lower holding tool 11a and the first upper holding tool 12a, formed of a material having high thermal conductivity, have a structure to quickly transmit heat in the vertical direction. Accordingly, the heat emitted from the lower mold 13a and the first upper mold 14a is quickly transmitted to the first material 801 and the second material 802. Therefore it is not necessary to set a long period as the "predetermined period".

Further, when the first material 801 and the second material 802 and the protective layer material 803 are separate members, in this process, the protective layer material 803 is attached to the respective surfaces of the first material 801 and the second material 802 as the protective layers 923c and 923d. When the first material and the second material are previously provided with the protective layer material 803, the protective layer material 803 is molded into predetermined shapes as the protective layers 923c and 923d. The particular process is as follows.

While the first material 801 and the second material 802 are pressurized with the first lower holding tool 11a and the first upper holding tool 12a, the temperature of the surfaces of these materials rises to the "predetermined temperature". Accordingly, when the first non-woven fabric is applied to the first material 801 and the second material 802, the binder material in the surface layers of the first material 801 and the second material 802 is melted. Then the protective layer material 803 is attached to the respective surfaces of the first material 801 and the second material 802 with the molten binder material as an adhesive. On the other hand, when the second non-woven fabric or the foam is applied to the first material 801 and the second material 802, at least a part of the first material 801 and a part of the second material 802 are melted. Then the protective layer material 803 is attached to the respective surfaces of the first material 801 and the second material 802 with the molten first material 801 and the second material 802 as adhesives. As a result, the protective layers 923c and 923d are molded on the surfaces of the covering members 92c and 92d.

When the protective layer material 803 is formed of a thermoplastic material, in this process, the protective layer material 803 is plastic-deformed by thermoplasticity, in shape and size following the shapes and the sizes of the first pressure member 111a of the first lower holding tool 11a and the first pressure member 121a of the first upper holding tool 12a. That is, in this process, the first material 801 and the second material 802, heated by the heat from the first lower mold 13a and the first upper mold 14a, are in plastic-deformable state by thermoplasticity. Then, since the first material 801 and the second material 802 are elastically compression-deformed, a force to press the protective layer material 803 against the upper surface of the first lower holding tool 11a and the lower surface of the first upper holding tool 12a is applied to the protective layer material 803, by a force of the first material 801 and the second material 802 to restore the initial shape and the initial size. Accordingly, the protective layer material 803 is plastic-deformed in approximately the same size and shape of the upper surface of the first lower holding tool 11a and the lower surface of the first upper holding tool 12a.

Next, as shown in Fig. 22, when the "predetermined period" has elapsed, the first lower mold 13a and the first upper mold 14a are separated. Then, the respective predetermined parts of the wire harness 9c according to the third embodiment of the present invention and the wire harness 9d according to the fourth embodiment of the present invention (i.e., the molded covering members 92c and 92d and the predetermined parts of the electric wires 91), in the state where they are held between the first lower holding tool 11a and the first upper holding tool 12a, are removed from the first lower mold 11a. Then the respective predetermined parts of the wire harness 9c according to the third embodiment of the present invention and the wire harness 9d according to the fourth embodiment of the present invention, in the state where they are placed on the first lower holding tool 11a, are cooled down.

In a case where the first non-woven fabric is applied to the first material 801 and the second material 802, when the temperature of the molded covering members 92c and 92d has become a temperature not to cause plastic deformation of the base fiber and the core fiber of the binder fiber of the first non-woven fabric by thermoplasticity (at least a temperature lower than the first temperature band), the wire harnesses are removed from the first lower holding tool 11a and the first upper holding tool 12a. Further, in a case where the second non-woven fabric or the foam is applied to the first material 801 and the second material 802, when the temperature of the thermoplastic material has become a temperature not to cause plastic deformation by thermoplasticity, the wire harnesses are removed from the first lower holding tool 11a and the first upper holding tool 12a. Note that the cooling method is not particularly limited. For example, a method of placing the wire harnesses in a refrigerator, a method of blowing gas at a normal or low temperature, and further, a method of leaving at a normal temperature, or the like, is applicable.

Through the above-described processes, the covering members 92c and 92d are provided in the respective predetermined parts of the wire harness 9c according to the third embodiment of the present invention and the wire harness 9d according to the fourth embodiment of the present invention. Note that the manufacturing of the wire harness 9c according to the third embodiment of the present invention and the wire harness 9d according to the fourth embodiment of the present invention requires, in addition to the above-described processes, a process of cutting the electric wires 91, a process of bundling the electric wires 91 in a predetermined form (process of forming a trunk line and a branch line), a process of attaching connectors and the like to the ends of the electric wires 91, and the like. Various well-known methods are applicable to these processes. Accordingly, the explanations of these processes will be omitted.

The first lower holding tool 11a and the first upper holding tool 12a, formed of a material having a high thermal conductivity, has a structure to quickly transmit heat in the vertical direction. Accordingly, the heat of the molded covering members 92c and 92d (first material 801 and the second material 802) is quickly released to the outside through the first lower holding tool 11a and the first upper holding tool 12a. Further, since the thermal storage amount of the first lower holding tool 11a and the first upper holding tool 12a is small, after the removal from the first lower mold 11a, temperature fall starts immediately. Accordingly, after the removal from the first lower mold 11a, the first lower holding tool 11a and the first upper holding tool 12a do not heat the respective predetermined parts of the wire harness 9c according to the third embodiment of the present invention and the wire harness 9d according to the fourth embodiment of the present invention. In this manner, it is possible to prevent overheating of the predetermined parts of the wire harness 9c according to the third embodiment of the present invention and the wire harness 9d according to the fourth embodiment of the present invention. Accordingly, it is possible to facilitate the control of the properties of the covering members 92c and 92d.

In a case where the first non-woven fabric is applied to the first material 801 and the second material 802, when the temperature of the molded covering members 92c and 92d becomes a temperature not to cause plastic deformation by thermoplasticity (at least a temperature lower than the first temperature band), the shape and the size of the molded covering members 92c and 92d are settled. Further, the binder material which has been melted and permeated among the base fiber and the core fiber of the binder fiber is solidified, and the binder material connects the base fiber and the core fiber of the binder fiber. Accordingly, the part through which the molten binder material permeated becomes harder in comparison with other parts.

The molten binder material has permeated through approximately the entire extension parts 922c and 922d of the molded covering members 92c and 92d (in the first material 801 and the second material 802, the parts held and pressurized between the second pressure member 112a of the first lower holding tool 11a and the second pressure member 122a of the first upper holding tool 12a) and then solidified. Further, the extension parts 922c and 922d have been compression-deformed and the density of the base fiber and the core fiber of the binder fiber is higher. In this manner, in the extension parts 922c and 922d of the covering members 92c and 92d where the density of the base fiber and the core fiber of the binder fiber is higher, the first material 801 and the second material 802 are attached to each other with the binder material. The hardness of the extensionparts is higher in comparison with that of the other parts. Further, the first material 801 and the second material 802 are joined and integrated by the solidification of the binder material in the extension parts 922c and 922d.

In the surface layer of the main bodies 921c and 921d of the molded covering members 92c and 92d (in the first material 801 and the second material 802, the part held and pressurized between the first pressure member 111a of the first lower holding tool 11a and the first pressure member 121a of the first upper holding tool 12a), since the temperature has risen to the first temperature band, accordingly, the binder material has been melted and then solidified. Accordingly, in the surface layer of the main bodies 921c and 921d of the covering members 92c and 92d, the base fiber and the core fiber are joined with the binder material. Further, in the surface layers 921c and 921d of the covering members 92c and 92d, the density of the base fiber and the binder fiber is higher in comparison with that of the central part. That is, in the surface layer of the main bodies 921c and 921d of the covering members 92c and 92d, as the temperature upon pressurization is higher in comparison with that of the central parts of the main bodies 921c and 921d, the degree of plastic deformation by thermoplasticity is high (the compression deformation amount is large). Accordingly, in the surface layer of the molded main bodies 921c and 921d, the density of the base fiber and the core fiber of the binder fiber is higher in comparison with that of the central part. In a state where the density is high, the base fiber and the core fiber of the binder fiber of the first non-woven fabric are joined with the binder material. Accordingly, the surface layer is harder in comparison with their state before the pressurization.

On the other hand, the temperature of the central part of the main bodies 921c and 921d of the molded covering members 92c and 92d (i.e., the part in contact with the predetermined part of the electric wires 91 and its peripheral parts) does not rise to the first temperature band upon pressurization. Accordingly, the degree of plastic deformation by thermoplasticity is lower in comparison with that of the surface layer of the main bodies 921c and 921d of the covering members 92c and 92d, or plastic deformation by thermoplasticity has not occurred. As the temperature is not within the first temperature band, the binder material of the binder fiber is not melted. Accordingly, the central part of the main bodies 921c and 921d of the covering members 92c and 92d has the physical property approximately the same as that of the first non-woven fabric before the molding (note that in some cases, the density of the fiber is higher by the pressurization).

In the arrangement where the second non-woven fabric or the foam is applied to the first material 801 and the second material 802, in the extension parts 922c and 922d of the covering members 92c and 92d, the first material 801 and the second material 802 are compressed and the density of the materials is high. Accordingly, the hardness of the extension parts 922c and 922d is higher in comparison with that of the other parts. Further, at least a part of the extension parts 922c and a part of the extension part 922d are melted upon pressurization and then solidified, accordingly, the first material 801 and the second material 802 are joined (welded) and integrated in the extension parts 922c and 922d.

Further, in the surface layer of the main bodies 921c and 921d of the covering members 92c and 92d, since the temperature upon pressurization is higher in comparison with that of the central part, the degree of plastic deformation is higher in comparison with that of the central part. On the other hand, in the central part of the main bodies 921c and 921d of the covering members 92c and 92d, the state before the heating and pressurization is maintained. Accordingly, in the surface layer of the main bodies 921c and 921d of the covering members 92c and 92d, the density is higher in comparison with that of the central part. Further, in a part of the surface layer of the main bodies 921c and 921d of the covering members 92c and 92d, since the temperature rises to a temperature equal to or higher than the fusing point upon pressurization, a part of the surface layers is melted and gas is released from bubbles. Then the fiber or foam state (i.e., the state of fiber or foam structure including bubbles or hollows inside) is changed to the solid state (the state of solid including no or approximately no bubble or hollow inside). Accordingly, the surface layer of the main bodies 921c and 921d of the covering members 92c and 92d is harder in comparison with the central part, and harder in comparison with its state before the pressurization.

In this manner, when any one of the first non-woven fabric, the non-woven fabric or the foam is applied to the first material 801 and the second material 802, the surface layer of the main bodies 921c and 921d of the molded covering members 92c and 92d is harder in comparison with the central part of the main bodies 921c and 921d, and harder in comparison with the first material 801 and the second material 802 before the molding. On the other hand, the central part of the main bodies 921c and 921d of the covering members 92c and 92d has the physical property approximately the same as that before the pressurization.

In this manner, it is possible to harden the surface layer of the main bodies 921c and 921d of the covering members 92c and 92d. With the surface layer, it is possible to protect the predetermined part of the wire harness 9c according to the third embodiment of the present invention (the predetermined part of the electric wires 91). Further, since the hardness is high and the surface layer is hardly deformed, it is possible to maintain the predetermined part of the wire harness 9c according to the third embodiment of the present invention and the wire harness 9d according to the fourth embodiment of the present invention in the predetermined shape.

Accordingly, the covering members 92c and 92d, provided in the parts of the wire harness 9c according to the third embodiment of the present invention and the wire harness 9d according to the fourth embodiment of the present invention to be protected, function as a protector. Further, the covering members 92c and 92d, provided in the parts of the wire harness 9c according to the third embodiment of the present invention and the wire harness 9d according to the fourth embodiment of the present invention to be maintained in the predetermined shape, maintain the parts in the predetermined shape. Further, the covering members 92c and 92d, provided in the parts of the wire harness 9c according to the third embodiment of the present invention and the wire harness 9d according to the fourth embodiment of the present invention to be protected and to be maintained in the predetermined shape, function as a protector and maintain the predetermined parts in the predetermined shape.

The method for manufacturing the wire harness 9c according to the third embodiment of the present invention and the method for manufacturing the wire harness 9d according to the fourth embodiment of the present invention have the following advantages.

The first lower mold 13a and the first upper mold 14a have simple structures in comparison with those of metal molding dies for manufacturing injection molded products (metal molding dies for injection molding). Since it is possible to manufacture the first lower mold 13a and the first upper mold 14a at a low cost, it is possible to reduce the equipment cost. Further, in the method for manufacturing the wire harness 9c according to the third embodiment of the present invention and the method for manufacturing the wire harness 9d according to the fourth embodiment of the present invention, a cheap material (a thermoplastic material) is applicable to the covering member in comparison with an arrangement using a protector which is an injection molded product or the like. Accordingly, it is possible to manufacture the wire harness at a low cost and to realize a low price of the product.

Further, in the method for manufacturing the wire harness 9c according to the third embodiment of the present invention and the method for manufacturing the wire harness 9d according to the fourth embodiment of the present invention, the operations in the process of molding the covering members 92c and 92d are simpler in comparison with those in the method of embedding electric wires in the protector and the covering member which are injection molded products.

Further, in the wire harness 9c according to the third embodiment of the present invention and the wire harness 9d according to the fourth embodiment of the present invention, the predetermined part of the electric wires 91 is wrapped in the covering members 92c and 92d (embedded between the first material 801 and the second material 802), and the predetermined part of the electric wires 91 is elastically in contact with the covering members 92c and 92d. Accordingly, an impulsive sound or the like does not occur between the predetermined part of the electric wires 91 and the covering members 92c and 92d.

Further, in the process of molding the covering members 92c and 92d, it is possible to mold the protective layers 923c and 923d simultaneously. Accordingly, it is possible to prevent increment in the number of steps in the method for manufacturing the wire harness 9c according to the third embodiment of the present invention and the method for manufacturing the wire harness 9d according to the fourth embodiment of the present invention. Accordingly, it is possible to prevent or suppress rise in the price of the wire harness 9c according to the third embodiment of the present invention and the wire harness 9d according to the fourth embodiment of the present invention. In other words, it is possible to improve the abrasion resistance of the covering members 92c and 92d without increment in the number of steps.

Further, in the method for manufacturing the wire harness 9c according to the third embodiment of the present invention and the method for manufacturing the wire harness 9d according to the fourth embodiment of the present invention, in the process of molding the covering members 92c and 92d, further, the protective layer material 803 is molded to the predetermined shape (the shape following the surfaces of the covering members 92c and 92d). Accordingly, a simple shape (e.g., a flat-plate shape) is applicable to the protective layer material 803. Accordingly, a cheap member is applicable to the protective layer material 803. For example, as the protective layer material 803, a member formed by cutting a sheet or flat plate formed of a predetermined material into predetermined size and shape is applicable. In this manner, the protective layer material 803 does not require any particular processing. Accordingly, it is possible to improve the abrasion resistance of the covering members 92c and 92d, and it is possible to prevent or suppress the increment in the cost of the parts.

Further, according to the method for manufacturing the wire harness 9d according to the fourth embodiment of the present invention, when a material which prevents permeation and transmission of liquid is applied to the protective layer material 803, it is possible to improve the abrasion resistance of the covering members 92c and 92d, and it is possible to add a water repellent property and a water proofing property to the covering members 92c and 92d. Accordingly, even when the molded covering members 92c and 92d become wet with liquid, since the covering members 92c and 92d do not absorb the liquid, it is possible to prevent increment in the weight of the covering members 92c and 92d and it is possible to prevent arrival of the liquid, transmitted through the covering members 92c and 92d, at an unexpected position.

Note that in the above description, the first material 801, the second material 802 and the protective layer material 803 are separate members; however, the present invention is not limited to this arrangement. For example, it may be arranged such that the first material 801 and the second material 802 are previously provided with the protective layers 923c and 923d respectively on one surface (in other words, the first material 801 and the second material 802, with the protective layers 923c and 923d formed respectively on one surface, are used). Further, when the first material 801, the second material 802 and the protective layer material 803 are separate members, in the process of accommodating the first material 801 and the second material 802 in the first lower holding tool 11a, the protective layer material 803 may be accommodated simultaneously. Forexample, it may be arranged such that the protective layer material 803 is previously temporarily tacked (attached) to one surface of the respective first material 801 and the second material 802. With this arrangement, the same advantage as that described above is attained. Further, in this arrangement, since it is not necessary to separately accommodate the protective layer material 803, the first material 801 and the second material 802 in the first lower holding tool 11a, it is possible to reduce the number of steps and further reduce the labor.

Further, in the method for manufacturing the wire harness 9c according to the third embodiment of the present invention, the protective layer 923c is provided on both of the first material 801 and the second material 802. It may be arranged such that the protective layer 923c is provided only one of the first material 801 and the second material 802. That is, any arrangement may be employed as long as the protective layer 923c is provided in the part of the covering member 92c in which the abrasion resistance is to be improved.

Further, in the method for manufacturing the wire harness 9c according to the third embodiment of the present invention and the method for manufacturing the wire harness 9d according to the fourth embodiment of the present invention, it is possible to attain the following advantages by using the first lower holding tool 11a.

On the other hand, in the method for manufacturing the wire harness 9c according to the third embodiment of the present invention and the method for manufacturing the wire harness 9d according to the fourth embodiment of the present invention, during the operation to accommodate the first material 801, the predetermined part of the electric wires 91, the second material 802 and the protective layer material 803 into the first lower holding tool 11a, it is not necessary to heat the first lower holding tool 11a (it is not necessary to place the first lower holding tool 11a on the first lower mold 13a). Accordingly, the first material 801 and the second material 802 are heated only when pressurized with the first lower mold 13a and the first upper mold 14a. In this manner, since the first material 801 and the second material 802 are not heated before pressurization, there is no possibility of unexpected deformation of the first material 801 and/or the second material 802 before pressurization. Accordingly, it is possible to accurately mold the first material 801 and the second material 802 in the shape of the covering members 92c and 92d.

Further, when the first lower holding tool 11a, accommodating the first material 801, the predetermined part of the electric wires 91, the second material 802 and the protective layer material 803, is placed on the first lower mold 13a, the first material 801 and the second material 802 are heated and pressurized immediately. That is, before pressurization, the first material 801 and the second material 802 are not heated for a long time. Accordingly, it is possible to perform pressurization and molding on the first material 801 and the second material 802 before heat is transmitted to the central parts of these materials. Accordingly, it is possible to perform the pressurization and the molding before the temperature inside the first material 801 and the second material 802 (especially the part in contact with the predetermined part of the electric wires 91 and its peripheral part) rises to the "predetermined temperature". Accordingly, since the inner parts of the first material 801 and the second material 802 are not hardened, there is no possibility that the first material 801 and the second material 802 lose the functions as a soundproof material and a shock-absorbing material.

Further, it is possible to perform the operation to accommodate the protective layer material 803, the first material 801, the predetermined part of the electric wires 91 and the second material 802 in the first lower holding tool 11a in a place away from the first lower mold 13a and the first upper mold 14a. Accordingly, since it is possible to perform the operation in wide space, it is possible to easily perform the operation. That is, generally, the first lower mold 13a and the first upper mold 14a are built in the pressing machine, therefore, when the first material 801 and the like are directly accommodated in the first lower mold 13a, it is necessary to perform the operation in the limited space between the first lower mold 13a and the first upper mold 14a. Accordingly, in some cases, the first upper mold 14a is an disincentive. On the other hand, in the arrangement using the first lower holding tool 11a, since the operation can be performed regardless of space, it is possible to perform the operation in space without operational disincentive. Further, since it is possible to perform the operation to accommodate the first material 801, the predetermined part of the electric wires 91, the second material 802 and the protective layer material 803 into the first lower holding tool 11a in space where the operator does not touch the first lower mold 13a or the first upper mold 14a, there is no possibility of burn injury for the operator.

Further, in comparison with the arrangement where the first lower mold 13a and the first upper mold 14a are heated only upon pressurization, it is possible to maintain the first lower mold 13a and the first upper mold 14a at the "predetermined temperature" in addition to the time of pressurization and other time (e.g. in stand-by time). Accordingly, it is possible to perform heating and pressurization immediately after the completion of the operation to accommodate the protective layer material 803, the first material 801, the predetermined part of the electric wires 91 and the second material 802 into the first lower holding tool 11a. Accordingly, it is possible to reduce time required for manufacturing the wire harness 9c according to the third embodiment of the present invention and the wire harness 9d according to the fourth embodiment of the present invention. Further, since it is possible to maintain the first lower mold 13a and the first upper mold 14a always at the predetermined temperature, it is possible to facilitate temperature control in the first material 801 and the second material 802 upon pressurization.

Further, in the arrangement using the first lower holding tool 11a, since it is possible to maintain the first lower mold 13a and the first upper mold 14a always at the predetermined temperature, it is possible to quickly heat the first material 801 and the second material 802 to the predetermined temperature at the same time of the start of pressurization. Accordingly, it is possible to join the first material 801 and the second material 802 in the extension parts 922c and 922d and attach the protective layer material 803 to the surfaces of the first material 801 and the second material 802 before the predetermined part of the electric wires 91 and a part in the first material 801 and the second material 802 in the vicinity of the predetermined part of the electric wires 91 are heated to a high temperature by thermal transmission.

Further, according to this arrangement, in a case where the first non-woven fabric is applied to the first material 801 and the second material 802, it is possible to heat only the surface layers of the main bodies 921c and 921d of the covering members 92c and 92d to the predetermined temperature to cause plastic deformation and to melt the binder material in only the surface layers. Accordingly, in the main bodies 921c and 921d of the covering members 92c and 92d, it is possible to plastic-deform the first material 801 and the second material 802 in only the surface layer and to permeate the binder material among the base fiber and the core fiber of the binder fiber.

Similarly, when the second non-woven fabric or the foam formed of a thermoplastic material is applied to the first material 801 and the second material 802, it is possible to heat only the surface layers of the main bodies 921c and 921d of the covering members 92c and 92d to the predetermined temperature to cause plastic deformation, and to melt the thermoplastic material in only a part of the surface layers. Accordingly, in the main bodies 921c and 921d of the covering members 92c and 92d, it is possible to plastic-deform the first material 801 and the second material 802 in only the surface layers and to eliminate or reduce bubbles and hollows.

Accordingly, after the cooling, only the surface layers are hardened, and the central parts have the physical property before the pressurization (the elastic-deformable state is maintained). Accordingly, the hardened parts maintain the shape of the predetermined part of the wire harness 9c according to the third embodiment of the present invention and the wire harness 9d according to the fourth embodiment of the present invention in the predetermined shape, and protect the predetermined part of the wire harness. Further, the unhardened parts in the central parts of the main bodies 921c and 921d of the covering members 92c and 92d respectively function as a soundproof material or shock-absorbing material for the predetermined part of the electric wires 91.

Further, in the arrangement using the first lower holding tool 11a, upon or after removal of the predetermined part (the molded covering members 92c and 92d) of the manufactured wire harness 9c according to the third embodiment of the present invention and the wire harness 9d according to the fourth embodiment of the present invention from the first lower mold 11a, it is possible to prevent unexpected deformation (or undesired deformation) before the temperature of the covering members 92c and 92d is lowered to a temperature not to cause deformation by thermoplasticity.

That is, in the arrangement without first lower holding tool 11a, upon removal of the pressurized covering members 92c and 92d from the first lower mold 13a, it is necessary to directly hold the wire harness 9c according to the third embodiment of the present invention and the wire harness 9d according to the fourth embodiment of the present invention. In the wire harness 9c according to the third embodiment of the present invention and the wire harness 9d according to the fourth embodiment of the present invention, the temperature of at least the surface layer of the respective covering members 92c and 92d is high (temperature to cause plastic deformation by thermoplasticity) immediately after heating and pressurization with the first lower mold 13a and the first upper mold 14a. Accordingly, in the molded covering members 92c and 92d, the held part and its peripheral part may be deformed. Further, upon removal, there is a possibility that the wire harness 9c according to the third embodiment of the present invention and the wire harness 9d according to the fourth embodiment of the present invention may be distorted by their self weight. Further, before the temperature of the covering members 92c and 92d removed from the first lower mold 13a is lowered to a temperature not to cause plastic deformation by thermoplasticity, there is a possibility of deformation due to contact with a foreign material or the like.

On the other hand, in the method for manufacturing in the method for manufacturing the wire harness 9c according to the third embodiment of the present invention and the method for manufacturing the wire harness 9d according to the fourth embodiment of the present invention, it is possible to remove the molded covering members 92c and 92d, in the state where they are placed on the first lower holding tool 11a, from the first lower mold 13a. Further, it is possible to cool the predetermined part of the wire harness 9c according to the third embodiment of the present invention and the wire harness 9d according to the fourth embodiment of the present invention removed from the first lower mold 13a (the covering members 92c and 92d, the protective layers 923c and 923d and the predetermined part of the electric wires 91), in the state where they are placed on the first lower holding tool 11a.

In this manner, upon removal of the respective predetermined parts of the wire harness 9c according to the third embodiment of the present invention and the wire harness 9d according to the fourth embodiment of the present invention from the first lower mold 13a, the first lower holding tool 11a is held and removed (the entire first lower holding tool 11a is removed). Accordingly, it is not necessary to directly touch the molded covering members 92c and 92d. Further, since the molded covering members 92c and 92d are accommodated in the first lower holding tool 11a, it is possible to remove the molded covering members 92c and 92d, pressurized and maintained in the molded shape, from the first lower mold 13a. Further, it is possible to cool the molded covering members 92c and 92d in the state where they are placed on the first lower holding tool 11a. Accordingly, it is not necessary to touch the molded covering members 92c and 92d from removal from the first lower mold 13a to the cooling down to a temperature not to cause plastic deformation by thermoplasticity (before the molded shape is settled), and it is possible to prevent contact between the covering members and a foreign material or the like. Accordingly, it is possible to prevent unexpected deformation (or undesired deformation) in the molded covering members 92c and 92d.

Note that to prevent unexpected deformation in the molded covering members 92c and 92d, it may be arranged such that the first lower mold 13a and the first upper mold 14a are cooled and then removed. However, in this arrangement, since time for cooling the first lower mold 13a and the first upper mold 14a is required, time required for manufacturing the wire harness 9c according to the third embodiment of the present invention and the wire harness 9d according to the fourth embodiment of the present invention is prolonged. Further, since it is necessary to heat and cool the first lower mold 13a and the first upper mold 14a upon each pressurization and molding, there are problems as described above.

Further, in the method for manufacturing in the method for manufacturing the wire harness 9c according to the third embodiment of the present invention and the method for manufacturing the wire harness 9d according to the fourth embodiment of the present invention, the entire part of the first material 801 and the second material 802 accommodated in the first lower holding tool 11a becomes the covering member. Accordingly, when the covering members 92c and 92d have been molded, an operation to remove unnecessary parts (so-called trimming) is unnecessary. Accordingly, it is possible to reduce the number of steps (or prevent increment in the number of steps). Further, it is possible to eliminate waste part of the first material 801 and the second material 802.

On the other hand, when the first upper holding tool 12a is used, the following advantages can be obtained.

When the first material 801 and the second material 802 are heated and pressurized with first lower mold 13a and the first upper mold 14a thus molded, and after the separation between the first lower mold 13a and the first upper mold 14a, the pressure applied to the molded covering members 92c and 92d disappears. Then, in some cases, the molded covering members 92c and 92d are deformed to restore the shape and size before the molding (e.g., a phenomenon corresponding to spring back in plastic processing for metal or the like occurs in some cases). Especially, since the temperature of the central part of the respective main bodies 921c and 921d of the molded covering members 92c and 92d upon pressurization is lower in comparison with that of the surface layer of the respective main bodies 921c and 921d and the extension parts 922c and 922d, in some cases, the covering members have not been plastic-deformed but elastic-deformed. Accordingly, when the pressure applied from the first lower mold 13a and the first upper mold 14a is removed, the molded covering members 92c and 92d are deformed to restore the shape and the size of the first material 801 and the second material 802 before the molding (to be enlarged) in some cases.

According to the method for manufacturing wire harness 9c according to the third embodiment of the present invention and the method for manufacturing the wire harness 9d according to the fourth embodiment of the present invention, a compression force by the self weight of the first upper holding tool 12a is continuously applied to the molded covering members 92c and 92d until the temperature of the molded covering members removed from the first lower mold 13a and the first upper mold 14a is lowered to a temperature not to cause plastic deformation by thermoplasticity. Accordingly, it is possible to prevent the molded covering members 92c and 92d from restoring the shape and the size of the first material 801 and the second material 802 before the molding. Then, when the temperature of the molded covering members 92c and 92d is lowered to a temperature not to cause plastic deformation by thermoplasticity, the size and the shape of the covering members 92c and 92 are settled as the molded shape and not deformed. In this manner, it is possible to improve the accuracy of the shape and the size of the wire harness 9c according to the third embodiment of the present invention and the wire harness 9d according to the fourth embodiment of the present invention.

Further, after the pressurization, when the pressure is removed in the state where the temperature of the molded covering members 92c and 92d is high (the covering members have a temperature at which they are easily plastic-deformable by thermoplasticity), in some cases, a separating force or the like is applied to the extension parts 922c and 922d of the covering members 92c and 92d by the force to restore the initial shape. There are possibilities of reduction of joint strength between the first material 801 and the second material 802 in the extension parts 922c and 922d and separation between the first material 801 and the second material 802.

Accordingly, the self weight of the first upper holding tool 12a is continuously applied to the molded covering members 92c and 92d until the temperature is lowered to a temperature not to cause plastic deformation by thermoplasticity (when the first non-woven fabric is applied, to a temperature at least lower than the first temperature band). With this arrangement, it is possible to improve the joint strength in the extension parts 922c and 922d of the covering members 92c and 92d (or prevent reduction of joint strength). Otherwise, it is possible to prevent separation between the first material 801 and the second material 802.

Note that it is possible to more infallibly prevent deformation of the molded covering members 92c and 92d by holding the first lower holding tool 11a and the first upper holding tool 12a with a clamp or the like.

Further, in the arrangement using the first upper holding tool 12a, after the pressurization of the first material 801 and the second material 802, upon separation between the first lower mold 13a and the first upper mold 14a, it is possible to prevent attachment of the second material 802 to the first upper mold 14a.

That is, in the arrangement where the first non-woven fabric is applied to the first material 801 and the second material 802, while the first material 801 and the secondmaterial 802 are heated and pressurized, the binder material of the binder fiber is melted. On the other hand, in the arrangement where the second non-woven fabric or the foam formed of a thermoplastic material is applied to the first material 801 and the second material 802, while the first material 801 and the second material 802 are heated and pressurized, at least a part of the surface of the first material 801 and a part of the surface of the second material 802 are melted. Accordingly, without the first upper holding tool 12a (when the first upper mold 14a is directly in contact with the second material 802), upon separation between the first lower mold 13a and the first upper mold 14a, there is a possibility that especially the second material 802 is adhered to the first upper mold 14a and the first material 801 is adhered to the first lower holding tool 11a, and a possibility of application of a pull-off force or the like between the first material 801 and the second material 802. As a result, there are possibilities of separation between the first material 801 and the second material 802 and degradation of the joint strength.

On the other hand, in the arrangement using the first upper holding tool 12a, upon separation between the first lower mold 13a and the first upper mold 14a, a mutual pull-off force or the like is not applied to the first material 801 and the second material 802. Accordingly, it is possible to prevent separation between the first material 801 and the second material 802 and prevent degradation of joint strength.

Further, the covering members 92c and 92d, molded by heating and pressurization, are covered with the first upper holding tool 12a until they are cooled to a temperature not to cause plastic deformation by thermoplasticity. Accordingly, it is possible to prevent contact between the molded covering members 92c and 92d and a foreign material or the like during the cooling. Accordingly, it is possible to prevent undesired deformation in the molded covering members 92c and 92d.

Next, the wire harness according to a fifth embodiment of the present invention and the wire harness according to a sixth embodiment of the present invention will be described. The wire harness 9e according to the fifth embodiment of the present invention and the wire harness 9f according to the sixth embodiment of the present invention have a similar structure to that of the wire harness 9c according to the third embodiment of the present invention and the wire harness 9d according to the fourth embodiment of the present invention except structures of covering members 92e and 92f. Regarding the constituent elements corresponding to those of the wire harness 9c according to the third embodiment of the present invention and the wire harness 9d according to the fourth embodiment of the present invention, the explanations will be omitted in some cases.

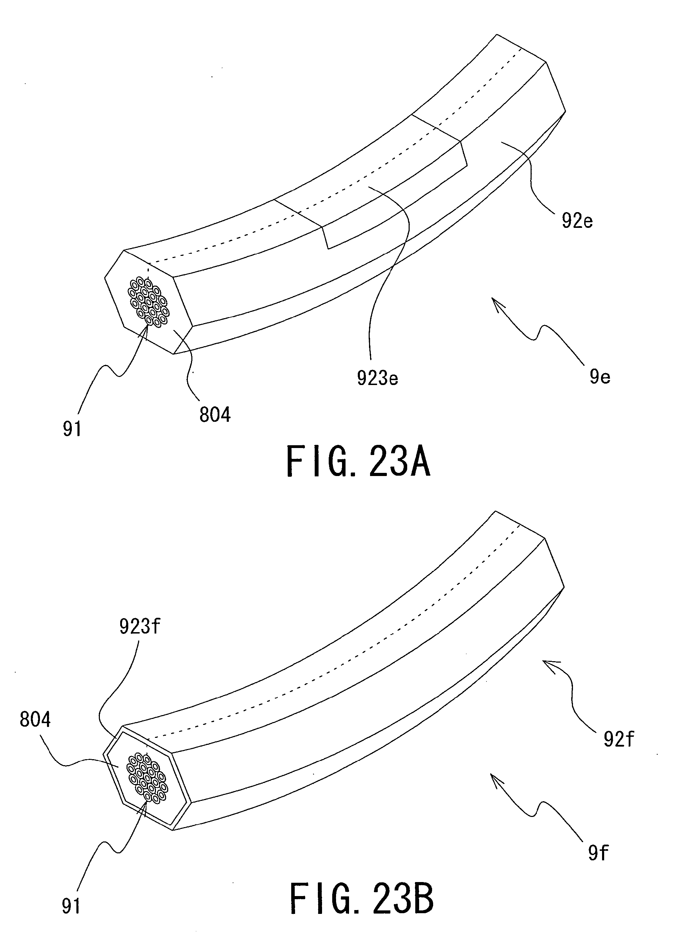

Fig. 23A is an external perspective diagram of the predetermined part (the position in which the covering member 92e is provided) of the wire harness 9e according to the fifth embodiment of the present invention. Fig. 23B is an external perspective diagram of the predetermined part (the position in which the covering member 92f is provided) of the wire harness 9f according to the sixth embodiment of the present invention.

The covering member 92e of the wire harness 9e according to the fifth embodiment of the present invention has a similar structure to that of the main body 921c of the covering member 92c of the wire harness 9c according to the third embodiment of the present invention. The covering member 92f of the wire harness 9f according to the sixth embodiment of the present invention has a similar structure to that of the main body 921d of the covering member 92d of the wire harness 9d according to the fourth embodiment of the present invention. Note that the respective covering members 92e and 92f of the wire harness 9e according to the fifth embodiment of the present invention and the wire harness 9f according to the sixth embodiment of the present invention have no extension part, unlike the respective covering members 92c and 92d of the wire harness 9c according to the third embodiment of the present invention and the wire harness 9d according to the fourth embodiment of the present invention.

Note that in Figs. 23A and 23B, the covering member 92 has an approximately hexagonal crows-sectional shape; however, the cross-sectional shape of the covering member is not limited to this shape. For example, an approximately circular shape (see Figs. 18A and 18B) and other predetermined shapes are applicable.

The respective covering members 92e and 92f of the wire harness 9e according to the fifth embodiment of the present invention and the wire harness 9f according to the sixth embodiment of the present invention are formed of a single raw material. In Figs. 23A and 23B, a broken line along the cross sections of the covering members 92e and 92f schematically indicates a joint surface of the material. For the sake of convenience of explanation, this raw material will be referred to as a "third material 804". As the third material 804, the same material of the first material 801 and the second material 802 is applicable. That is, as the third material 804, any one of the first non-woven fabric, the second non-woven fabric or foam formed of a thermoplastic material is applicable.

As shown in Fig. 23A, a protective layer 923e is formed in a predetermined part of the surface of the covering member 92e of the wire harness 9e according to the fifth embodiment of the present invention. On the other hand, as shown in Fig. 23B, a protective layer 923f is formed over approximately the entire surface of the covering member 92f of the wire harness 9f according to the sixth embodiment of the present invention. The protective layer 923e of the covering member 92e of the wire harness 9e according to the fifth embodiment of the present invention has a similar structure to that of the protective layer 923c of the covering member 92c of the wire harness 9c according to the third embodiment of the present invention. The protective layer 923f of the covering member 92f of the wire harness 9f according to the sixth embodiment of the present invention has a similar structure to that of the protective layer 923d of the covering member 92f of the wire harness 9f according to the sixth embodiment of the present invention.

The wire harness 9e according to the fifth embodiment of the present invention has the same advantages as those of the wire harness 9c according to the third embodiment of the present invention. The wire harness 9f according to the sixth embodiment of the present invention has the same advantages as those of the wire harness 9f according to the fourth embodiment of the present invention.

Regarding the tools and the like used in a method for manufacturing the wire harness 9e according to the fifth embodiment of the present invention and a method for manufacturing the wire harness 9f according to the sixth embodiment of the present invention, the explanations will be omitted.

Next, the method for manufacturing the wire harness 9e according to the fifth embodiment of the present invention and the method for manufacturing the wire harness 9f according to the sixth embodiment of the present invention will be described.

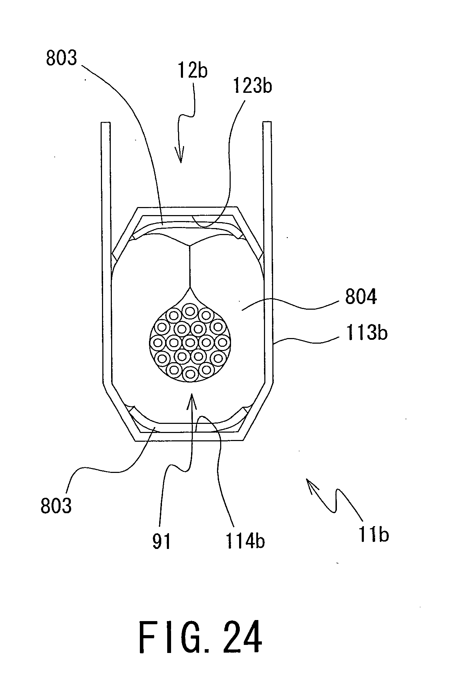

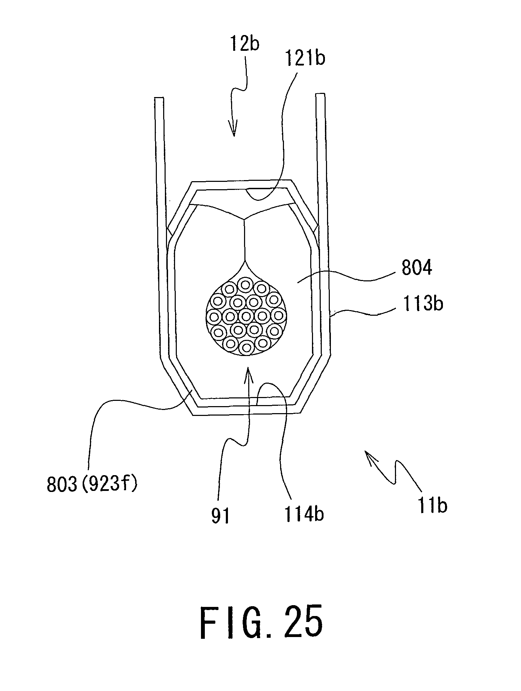

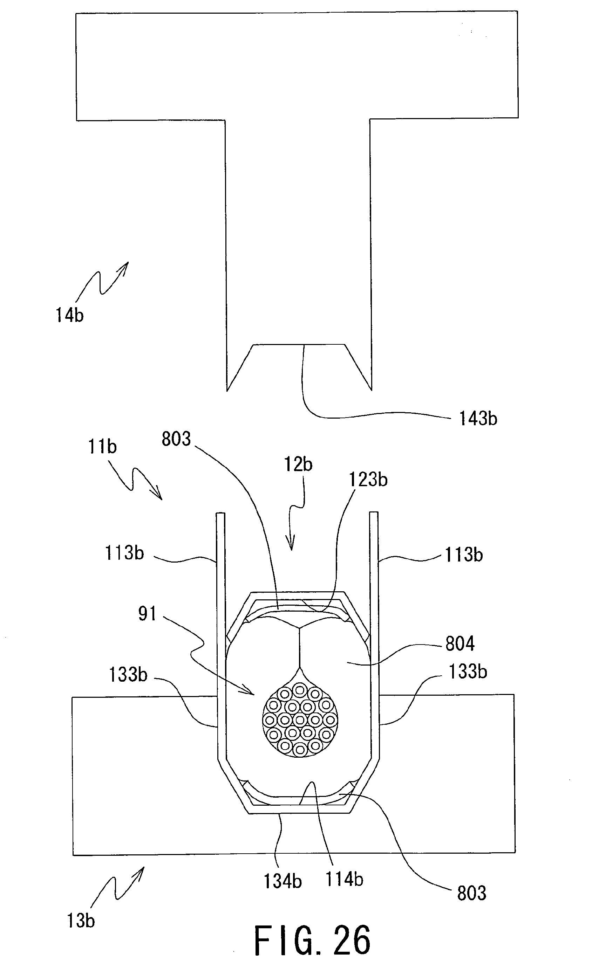

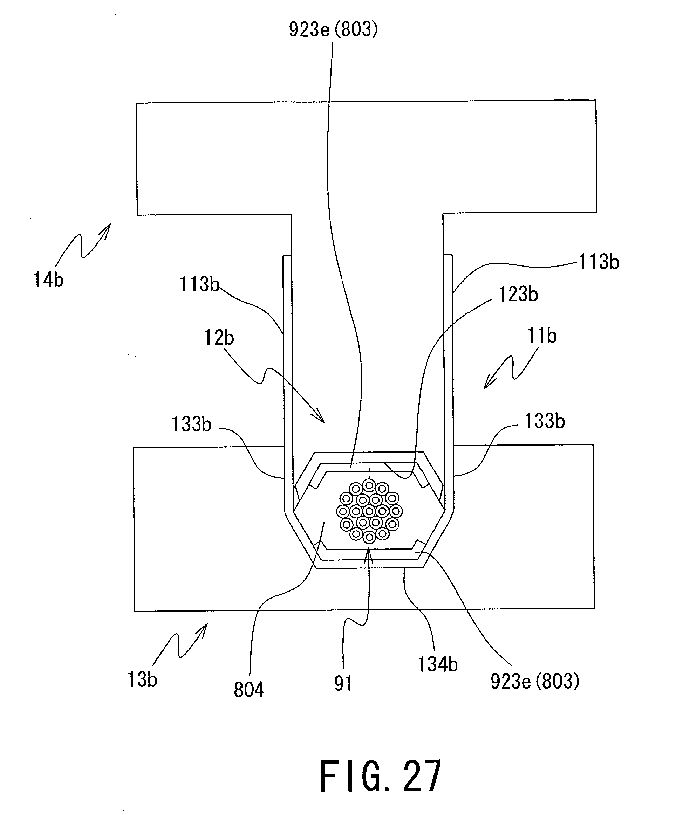

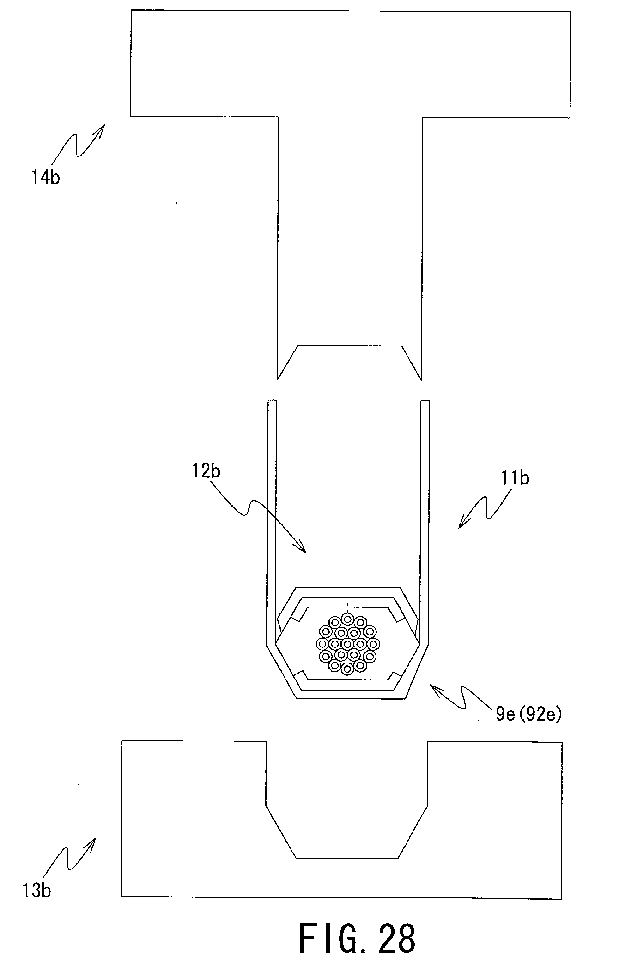

Figs. 24 to 28 are cross-sectional diagrams showing predetermined processes of the method for manufacturing the wire harness 9e according to the fifth embodiment and the method for manufacturing the wire harness 9f according to the sixth embodiment of the present invention. More particularly, Fig. 24 shows a state where the third material 804, the predetermined part of the electric wires 91 and the protective layer material 803 are accommodated in the second lower holding tool 11b and further, the second upper holding tool 12b is placed. Fig. 25 shows a state where the third material 804 provided with the protective layer material 803 and the predetermined part of the electric wires 91 are accommodated in the second lower holding tool 11b, and further, the second upper holding tool 12b is placed. Fig. 26 shows a state where the second lower holding tool 11b, in which the third material 804, the predetermined part of the electric wires 91 and the protective layer material 803 are accommodated, is placed on the second lower mold 13b. Fig. 27 shows a state where the third material 804 is heated and pressurized with the second lower mold 13b and the second upper mold 14b. Fig. 28 shows a state where the predetermined part of the manufactured wire harness 9e according to the fifth embodiment of the present invention, placed on the second lower holding tool 11b, is removed from the second lower mold 13b and the second upper mold 14b.

Note that corresponding elements between the method for manufacturing the wire harness 9e according to the fifth embodiment of the present invention and the method for manufacturing the wire harness 9f according to the sixth embodiment of the present invention will be described at once with reference to Figs. 24 to 28. Further, the processes corresponding to those in the wire harness 9c according to the third embodiment of the present invention and the wire harness 9d according to the fourth embodiment of the present invention will be omitted in some cases.

The third material 804 used in the method for manufacturing the wire harness 9e according to the fifth embodiment of the present invention and the method for manufacturing the wire harness 9f according to the sixth embodiment of the present invention and the protective layer material 803 may be separate members, or the third material 804 may be previously provided with the protective layer material 803 on its one surface.

When the third material 804 and the protective layer material 803 are separate members, as shown in Fig. 24, first, the protective layer material 803 is placed on a predetermined part of the first lower holding tool 11b. The "predetermined part" and the size and the shape of the protective layer material 803 are the same as those in the method for manufacturing the wire harness 9c according to the third embodiment of the present invention and the method for manufacturing the wire harness 9d according to the fourth embodiment of the present invention. Then, the third material 804 is bended so as to hold (or wrap) the predetermined part of the electric wires 91 (e.g., bended in an approximately "U" shape or an approximately "C" shape), and in that state, it is accommodated between the both side walls 113b of the second lower holding tool 11b. Further, the protective layer material 803 is placed on the "predetermined part" on the upper side of the third material 804, and the second upper holding tool 12b is placed thereon.

Note that when the protective layer 923e is formed all over the periphery of the predetermined part of the covering member 92e, the predetermined part of the third material 804 is wrapped in the already-accommodated protective layer material 803. The size and the shape of the protective layer material 803 and the "predetermined part" are the same as those in the method for manufacturing the wire harness 9c according to the third embodiment of the present invention. In the method for manufacturing the wire harness 9f according to the sixth embodiment of the present invention, approximately the entire third material 804 is wrapped in the already-accommodated protective layer material 803.

On the other hand, when the third material 804 is previously provided with the protective layer material 803 (when the third material 804 and the protective layer material 803 are integrated), as shown in Fig. 25, the third material 804 is bended so as to hold (or wrap) the predetermined part of the electric wires 91, and in that state, it is accommodated between the both side walls 113b of the second lower holding tool 11b. Then the second upper holding tool is placed thereon. The setting of the third material 804 is the same as that in the case where the third material 804 and the protective layer material 803 are separate members. Note that the side where the protective layer material 803 is not provided is directed toward the predetermined part of the electric wires 91 (directed inward), and the side where the protective layer material 803 is provided is directed toward the second lower holding tool 11b and the first upper holding tool 12b (directed outward).

Further, it may be arranged such that the third material 804 has a bar-type structure in a predetermined cross-sectional shape having a slit (cut). In this case, by inserting the predetermined part of the electric wires 91 into the slit formed in the third material 804, the predetermined part of the electric wires 91 is wrapped in the non-woven fabric or the foam forming the third material 804.

As the thickness of the third material 804 before molding to the covering members 92e and 92f, a thickness greater than the thickness of the molded covering members 92e and 92f (the distance from the surface to the predetermined part of the electric wires 91) is applied. Further, as the width of the third material 804 before molding to the covering members 92e and 92f, a width to closely wrap the predetermined part of the electric wires 91 is applied. The size of the third material 804 is set so as to, in the state where it is bended (or rolled) to hold (or wrap) the predetermined part of the electric wires 91, prevent protrusion (or exposure) of the predetermined part of the electric wires 91 from the third material 804.

The third material 804, in the state where it is accommodated inside the both side walls 113b of the second lower holding tool 11b, is elastic-deformed in a compressed state. Then the third material 804, in the state where it holds or wraps the predetermined part of the electric wires 91, is maintained with the pressure member 114b of the second lower holding tool 11b and the side walls 113b.

Next, as shown in Fig. 26, the second lower holding tool 11b, accommodating the protective layer material 803, the third material 804, the predetermined part of the electric wires 91 and the second upper holding tool 12b, is placed on the upper side of the second lower mold 13b. That is, a part of the lower side of the second lower holding tool 11b is fitted in the "groove" formed on the upper side of the second lower mold 13b (the support member 133b corresponds to the side surface of the groove, and the pressure member 134b, to the bottom surface of the groove). Accordingly, it is possible to prevent the second lower holding tool 11b, placed on the upper side of the second lower mold 13b, from being easily shifted, easily fallen, or easily removed from the second lower mold 13b.

In this state, the lower surface of the pressure member 114b of the second lower holding tool 11b is in contact with the pressure member 134b of the second lower mold 13b. On the other hand, the entire outer surface or a part of the lower side of the side walls 113b of the second lower holding tool 11b is in contact and/or in close vicinity of the support member 133b of the second lower mold 13b.

Note that the pressure member 134b of the second lower mold 13b and the pressure member 143b of the second upper mold 14b are maintained at the "predetermined temperature" with the temperature control unit.

Next, as shown in Fig. 27, the second lower mold 13b and the second upper mold 14b are brought closer to each other. The pressing machine (not shown) is used for driving of the second lower mold 13b and the second upper mold 14b. Then the distance between the pressure member 114b of the second lower holding tool 11b and the pressure member 123b of the second upper holding tool 12b is set to a predetermined distance. That is, the second lower mold 13b and the second upper mold 14b are brought closer to each other, such that the shape and the size of space surrounded by the pressure member 114b of the second lower holding tool 11b and the pressure member 123b of the second upper holding tool 12b become the shape and the size of the molded covering members 92e and 92f. Then the third material 804 is pressurized and heated. Then this state is maintained (i.e., the heating and pressurizing are continued) for the "predetermined period".

When the first non-woven fabric is applied to the third material 804, the "predetermined period" is a period in which the temperature of the surface layer of the third material 804 (a part in contact with the second lower holding tool 11b or the second upper holding tool 12b and its peripheral part) rises to the "predetermined temperature" but that of the central part of the third material 804 (the predetermined part of the electric wires 91 and its peripheral part) does not rise to the "predetermined temperature". When the second non-woven fabric or the foam (non-woven fabric or foam which is formed of a thermoplastic material and which does not have a binder material) is applied to the third material 804, the "predetermined period" is a period in which the temperature of the surface layer of the third material 804 rises to the fusing point of the thermoplastic material but that of the central part of the third material 804 does not rise to the fusing point.

When the third material 804 is heated and pressurized at the "predetermined temperature" for the "predetermined period", the covering members 923e and 923f are molded through the following process.

The third material 804 is pressurized with the pressure member 114b of the second lower holding tool 11b and the pressure member 123b of the second upper holding tool 12b, and is compression-deformed to a shape approximately the same as that of space formed between the pressure member 114b of the second lower holding tool 11b and the pressure member 123b of the second upper holding tool 12b. As a result, the third material 804 has the size and the shape of the covering members 923e and 923f.

Then the third material 804 is heated by heat emitted from the temperature control unit of the second lower mold and the second upper mold through the second lower holding tool and the second upper holding tool. Accordingly, the third material 804 is plastic-deformed by thermoplasticity. Note that the central part (the part in contact with the predetermined part of the electric wires 91 and its peripheral part) is not plastic-deformed by thermoplasticity in some cases.

When the third material 804 is heated and pressurized, through the same process as that in the method for manufacturing the wire harness 9e according to the fifth embodiment of the present invention and the method for manufacturing the wire harness 9f according to the sixth embodiment of the present invention, the density of the surface layer of third material 804 is higher in comparison with that of the central part.

Further, when the third material 804 and the protective layer material 803 are separate members, in this process, the protective layer material 803 is attached to the surface of the third material 804. Further, the protective layer material 803 is molded in the predetermined shape as the protective layers 923e and 923f. The process of attaching the protective layer material 803 to the third material 804 and the process of molding the protective layer material 803 in the predetermined shape are the same as those in the method for manufacturing the wire harness 9c according to the third embodiment of the present invention and the method for manufacturing the wire harness 9d according to the fourth embodiment of the present invention. Through these processes, the protective layers 923e and 923f are provided on the surfaces of the covering members 92e and 92f.

When the third material 804 is an approximately flat-plate type member and is bended in an approximately "U" shape or an approximately "C" shape to wrap the predetermined part of the electric wires 91, the both ends of the third material 804 in the widthwise direction are welded. On the other hand, when the third material 804 has a bar type member with a slit, the inner surfaces of the slit are welded. Accordingly, the third material 804 has a cylindrical structure wrapping the predetermined part of the electric wires 91 inside.

More particularly, when the first non-woven fabric is applied to the third material 804, in the third material 804, the base fiber and the binder material of the binder fiber of the first non-woven fabric are melted in the part in contact with the second lower holding tool 11b or the second upper holding tool 12b and its peripheral part (i.e., the surface layer). The molten binder material permeates among the base fiber and the core fiber of the binder fiber, and spreads between the surfaces of the both ends in contact in the widthwise direction or between the inner surface of the slit. Accordingly, in the surface layer of the third material 804, the surfaces of the both ends in contact in the widthwise direction or the inner surfaces of the slit are joined with the molten binder material.

On the other hand, when the second non-woven fabric or the foam formed of a thermoplastic resin material is applied to the third material 804, in the third material 804, the thermoplastic material is melted in the part in contact with the second lower holding tool 11b or the second upper holding tool 12b and its peripheral part (the surface layer of the third material). Accordingly, in the surface layer of the third material 804, the surfaces of the both ends in contact in the widthwise direction or the inner surfaces of the slit are joined (welded).

In this manner, when the third material 804 is formed of any one of the first non-woven fabric, the second non-woven fabric or the foam, the both ends of the third material 804 in the widthwise direction or the inner surfaces of the slit are joined. Accordingly, the third material 804 has a cylindrical structure wrapping the predetermined part of the electric wires 91 (structure without an opening or the like formed from the outer peripheral surface to the predetermined part of the electric wires 91).

Next, as shown in Fig. 28 , when the predetermined period has elapsed, the second lower mold 13b and the second upper mold 14b are separated from each other. Then, in a state where the respective predetermined parts of the wire harness 9e according to the fifth embodiment of the present invention and the wire harness 9f according to the sixth embodiment of the present invention (i.e., the molded covering members 92e and 92f and the predetermined part of the electric wires 91) are held between the second lower holding tool 11b and the second upper holding tool 12b, the wire harnesses are removed from the second lower mold 13b. Then, the predetermined part of the wire harness 9e according to the fifth embodiment of the present invention and the predetermined part of the wire harness 9f according to the sixth embodiment of the present invention, in a state where they are placed on the second lower holding tool 12d, are cooled. The method for cooling is the same as that in the method for manufacturing the wire harness 9c according to the third embodiment of the present invention and the method for manufacturing the wire harness 9d according to the fourth embodiment of the present invention.

Through the above processes, the predetermined part of the wire harness 9e according to the fifth embodiment of the present invention and the predetermined part of the wire harness 9f according to the sixth embodiment of the present invention are manufactured (the respective covering members 92e and 92f are molded). The structure of the molded covering members 92e and 92f is approximately the same as that of the respective the main bodies 921c and 921d of the covering members 92c and 92d of the wire harness 9c according to the third embodiment of the present invention and the wire harness 9d according to the fourth embodiment of the present invention.

The protective layer 923e provided on the covering member 92e of the wire harness 9e according to the fifth embodiment of the present invention has the same structure and the same advantages as those of the protective layer 923c provided on the covering member 92c of the wire harness 9c according to the third embodiment of the present invention. The protective layer 923f provided on the covering member 92f of the wire harness 9f according to the sixth embodiment of the present invention has the same structure and the same advantages as those of the protective layer 923d provided on the covering member 92d of the wire harness 9d according to the fourth embodiment of the present invention.

The method for manufacturing the wire harness 9e according to the fifth embodiment of the present invention attains the same advantages as those attained by the method for manufacturing the wire harness 9c according to the third embodiment of the present invention. The method for manufacturing the wire harness 9f according to the sixth embodiment of the present invention attains the same advantages as those attained by the method for manufacturing the wire harness 9d according to the fourth embodiment of the present invention.

The various embodiments of the present invention have been described in detail as above. However, the present invention is not limited to the above-described various embodiments but various changes can be made without departing from the scope thereof.

The wire harness according to the above-described respective embodiments has a structure where a covering member having an approximately circular or approximately hexagonal cross-sectional shape is provided. However, the cross-sectional shape and size of the covering member are not limited. Generally, the cross-sectional shape of the wire harness is set in correspondence with specification and the like of the wire harness.

For example, the cross-sectional shape of the main body of the covering member or the entire cross-sectional shape of the covering member may be an approximately rectangular shape. Further, it may be an asymmetrical shape in the vertical or lateral direction. When the cross-sectional shape is an approximately rectangular shape, a groove-shaped concave member having an approximately rectangular cross-sectional shape is formed on the upper side of the lower holding tool. The pressure member is formed on the both sides of this groove-shaped concave member. A groove-shaped concave member having an approximately rectangular cross-sectional shape is formed on the lower side of the upper mold (when the upper holding tool is used, on the lower side of the upper holding tool). The pressure member is formed on the both sides of this groove-shaped concave member. In this manner, it is possible to mold the cross-sectional shape of the covering member in the predetermined part of the wire harness in various shapes by forming the groove-shaped concave member formed on the upper side of the lower holding tool and the groove-shaped concave member formed on the lower side of the upper mold (when the upper holding tool is used, on the lower side of the upper holding tool) to have a predetermined cross-sectional shape.

Further, in the method for manufacturing the wire harness according to the respective embodiments of the present invention, the first upper holding tool or the second upper holding tool is used. However, the first upper holding tool or the second upper holding tool may be omitted. In this case, the first material, the second material or the third material is directly pressurized and heated with the first upper mold or the second upper mold. Accordingly, the size and the shape of the lower surface of the first upper mold are set to the same size and shape as those of the lower surface of the first upper holding tool. On the other hand, the size and the shape of the lower surface of the second upper mold are set to the same size and shape as those of the lower surface of the second upper holding tool.

## Claims

1. A wire harness in which a covering member formed of a thermoplastic material is provided in a predetermined part of an electric wire, wherein a liquid-impermeable protective layer is provided on the surface of the covering member.

2. The wire harness according to claim 1, wherein the protective layer is formed of a thermoplastic material having abrasion resistance higher than that of the covering member.

3. The wire harness according to claim 1 or 2, wherein in the covering member, a surface layer is harder than a central part.

4. The wire harness according to any one of claims 1 to 3, wherein the covering member is formed of non-woven fabric of a thermoplastic material or a foam.

5. The wire harness according to claim 4, wherein the non-woven fabric has base fiber, core fiber and binder fiber having a binder material layer provided on the surface of the core fiber.

6. The wire harness according to claim 5, wherein the protective layer is joined to the surface of the covering member with the binder material.

7. The wire harness according to any one of claims 1 to 4, wherein the protective layer is welded to the surface of the covering member.

8. A wire harness in which a covering member formed of a thermoplastic material is provided in a predetermined part of an electric wire, wherein a protective layer formed of a thermoplastic material having abrasion resistance higher than that of the covering member is provided on a part or entire surface of the covering member.

9. The wire harness according to claim 8, wherein in the covering member, a surface layer is harder than a central part.

10. The wire harness according to claim 8 or 9, wherein the covering member is formed of non-woven fabric of a thermoplastic material or a foam.

11. The wire harness according to claim 10, wherein the non-woven fabric has base fiber, core fiber and binder fiber having a binder material layer provided on the surface of the core fiber.

12. The wire harness according to claim 11, wherein the protective layer is joined to the surface of the covering member with the binder material.

13. The wire harness according to any one of claims 8 to 10, wherein the protective layer is welded to the surface of the covering member.

14. A method for manufacturing a wire harness where a covering member, which is formed of a thermoplastic material and which has a liquid-impermeable protective layer on a surface, is provided in a predetermined part of an electric wire, comprising:
holding or wrapping the predetermined part of the electric wire in the thermoplastic material and providing the protective layer material on the surface of the thermoplastic material; and
heating and pressurizing the thermoplastic material and the protective layer material to mold the thermoplastic material to have a predetermined shape and size, and melting at least a part of the surface layer of the thermoplastic material to join the protective layer material to the surface of the thermoplastic material.

15. The method for manufacturing the wire harness according to claim 14, further comprising:
accommodating the predetermined part of the electric wire, the thermoplastic material and the protective layer material in a holding tool;
heating and pressurizing the thermoplastic material via the holding tool, with a set of molds having a temperature control unit; and
thereafter, removing the holding tool, accommodating the predetermined part of the electric wire covered with the thermoplastic material, from the set of molds, and cooling the holding tool.

16. A method for manufacturing a wire harness where a covering member, which is formed of a thermoplastic material and which has a protective layer on a part or entire surface, is provided in a predetermined part of an electric wire, comprising:
holding or wrapping the predetermined part of the electric wire in the thermoplastic material and providing a protective layer material on a part or entire surface of the thermoplastic material; and
heating and pressurizing the thermoplastic material and the protective layer material to mold the thermoplastic material to have a predetermined shape and size, and melting at least a part of the surface layer of the thermoplastic material to join the protective layer material to the surface of the thermoplastic material.

17. The method for manufacturing the wire harness according to claim 16, further comprising:
accommodating the predetermined part of the electric wire, the thermoplastic material and the protective layer material in a holding tool;
heating and pressurizing the thermoplastic material via the holding tool, with a set of molds having a temperature control unit; and
thereafter, removing the holding tool, accommodating the predetermined part of the electric wire covered with the thermoplastic material, from the set of molds, and cooling the holding tool.
